# EUROPÄISCHE PATENTSCHRIFT

(11) **EP 3 802 144 B1**
(45) Veröffentlichungstag und Bekanntmachung des Hinweises auf die Patenterteilung: **03.05.2023**
(21) Anmeldenummer: 19725719.9
(22) Anmeldetag: 20.05.2019
(51) Int. Cl.: B42D 25/47, B42D 25/324, B42D 25/328, B42D 25/373, B42D 25/36, B42D 25/378, B42D 25/405, B42D 25/369, B42D 25/455, B42D 25/46, B42D 25/351

(54) **VERFAHREN ZUR HERSTELLUNG EINES LAMINATKÖRPERS UND EINER LAMINIERFOLIE SOWIE LAMINATKÖRPER UND LAMINIERFOLIE**
METHOD FOR PRODUCING A LAMINATED BODY AND A LAMINATING FILM AND LAMINATED BODY AND LAMINATING FILM
PROCÉDÉ DE FABRICATION D'UN ÉLÉMENT STRATIFIÉ ET D'UN FILM STRATIFIÉ AINSI QU'ÉLÉMENT STRATIFIÉ ET FILM STRATIFIÉ

(30) Priorität: 25.05.2018 DE 102018112652; 19.02.2019 DE 102019104181
(43) Veröffentlichungstag der Anmeldung: 14.04.2021
(73) Patentinhaber: OVD Kinegram AG, 6300 Zug (CH)
(72) Erfinder: HOFFMANN, Michael, 6318 Walchwil (CH); STAUB, René, 6332 Hagendorn (CH)
(74) Vertreter: Louis Pöhlau Lohrentz
(86) Internationale Anmeldenummer: PCT/EP2019/062994
(87) Internationale Veröffentlichungsnummer: WO 2019/224159

(56) Entgegenhaltungen:
- DE-A1-102015 121 849

## Beschreibung

Die Erfindung betrifft ein Verfahren zur Herstellung eines Laminatkörpers und eines Laminier-Inlays.

Es ist bekannt, Sicherheitsdokumente, insbesondere Bankkarten, Kreditkarten und ähnliches, aus mehreren in einem Laminierprozess zu einem Laminatkörper verschmolzene und/oder verklebte Schichtfolien herzustellen. Diese Sicherheitsdokumente weisen in der Regel quer der Schichtungsrichtung der einzelnen Folien, die aufeinander laminiert werden, eine größere Ausdehnung auf als entlang der Schichtungsrichtung. Hierbei liegen diese Sicherheitsdokumente üblicherweise in normierten Formatgrößen und Dicken wie beispielsweise in Kartenform vor und es sind Sicherheitselemente, beispielsweise ein elektronischer Chip, Prägungen oder Aufdrucke, in den Laminatkörper eingearbeitet oder auf dem Laminatkörper aufgebracht. Derartige Sicherheitsdokumente zeichnen sich dadurch aus, dass durch den Laminierprozess die aufeinander folgenden Lagen, beispielsweise in Form von Kunststofffolien eine besonders gute Haftung zueinander besitzen und damit sowohl die Fälschungssicherheit, als auch die Beständigkeit gegenüber Umwelteinflüssen besonders hoch ist.

Ein derartiges Sicherheitselement ist beispielsweise in der EP 2 886 357 B1 beschrieben. Dieses Sicherheitselement weist mehrere in einem Laminierprozess zu einem monolithischen Block verschmolzene Schichtfolien auf. Weiter wird vor Durchführung des Laminierprozesses auf eine der Schichtfolien eine Lackschicht aufgedruckt. Anschließend werden die Schichtfolien derart zu einem Laminatkörper in einem Laminierprozess laminiert, dass diese Lackschicht innenliegend zwischen zwei der Schichtfolien angeordnet ist und ein Sicherheitsmerkmal bereitstellt, welches aufgrund der Einlaminierung zwischen den Schichtfolien nicht ohne Zerstörung des Laminatkörpers fälschbar ist und besonders gut vor Umwelteinflüssen geschützt ist.

Die DE 10 2015 121849 A1 betrifft ein Verfahren zur Herstellung eines Sicherheitselements sowie eine Transferfolie, insbesondere eine Heißprägefolie, zum Transfer eines oder mehrerer Mehrschichtkörper auf ein Zielsubstrat.

Die DE 10 2015 121849 A1 offenbart ein Verfahren zur Herstellung eines Laminierinlays, wobei das Verfahren folgende Schritte umfasst: Bereitstellen einer ersten Laminierfolie mit einer ersten Oberfläche und einer diese gegenüberliegenden zweiten Oberfläche, Bereitstellen zumindest einer Transferfolie, welche jeweils eine Trägerfolie und eine von der Trägerfolie ablösbare Dekorlage mit einer der Trägerfolie gegenüberliegenden erste Oberfläche und einer der Trägerfolie zugewandten zweite Oberfläche umfasst, Bedrucken der ersten Oberfläche der ersten Laminierfolie mit einem strahlenhärtbaren Kleber derart, dass der strahlenhärtbare Kleber in ein oder mehreren ersten Zonen auf die jeweilige erste Oberfläche der ersten Laminierfolie und/oder der Dekorlage aufgebracht wird und in den ein oder mehreren ersten Zonen eine strahlenhärtbare Kleberschicht ausbildet, und in ein oder mehreren zweiten Zonen nicht auf die jeweilige erste Oberfläche der ersten Laminierfolie und/oder der jeweiligen Dekorlage aufgebracht wird, Aufbringen der zumindest einen Transferfolie auf die erste Oberfläche der ersten Laminierfolie derart, dass mindestens ein Teilbereich der ein oder mehreren ersten Zonen mit der strahlenhärtbaren Kleberschicht sowie mindestens ein Teilbereich der ein oder mehreren zweiten Zonen, in denen die strahlenhärtbare Kleberschicht nicht aufgebracht ist, zwischen der ersten Oberfläche der jeweiligen Dekorlage und der ersten Oberfläche der ersten Laminierfolie angeordnet ist, zumindest teilweise Härtung der strahlenhärtbaren Kleberschicht, Abziehen der mindestens einen Transferfolie von der ersten Laminierfolie, wobei in ein oder mehreren ersten Teilbereichen, die zumindest bereichsweise mit mindestens einer der ersten Zonen überlappen, die Dekorlage beim Abziehen auf der ersten Laminierfolie verbleibt, und in ein oder mehreren zweiten Teilbereichen die Dekorlage auf der Trägerfolie verbleibt und mit der Trägerfolie abgezogen wird.

Die DE 10 2015 121849 A1 offenbart nicht, dass die Dekorlage beim Abziehen von der Trägerfolie abgelöst wird, und offenbart auch nicht das Laminieren mehrerer aufeinanderfolgender Folien umfassend die erste Laminierfolie mit den ein oder mehreren ersten Teilbereichen mit der Dekorlage und zumindest eine zweite Laminierfolie zu dem Laminatkörper.

Der Erfindung liegt nun die Aufgabenstellung zugrunde, einen verbesserten Laminatkörper bzw. ein verbessertes Laminier-Inlay zur Herstellung eines Laminatkörpers sowie entsprechende Verfahren zu deren Herstellung anzugeben. Diese Aufgabe wird von einem Verfahren zur Herstellung eines Laminatkörpers nach Anspruch 1 bzw. von einem Verfahren zur Herstellung eines Laminier-Inlays nach Anspruch 5 gelöst.

Eine weitere Nachhärtung der Kleberschicht kann aufgrund einer Nachbehandlung beispielsweise mittels einer weiteren Bestrahlung erfolgen oder auch mittels einer selbständigen weiteren Härtungs-Reaktion mit der Zeit, wie beispielsweise bei kationischen Systemen.

Der Erfindung liegt die Erkenntnis zugrunde, dass sich durch das bereichsweise Aufdrucken der strahlenhärtbaren Kleberschicht und den vorhergehend beschriebenen Transferprozess individuell strukturierte Dekorschichten auf einer Laminierfolie realisieren lassen, welche in dem nachfolgenden Laminierprozess durch die strahlenhärtbare Kleberschicht vor einer Zerstörung und/oder Degeneration geschützt werden. So erbringt bei der vorliegenden Erfindung die strahlenhärtbare Kleberschicht eine "Doppelfunktion". Einerseits dient diese Kleberschicht dazu, ein strukturiertes, individuelles Aufbringen von Dekorschichten auf eine Laminierfolie zu ermöglichen, welche insbesondere mittels Druckverfahrens und/oder thermischem Prägeverfahren nicht, unzureichend oder nicht in der gewünschten Schichtstärke oder Auflösung aufgebracht werden können. Im Weiteren hat sich überraschend gezeigt, dass die strahlenhärtbare Kleberschicht weiter während des Laminierprozesses diese aufgebrachten Dekorschichten stabilisieren und insbesondere einer Degeneration der optischen Effekte der Dekorschichten entgegenwirkt. Diese Stabilisierung kann erreicht werden, da bei Härtung des strahlenhärtbaren Klebers und der hierbei auftretenden Vernetzungsreaktionen im Bereich der transferierten Dekorschichten eine gegenüber thermischer Einwirkung und Druckeinwirkung recht stabile, passergenau angeordnete "Stabilisierungsstruktur" bereitgestellt wird, welche die Dekorschicht passergenau vor den Druck- und Temperatureinflüssen des Laminierprozesses schützt und weiter für eine entsprechende gleichmäßige Flächenbelastung der Dekorschichten sorgt. Damit wird zum einen der Einsatz von Dekorschichten ermöglicht, welche ohne die vorgenannte Stabilisierung für sich allein recht dünn und mechanisch instabil und/oder auch empfindlich gegenüber Temperatureinflüssen sind.

Die Dekorlage an sich kann somit so ausgestaltet werden, dass sie beim Transfer eine hohe Auflösung erlaubt, weil sie aufgrund ihrer geringen Schichtdicke und Fragilität als sehr kleine Bereiche definiert von der Trägerfolie ablösbar sind. Entsprechend werden auch die ein oder mehrere zumindest partiell vorliegenden Dekorschichten mit hoher Auflösung übertragen.

Weiter ist zur Auslösung der Vernetzungsreaktion sowie zur Strukturierung der Dekorschicht nicht der Einsatz von Hitze oder Druck erforderlich, sodass auch beim Transferprozess die thermische Belastung sowie die Druckbelastung sowohl der Dekorschichten als auch der Laminierfolie sehr gering gehalten werden kann. Aufgrund der entsprechend passergenauen Vorsehung dieser Stabilisierungsstruktur zu den übertragenen Dekorschichten und das Vorsehen der zweiten Teilbereiche sind weiter auch entsprechende "Haftbrücken" vorgesehen, sodass die Vorteile des Einsatzes eines Laminierverfahrens nach wie vor erhalten bleiben und ein entsprechend stabiler Schichtverbund bei Einsatz des erfindungsgemäßen Laminier-Inlays nach wie vor erzielt werden kann.

Vorteilhafte Ausführungen der Erfindung sind in den Unteransprüchen bezeichnet.

Unter einer Laminierfolie und einem Laminier-Inlay wird eine ein- oder mehrschichtige Folie verstanden, welche in einem Laminierprozess mit ein oder mehreren weiteren Schichten, insbesondere Laminierfolien zu einem Laminatkörper, insbesondere einem monolithischen Laminatkörper laminiert werden kann. Diese Folie wird hierbei vorzugsweise von einer ein- oder mehrlagigen Kunststofffolie gebildet, welche zumindest an einer ihrer Oberflächen bereichsweise aus einem thermoplastischen Kunststoff besteht und so zumindest bereichsweise ein "Verschweißen" dieser Oberflächen mit einer weiteren Laminierfolie in einem Laminierverfahren ermöglicht. Vorzugsweise weist diese Folie ein oder mehreren Schichten aus einem thermoplastischen Kunststoff, insbesondere aus Polycarbonat, PVC oder PET auf, welche vorzugsweise den Hauptbestandteil dieser Folie bilden.

Weiterhin können zusätzliche Schichten eingesetzt werden, welche bereits bei geringen Temperaturen einen Verbund herstellen, oder beispielsweise Materialien verbinden, wie beispielsweise Polyester und Polycarbonat, die beim Laminieren keine gute Haftung zueinander aufweisen. Beispiele dafür sind thermoplastisches Polyurethan oder reaktive Kleberschichten.

Unter einem Laminierverfahren wird ein Verfahren verstanden, bei dem zwei oder mehrere Schichten durch Einsatz von Hitze und Druck miteinander verbunden werden, wobei hier ein oder mehrere Schichten zumindest bereichsweise an ihrer Schichtgrenze aufgeschmolzen werden und so ein oder mehrere der Schichten zumindest bereichsweise miteinander verschmolzen werden. Bei einem Laminierverfahren werden hierbei die Folien vorzugsweise auf eine Temperatur von mehr als 120°C erwärmt und gleichzeitig mittels Druck aufeinandergepresst. Die bei der Lamination benötigte Temperatur ist abhängig von den eingesetzten Materialien und liegt beispielsweise bei PVC deutlich tiefer als bei Polycarbonat. Sollen unterschiedliche Materialien miteinander verbunden werden, können zusätzliche Schichten als Klebeschicht dienen, wie beispielsweise thermoplastisches Polyurethan.

Unter einem Laminatkörper wird ein Körper verstanden, welcher einen Schichtverbund aus zwei oder mehreren Folien aufweist, welche in einem Laminierverfahren miteinander verbunden sind, insbesondere in einem Laminierverfahren zu einem monolithischen Block verbunden, beispielsweise verschmolzen und/oder verklebt, sind.

Beim Laminieren werden die ein oder mehreren ersten Teilbereiche mit der Dekorlage vorzugsweise innenliegend zwischen der ersten Laminierfolie und der zumindest einer zweiten Laminierfolie angeordnet. Durch die ein oder mehreren zweiten Teilbereiche, in welchen die Dekorlage nicht auf der ersten Laminierfolie vorgesehen ist, wird sichergestellt, dass in diesen Bereichen kein Fremdmaterial, insbesondere in Form einer Transferlage den Verbund der ersten und zweiten Laminierfolie beim Laminieren stört und damit eine entsprechend gute Zwischenschichthaftung zwischen der ersten und zweiten Laminierfolie bei der Durchführung des Laminierverfahrens erzielt werden kann. Dies ist insbesondere dann der Fall, wenn die erste und zweite Laminierfolie aus demselben Material bestehen, beispielsweise aus PVC oder Polycarbonat.

Sowohl die Herstellung des Laminier-Inlays als auch die Durchführung des Laminierverfahrens kann hierbei in einem Rolle-zu-Rolle-Bearbeitungsprozess, in einem Rolle-zu-Bogen-Bearbeitungsprozess oder in einem Bogen-basierten Bearbeitungsprozess erfolgen.

Hierbei ist es weiter vorteilhaft, ein Registrierungsverfahren bei der Durchführung dieser Verfahren einzusetzen, welches eine passergenaue Bedruckung der ersten Laminierfolie und/oder der mindestens einen Transferfolie mit dem strahlenhärtbaren Kleber, ein passergenaues Aufbringung der Transferfolie auf die erste Laminierfolie und/oder ein passergenaues Aufbringung der mindestens einen zweiten Laminierfolie auf das Laminier-Inlay bei der Durchführung des Laminierverfahrens sicherstellt.

Unter Register oder Passer bzw. Registergenauigkeit oder Passergenauigkeit ist eine Lagegenauigkeit zweier oder mehrerer Elemente und/oder Schichten relativ zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen und/oder Schichten zueinander ein wichtiges Merkmal, um die Prozesssicherheit zu erhöhen. Die lagegenaue Positionierung kann dabei insbesondere mittels sensorischer, vorzugsweise optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein.

Unter einem Registrierungsverfahren oder Registrierung wird hierbei verstanden, dass ein oder mehrere der Verfahrensschritte im Register zu oder passergenau zu Strukturen auf oder in den ersten und/oder zweiten Laminierfolie und/oder den ein oder mehreren Transferfolien und damit gegebenenfalls vorgehender Verfahrensschritt erfolgen. Mit der Durchführung des Registrierungsverfahrens bzw. der Registrierung wird so sichergestellt, dass die mittels dieses Verfahrens hergestellte Anordnung der ersten bzw. zweiten Teilbereiche, im Register, registergenau oder passergenau zu diesen Strukturen angeordnet sind und damit in einer vorgegebenen Lageanordnung zueinander angeordnet sind.

Bei der Durchführung der Registrierung bzw. des Registrierungsverfahrens werden vorzugsweise Registermarken auf der jeweiligen Transferfolie bzw. den Transferfolien und/oder der ersten Laminierfolie und/oder der zweiten Laminierfolie erfasst. Diese Registermarken können beispielsweise aus einem Aufdruck und/oder Stanzungen bestehen. Mittels Erfassung dieser Registermarken wird die Lageanordnung der Strukturen ermittelt. Die Strukturen können jedoch auch direkt, beispielsweise mittels einer Kamera und entsprechender Bildverarbeitungssoftware, erfasst werden. Bei den Strukturen kann es sich auch um beugungsoptische Merkmale handeln, die vorteilhafterweise zusammen mit beugungsoptischen Registermarken vorliegen. Weiter wird abhängig hiervon insbesondere die Bedruckung mit dem strahlenhärtbaren Kleber, das jeweilige Aufbringen der einen oder mehreren Transferfolien auf die erste Laminierfolie und/oder das Aufbringen der ersten Laminierfolie bzw. des Laminier-Inlays auf die zweite Laminierfolie derart gesteuert bzw. geregelt, dass die gewünschten Strukturen entsprechend lagegenau zueinander angeordnet sind. Hierzu ist es vorteilhaft, beispielsweise auf Basis der erfassten Registermarken die Lageposition der Folienbahnen beispielsweise durch Verdehnen der jeweiligen Transferfolien und/oder der ersten Laminierfolie und/oder der zweiten Laminierfolie und/oder durch entsprechende Änderungen der Wegstrecke entsprechend einzuregeln und/oder durch Nachführung des Druckwerkzeugs, beispielsweise durch Anpassung der Geschwindigkeit des Dekordruckzylinders beim Flexodruckverfahren und/oder durch synchronisierte Ansteuerung eines Digitaldrucks, beispielsweise beim Inkjetdruck, sodass die gewünschten Lagebedingungen erzielt werden und die Strukturen entsprechend lagegenau zueinander positioniert sind.

Vorzugsweise wird hierbei beim Laminieren zumindest eine zweite Laminierfolie derart auf die erste Laminierfolie aufgebracht, dass in einem ersten Flächenbereich ein oder mehrere der ersten Teilbereiche mit der Dekorlage sowie die strahlenhärtbare Kleberschicht zwischen der ersten Oberfläche der ersten Laminierfolie und einer der ersten Laminierfolie zugewandten ersten Oberfläche der zumindest einen zweiten Laminierfolie angeordnet sind. Weiter ist hierbei vorteilhaft, dass in einem zweiten Flächenbereich sich die erste Oberfläche der ersten Laminierfolie und der zweiten Laminierfolie berühren.

Der erste Flächenbereich wird somit von der Gesamtfläche der zwischen der ersten und der zweiten Laminierfolie angeordneten ein oder mehreren ersten Teilbereiche mit der Dekorlage und der zweite Flächenbereich von der Gesamtfläche der ein oder mehreren zwischen der ersten und der zweiten Laminierfolie angeordneten zweiten Teilbereiche ohne die Dekorlage gebildet.

Anschließend wird beim Laminieren vorzugsweise die erste Oberfläche der ersten Laminierfolie und der zweiten Laminierfolie in dem zweiten Flächenbereich miteinander verschmolzen und/oder verklebt. Hierdurch wird sichergestellt, dass zum einen ein besonders fester Flächenverbund zwischen der ersten und zweiten Laminierfolie beim Laminieren erzielt wird, und andererseits die Dekorlage im Laminatkörper entsprechend geschützt ist.

Die strahlenhärtbare Kleberschicht wird hierbei vor dem Laminieren vorzugsweise derart gehärtet, dass die strahlenhärtbare Kleberschicht unter den Bedingungen des beim Laminieren durchgeführten Laminierverfahrens im Wesentlichen formstabil ist.

Im Gegensatz zu amorphen Thermoplasten, wie beispielsweise Polycarbonat, amorphem PET oder PVC behält der strahlengehärtete Kleber bei den typischen Laminiertemperaturen eine ausreichende mechanische Stabilität. Sie kann mit steigender Temperatur zwar etwas reduziert sein, bleibt jedoch deutlich höher als jene des umliegenden erweichten Laminiermaterials.

Die Verformung der strahlenhärtbaren Kleberschicht wird hierbei vorzugsweise dadurch bestimmt, dass die Ausformung der Kleberschicht vor Durchführung des Laminierverfahrens und nach Durchführung des Laminierverfahrens erfasst wird und die mittlere prozentuale Abweichung nach Durchführung des Laminierverfahrens mit der Ausgangsform ermittelt wird.

Weiter ist es vorteilhaft, wenn beim Laminieren die Verformung der Dekorlage in dem mindestens einen ersten Flächenbereich durch die strahlenhärtbare Kleberschicht um mehr als 50% reduziert wird, insbesondere um mehr als 80% reduziert wird. Die Verformung der Dekorlage wird hierbei in gleicher Weise wie die Verformung der strahlenhärtbaren Kleberschicht ermittelt und hierbei die Verformung der Dekorlage unter Einsatz der strahlenhärtbaren Kleberschicht und ohne Einsatz der strahlenhärtbaren Kleberschicht entsprechend miteinander verglichen.

Untersuchungen haben gezeigt, dass durch eine derartige Ausgestaltung der strahlenhärtbaren Kleberschicht eine optische Degeneration der Dekorlage weitgehend verhindert werden kann und damit die optische Qualität des Laminatkörpers bzw. Sicherheitsdokuments deutlich verbessert werden kann.

Das Flächenverhältnis des ersten Flächenbereichs zur Summe aus erstem und zweiten Flächenbereichs beträgt insbesondere in einem Sicherheitsdokument vorzugsweise nicht mehr als 80%, insbesondere zwischen 2% und 80% und weiter bevorzugt zwischen 5% und 50%. Untersuchungen haben gezeigt, dass bei diesen Flächenverhältnissen einerseits die Zwischenschichthaftung zwischen der ersten und zweiten Laminierfolie nach dem Laminieren noch ausreichend ist, um Fälschungsversuche zu unterbinden, andererseits jedoch die optischen Gestaltungsmöglichkeiten hierdurch nicht eingeschränkt werden.

Weiter haben Untersuchungen gezeigt, dass die Zwischenschichthaftung zwischen der ersten Laminierfolie und der zweiten Laminierfolie nach dem Laminieren nicht nur vom Flächenverhältnis des ersten Flächenbereichs zu dem zweiten Flächenbereich abhängig ist, sondern im Weiteren auch von der Formgestaltung der ersten und zweiten Teilbereiche abhängig. Hierbei hat es sich als besonders vorteilhaft erwiesen, dass die ein oder mehreren ersten Teilbereiche eine Breite von nicht mehr als 8 mm, insbesondere nicht mehr als 5 mm aufweisen.

Weiterhin ist es vorteilhaft, wenn zwischen mehreren ersten Teilbereichen ein Mindestabstand mehr als 1 mm beträgt. Weiterhin ist es vorteilhaft, wenn die Flächendichte der ersten Teilbereiche weniger als 80% beträgt bei einer Bezugsgröße von 1 cm². Untersuchungen haben gezeigt, dass durch eine oder mehrerer der oben aufgeführten Eigenschaften sichergestellt wird, dass bei Abrissversuchen ein punktuelles Ablösen oder Delaminieren des Laminatkörpers weitgehend verhindert wird.

Ein weiterer Vorteil von relativ kleinflächigen, voneinander separierten ersten Teilbereichen besteht darin, dass die Gefahr von Rissen und/oder Aufwerfungen und/oder Stauchungen aufgrund des Materialflusses der Laminierfolien beim Laminieren zu dem Laminierkörper reduziert wird.

Unter der Breite eines Bereichs, Teilbereichs oder Flächenbereichs wird hierbei die kürzeste Beabstandung zwischen zwei gegenüberliegenden Kanten des jeweiligen Bereichs verstanden. Unter Länge wird die längste Beabstandung zwischen zwei gegenüberliegenden Kanten des jeweiligen Bereichs verstanden.

Weiter hat es sich als vorteilhaft erwiesen, dass der oder die ersten Teilbereiche und/oder der oder die zweiten Teilbereiche eine Breite von 0,1 mm oder mehr aufweisen, insbesondere eine Breite von mehr als 0,2mm aufweisen. Untersuchungen haben gezeigt, dass hierdurch sichergestellt wird, dass die entsprechenden Teilbereiche der Dekorlage während des Laminierens nicht durch die einwirkenden Kräfte gegeneinander verschoben werden und damit die graphische Gestaltung durch die Dekorlage beim Laminieren durch die einwirkenden Kräfte nicht diesbezüglich degeneriert wird.

Weiter hat es sich als vorteilhaft erwiesen, dass ein oder mehrere der ersten Teilbereiche und/oder ein oder mehrere der zweiten Teilbereiche eine Breite zwischen 0,1 mm und 0,6 mm, bevorzugt zwischen 0,1 mm und 0,4 mm aufweist. Durch eine entsprechende Ausgestaltung der ersten und/oder zweiten Teilbereiche ist es möglich, die "Aufrasterungen" des Flächenbereichs des Laminatkörpers in erste und zweite Teilbereiche optisch zu verbergen und somit auch großflächige, kontinuierlich erscheinende graphische Gestaltungen in dem Laminierkörper zu realisieren.

Weiter hat sich als vorteilhaft erwiesen, dass ein oder mehrere der ersten Teilbereiche und/oder der zweiten Teilbereiche Rasterelemente eines Rasters ausbilden. Die einzelnen Rasterelemente können hierbei eine beliebige Formgebung besitzen und individuell unterschiedlich gestaltet sein oder eine einheitliche Formgebung, beispielsweise in Form eines Kreises, eines Quadrats, eines Rhombus, eines Piktogramms oder ähnlichem aufweisen. Vorzugsweise sind die lateralen Ausdehnungen der Rasterelemente, d. h. die Breite und Länge der Rasterelemente hierbei im Bereich zwischen 0,1 mm und 0,6 mm gewählt. Es ist jedoch auch möglich, größere Rasterelemente einzusetzen. Die Rasterelemente sind vorzugsweise in dem Raster in einer regelmäßigen ein- oder zweidimensionalen Anordnung vorgesehen. Es ist jedoch auch möglich, dass die Abfolge der einzelnen Rasterelemente nicht konstant ist, sondern variiert, insbesondere auch zufällig oder pseudo-zufällig oder nach einem fraktalen Muster variiert. Vorzugsweise umfasst das Raster mehr als 10 Rasterelemente, weiter bevorzugt mehr als 20 Rasterelemente.

Es hat sich gezeigt, dass durch eine derartige Ausgestaltung von ersten und zweiten Teilbereichen eine besonders gute Zwischenschichthaftung zwischen der ersten und zweiten Laminierfolie erzielt wird. Hierdurch wird sichergestellt, dass erste und zweite Teilbereiche entsprechend iterativ aufeinander abfolgen und damit großflächige Bereiche vermieden werden, welche die Zwischenschichthaft beeinträchtigen können. Im Weiteren wird hierdurch auch ermöglicht, großflächige graphische Darstellungen ohne Beeinträchtigung der Zwischenschichthaftung in dem Laminierkörper zu realisieren.

Vorzugsweise sind ein oder mehrere zweite Teilbereiche vorgesehen, die von einer Außenkante des Laminatkörpers begrenzt sind, vorzugsweise von allen Außenkanten des Laminatkörpers begrenzt sind. Durch eine derartige Anordnung wird sichergestellt, dass in den Randbereichen des Laminatkörpers eine besonders hohe Zwischenschichthaftung erzielt wird und damit die Beständigkeit gegenüber Umwelteinflüssen sowie die Fälschungssicherheit weiter erhöht wird. Diese zweiten Teilbereiche weisen vorzugsweise eine Breite von mehr als 2 mm, vorzugsweise von mehr als 4 mm auf.

Im Weiteren hat sich bewährt, das Flächenverhältnis des ersten Flächenbereichs zu dem Flächenbereich so zu wählen, dass die Haftung und damit die zur Ablösung der ersten Laminierfolie von der zweiten Laminierfolie erforderliche Trennkraft mehr als 3,5 N beträgt. Dies vorzugsweise bei einer Messung mit einem Abschälwinkel von 90°, einer Schälgeschwindigkeit von 300 mm/min und einer Streifenbreite von 10mm. Ein hierfür geeignetes Messverfahren wird beispielsweise in der ISO/IEC 10373-1 beschrieben. Vorzugsweise wird hierbei über eine Abschälstrecke von mindestens 20 mm der minimale Wert der gemessenen Trennkraft bestimmt, wobei die ersten und die letzten 5 mm der Strecke nicht berücksichtigt werden, ebenso wenig Einbrüche bzw. andere Ausschläge bei der Trennkraft über eine Distanz von weniger als 1 mm.

Der Abschälwinkel wird hierbei vorzugsweise mittels Einsatz einer entsprechenden Walze hergestellt, die vorzugsweise einen Durchmesser von 10 mm aufweist.

Um die oben bezeichnete Ausformung der ersten und zweiten Teilbereiche des Laminatkörpers sicherzustellen, wird bei der Herstellung der Laminierfolie ein entsprechendes Muster von ersten und zweiten Teilbereichen auf der ersten Laminierfolie hergestellt und ein entsprechender Abschnitt der ersten Laminierfolie mit der zweiten Laminierfolie zu dem Laminatkörper laminiert.

Bei einem strahlungshärtbaren Kleber handelt es sich um einen Kleber, welcher durch Polymerisation oder Vernetzungsreaktion unter Ausbildung langkettiger Moleküle aushärtet, welche zumindest teilweise durch Bestrahlung mittels einer Strahlungsquelle induziert wird. Derartige Klebstoffe enthalten z.B. reaktive Acrylate, Epoxide oder Enolether und Fotoinitiatoren. Die Fotoinitiatoren bilden bei Belichtung Radikale oder reaktive Kationen (Supersäuren) und induzieren hierdurch eine Polymerisation oder Vernetzungsreaktion längerkettiger Moleküle. Je nach strahlenhärtbarem Kleber kann die Vernetzungsreaktion bei Bestrahlung unter unterschiedlichen Wellenlängen erfolgen.

Hierbei ist es auch möglich, dass der strahlenhärtbare Kleber mehrere unterschiedliche Fotoinitiatoren aufweist, welche auf unterschiedliche Wellenlängen oder Wellenlängenbereiche unterschiedlich ansprechen. Hierdurch ist es möglich, die Härtung des strahlenhärtbaren Klebers gezielt stufenweise durchzuführen und hierdurch auch die im Folgenden geschilderten Vorteile zu erzielen.

Vorzugsweise wird bei der Bedruckung ein strahlenhärtbarer Kleber gedruckt, welcher nach Durchführung der Härtung eine höhere Erweichungstemperatur als die erste Laminierfolie und/oder die zweite Laminierfolie besitzt, insbesondere eine um mindestens 10K, vorzugsweise um mehr als 20K höhere Erweichungstemperatur als die erste und/oder zweite Laminierfolie besitzt. Hierdurch wird sichergestellt, dass die strahlenhärtbare Kleberschicht bei Durchführung des Laminierverfahrens deutlich formstabiler als die erste bzw. die zweite Laminierfolie ist und damit einen besonders guten mechanischen Schutz für die Dekorlage beim Laminieren bietet.

Es ist auch möglich, strahlungshärtende Hybrid-Systeme zu verwenden, welche nach verschiedenen weiteren chemischen Reaktionen wie z.B. thermischer Reaktion aushärten.

Dadurch kann insbesondere die Flexibilität der Kleberschicht den Anforderungen angepasst werden. Einerseits ist genügend Formstabilität vorhanden, um während der Lamination zum Laminatkörper einer Degradation der Transferlagen entgegenzuwirken, währendem genügend Flexibilität vorhanden ist, damit kein Aufbrechen oder Rissbildung in den Transferlagen stattfindet, wie sie bei sehr spröden und unflexiblen Schichten auftreten können.

Vorzugsweise wird die Bedruckung mit dem strahlenhärtbaren Kleber mit einem Auftragsgewicht zwischen 0,2 g/m² und 20 g/m², vorzugsweise zwischen 0,5 g/m² und 10 g/m², weiter bevorzugt zwischen 0,5 g/m² und 5 g/m² ausgeführt.

Weiterhin kann die gewünschte Schichtdicke auch dadurch erreicht werden, dass sowohl auf die erste Laminierfolie als auch auf die Transferfolie im Register gedruckt wird, wobei die Schichtdicken der Anteile des strahlungshärtenden Klebers auf der ersten Laminierfolie oder auf der Transferfolie vorzugsweise Werte zwischen 10% und 90% der Gesamtdicke des insgesamt aufzubringenden strahlenhärtenden Klebers (100%) aufweisen können. Beispielsweise können also 10% des strahlenhärtenden Klebers auf der Transferfolie aufgebracht sein und die restlichen 90% auf der ersten Laminierfolie oder umgekehrt.

Untersuchungen haben gezeigt, dass bei der Verwendung eines derartigen Auftragsgewichts die strahlenhärtbare Kleberschicht einerseits eine ausreichend mechanische Stabilität besitzt, um die Dekorlage bei der Durchführung des Laminierverfahrens zu schützen, andererseits jedoch die Kantenschärfe, mittels der der Transfer der Dekorlage erfolgt, nicht merklich herabgesetzt wird.

Die Bedruckung mit dem strahlenhärtbaren Kleber erfolgt vorzugsweise mittels Flexodruck, Siebdruck, Tiefdruck oder Tintenstrahldruck. Untersuchungen haben hierbei gezeigt, dass durch die Verwendung von Flexodruck eine hohe Kantenschärfe der transferierten Dekorlagen-Bereiche erzielt werden kann. Insbesondere durch die Verwendung von einem kontinuierlichen Rolle-zu-Rolle-Prozess lässt sich eine besonders kostengünstige Bedruckung mit hoher Druckgeschwindigkeit erzielen. Die Vorteile der Bedruckung mittels Tintenstrahldruck bestehen insbesondere darin, dass hierdurch eine Individualisierung des Kleberaufdrucks und damit eine entsprechende Individualisierung des durch die transferierten Dekorlagen hergestellten Dekors erzielt werden kann.

Je nach Druckverfahren sind unterschiedliche Viskositätsbereiche vorteilhaft. Für Tiefdruck werden beispielsweise niedrige Viskositäten bevorzugt, für Flexodruck mittlere und für Siebdruck eher höhere Viskositäten.

Der strahlenhärtbare Kleber weist bei der Bedruckung, insbesondere mittels Flexodruck, vorzugsweise eine dynamische Viskosität zwischen 400 mPas und 2000 mPas, bevorzugt zwischen 500 mPas und 1200 mPas, weiter bevorzugt zwischen 500 mPas und 800 mPas auf. Untersuchungen haben gezeigt, dass sich durch die Einstellung einer entsprechenden Viskosität eine besonders gute Druckqualität, sowohl im Hinblick auf die Auflösung des Aufdrucks, als auch einer ausreichenden Flächendeckung der bedruckten Bereiche für den nachfolgenden Transfer erzielen lassen. Die Viskosität wird hierbei vorzugsweise gemäß DIN ISO 3219:1994-10 ("Kunststoffe - Polymere/Harze in flüssigem, emulgiertem oder dispergiertem Zustand - Bestimmung der Viskosität mit einem Rotationsviskosimeter bei definiertem Geschwindigkeitsgefälle" Ausgabedatum 1994-10) bestimmt, beispielsweise unter Verwendung eines HAAKE Viscotester^{®} VT550 (Thermo Fischer Scientific Inc., Waltham, MA, USA), weiter bevorzugt unter Verwendung eines DIN-Adapters gemäß DIN 53019 einer Zylinder-Messeinrichtung NV und eines Messbechers NV [NV].

Kleberkomponente können beispielsweise Monoacrylate, Diacrylate, Triacrylate, Oligomere und Monomere sein. Die Aushärtung des Klebers kann beispielsweise mit einer Standard-Quecksilberdampflampe erfolgen. Die benötigte UV-Dosis ist abhängig vom Klebersystem. Typischerweise werden UV-Dosen von mehr als 50 mJ/cm² benötigt. Bei der Quecksilberdampflampe kann es sich auch um einen mit Eisen oder Gallium dotierten Strahler handeln. Vorteilhafterweise wird der IR-Eintrag, welcher allenfalls zu einer unerwünschten Erwärmung der ersten Laminierfolie und/oder der Transferfolie führt, durch Filter oder Kaltlichtreflektoren reduziert. Weiter können als Strahlungsquellen auch UV-LED-Strahler eingesetzt werden. Deren maximale Intensität liegt vorzugsweise im Wellenlängenbereich von 330 nm bis 410 nm. Weiter können als Strahlungsquellen auch Blitzlichtstrahler eingesetzt werden, die eine hohe Intensität während kurzer Zeit liefern. Die Strahler können auch segmentiert eingesetzt werden. Dabei wird nicht die ganze Bahnbreite mit der Strahlung bestrahlt, sondern vornehmlich jener Bereich, in denen der strahlungshärtende Kleber aufgedruckt wurde. Eine solche Segmentierung kann beispielsweise durch eine Maske erfolgen oder durch selektive ein- und ausgeschaltete Segmente bei UV-LED-Strahlern. Dabei wird die erste Laminierfolie und/oder die Transferfolie vor allenfalls schädlichen Strahlungen geschont.

Die zumindest teilweise Härtung der strahlenhärtbaren Kleberschicht erfolgt mittels Bestrahlung mittels ein oder mehrerer Strahlungsquellen. Hierbei ist es möglich, dass die Härtung in einem Härtungsschritt erfolgt oder auch in mehreren Härtungsschritten erfolgt, wie im Folgenden ausgeführt. Vorzugsweise erfolgt die Bestrahlung in einem Wellenlängenbereich von unter 500 nm und insbesondere mittels UV-Licht. Besonders die Verwendung im Wellenlängenbereiche von 250 nm und/oder 310 nm und/oder 365 nm und/oder 395 nm und/oder 420 nm hat sich für die Härtung der strahlenhärtbaren Kleberschicht bewährt. In diesen Bereichen finden sich typische Leistungsspitzen bei Quecksilberdampflampen oder sind leistungsstarke UV-LED kommerziell erhältlich. Aus diesen Gründen werden auch handelsübliche Photoinitiatoren für diese Wellenlängenbereiche ausgelegt.

Weiter ist es von Vorteil, wenn die erste Laminierfolie und/oder die mindestens eine Transferfolie eine Transparenz für zumindest einen Wellenlängenbereich der Bestrahlung, in dem der zumindest eine Photoinitiator empfindlich ist, von mehr als 10% besitzt. Hierdurch wird sichergestellt, dass eine ausreichende Härtung erzielbar ist, jedoch durch den erfolgten Energieeintrag keine Degeneration der Laminierfolie und/oder der Dekorlage bewirkt wird.

Das konkrete Emissionsspektrum des zur Härtung eingesetzten UV-Strahlers ist dabei zu berücksichtigen. Wird beispielsweise ein UV-LED-Strahler mit einer Peak-Wellenlänge von 365 nm und einer Halbwertsbreite von 30 nm verwendet, so ist die Transparenz in diesem Bereich, als insbesondere in diesem Beispiel zwischen 355 nm bis 395 nm wesentlich, und durch entsprechende Materialauswahl ist vorzugsweise sicherzustellen, dass über diesen Wellenlängenbereich eine Durchlässigkeit von mehr als 10% besteht.

Vorzugsweise wird der strahlenhärtbare Kleber nach oder bei der Bedruckung der ersten Oberfläche der ersten Laminierfolie und/oder der Dekorschicht mit dem strahlenhärtbaren Kleber und vor Aufbringen der mindestens einen Transferfolie auf die erste Oberfläche der ersten Laminierfolie in einem Härtungsschritt gehärtet. Mittels einer derartigen Vorhärtung ist es möglich, ein "Verlaufen" des Kleberaufdrucks auf der ersten Oberfläche der Laminierfolie und/oder der Dekorlage zu verhindern bzw. zu begrenzen und so die Konturschärfe des Aufdrucks weiter zu verbessern.

Vorzugsweise wird hierbei die dynamische Viskosität des strahlenhärtbaren Klebers mittels eines derartigen Vorhärten beim Bedrucken oder nach dem Bedrucken und vor dem Aufbringen der mindestens einen Transferfolie auf der ersten Oberflächen der ersten Laminierfolie um eine dynamische Viskosität zwischen 20 mPas und 3000 mPas, vorzugsweise zwischen 50 mPas und 1000 mPas erhöht. Hierdurch werden die bereits oben angeführten Vorteile erreicht.

Eine weitere Option besteht darin, den strahlenhärtenden Kleber in der Lackwanne der entsprechenden Druckstation zu erwärmen, um die Viskosität auf einen für das Drucken geeigneten Bereich zu reduzieren. Nach dem Drucken kühlt der Lack ab und die Viskosität nimmt wieder zu. Beim Zuführen der mindestens einen Transferfolie bleiben aufgrund der erhöhten Viskosität die feinen Details des Drucks eher erhalten als bei einem dünnflüssigeren Kleber. Die Erwärmung kann beispielsweise auf 30°C bis 80°C, vorzugsweise auf 30°C bis 60°C erfolgen. Vorzugsweise wird strahlungshärtbarer Kleber mittels dieses Härtungsschritts auf einen Härtungsgrad zwischen 10% und 50%, weiter zwischen 20% und 30% vorgehärtet.

Weiter ist es vorteilhaft, die strahlenhärtbare Kleberschicht nach oder bei dem Aufbringen der zumindest einen Transferfolie auf die erste Oberfläche der ersten Laminierfolie und vor dem Abziehen der zumindest einen Transferfolie von der ersten Laminierfolie in einem Härtungsschritt zu härten, insbesondere auf einen Härtungsgrad von größer als 50%, bevorzugt von größer als 80%. Entsprechend ist der Anteil an nicht polymerisierten Monomeren und/oder Oligomeren kleiner als 50%, bevorzugt kleiner als 20%. Durch diese Härtung wird die Haftung zwischen der Dekorlage und erster Laminierfolie erhöht und hierdurch das Ablösen der Dekorlage in den ein oder mehreren ersten Teilbereichen verbessert. Es ist jedoch auch möglich, auf diesen Härtungsschritt zu verzichten, bei Einsatz einer entsprechenden Ablöseschicht in der Transferfolie und bei ausreichender Zwischenschichthaftung der strahlenhärtbaren Kleberschicht und der Dekorlage und/oder der ersten Laminierfolie.

Vorzugsweise erfolgt in diesem Härtungsschritt noch keine vollständige Aushärtung der Kleberschicht aufgrund der nachgehend angeführten Punkte.

Die strahlenhärtbare Kleberschicht wird weiter vorzugsweise nach oder bei dem Abziehen der mindestens einen Transferfolie von der ersten Laminierfolie und vor dem Laminieren zum Laminierkörper in einem Härtungsschritt gehärtet, insbesondere auf einen Härtungsgrad von größer als 80%,
weiter bevorzugt zwischen 80% und 90% gehärtet. Die Durchführung eines derartigen Härtungsschrittes ermöglicht, den Härtungsgrad der strahlungshärtbaren Kleberschicht besonders gezielt für die Erfordernisse des Laminierverfahrens einzustellen. Dies, da bei der Durchführung eines derartigen Härtungsschritts die Trägerfolie bereits von der Dekorlage abgezogen ist und die Flankenbereiche der strahlenhärtbaren Kleberschicht an der Grenze zwischen den ersten und zweiten Teilbereichen der Laminierfolie frei liegen und damit die Bestrahlung entsprechend zielgenau und feindosiert erfolgen kann.

Die mechanischen und/oder temperaturabhängigen Eigenschaften der Kleberschicht sind nicht nur durch den Härtungsgrad, das heißt den Polmerisationsgrad bestimmt, sondern auch durch die Formulierung des Klebers. So können auch teilweise thermoplastische Eigenschaften des Klebers vorliegen.

Hierbei ist es von Vorteil, die strahlenhärtbare Kleberschicht noch nicht vollständig auszuhärten, sondern lediglich auf einen Härtungsgrad zwischen 50% und 90% auszuhärten. So haben Untersuchungen gezeigt, dass bei einer vollständigen Aushärtung der strahlenhärtbaren Kleberschicht bei Durchführung des Laminierverfahrens die Kleberschicht zu der Ausbildung von Bruchkanten neigt und so ihre Schutzfunktion nicht mehr vollkommen erbringen kann. Durch eine nicht vollständige Aushärtung der strahlenhärtbaren Kleberschicht wird eine ausreichende Flexibilität der Kleberschicht sichergestellt und die optische Qualität des Laminierkörpers hierdurch verbessert.

Vorzugsweise wird die strahlenhärtbare Kleberschicht nach dem Laminieren in einem Härtungsschritt gehärtet, insbesondere vollständig ausgehärtet oder auf einen Härtungsgrad zwischen 80% und 95% gehärtet.

Die vorhergehenden Härtungsschritte werden vorzugsweise mittels einer jeweils zugeordneten Strahlungsquelle durchgeführt, welche entsprechend bei den einzelnen Härtungsschritten angeordnet bzw. positioniert ist. Bezüglich des Aufbaus der Strahlungsquelle wird auf obige Ausführungen verwiesen. Weiter wird darauf verwiesen, dass bei der Durchführung der erfindungsgemäßen Verfahren eine beliebige Kombination der vorhergehend angeführten Härtungsschritte realisiert werden kann und auch die Härtung der strahlenhärtbaren Kleberschichten lediglich mittels eines der vorhergehenden Härtungsschritte erfolgen kann.

Besonders vorteilhaft ist weiter, wenn die Oberfläche der ersten Laminierfolie und/oder die erste Oberfläche der Dekorlage eine Oberflächenrauigkeit Ra kleiner als 3 µm, vorzugsweise kleiner als 1,5 µm, weiter vorzugsweise kleiner als 0,6 µm aufweist. Untersuchungen haben gezeigt, dass durch die Wahl einer derartigen Oberflächenrauigkeit zum einen die Kantenschärfe der strahlenhärtbaren Kleberschicht verbessert und/oder eine vollständige Übertragung der Transferlage erleichtert wird und zum anderen das optische Erscheinungsbild des Laminatkörpers weiter verbessert wird.

Die erste und/oder zweite Laminierfolie besteht vorzugsweise aus Polycarbonat oder weist Polycarbonat als Hauptbestandteil auf. Die erste und zweite Laminierfolie kann hierbei auch aus mehreren Schichten bestehen und kann weiter auch Schichten aus PET, GABS, PVC aufweisen oder aus einem dieser Kunststoffe bestehen. Die Dicke der ersten und/oder zweiten Laminierfolie beträgt vorzugsweise zwischen 30 µm und 400 µm, insbesondere zwischen 40 µm und 130 µm. Weiter ist es bevorzugt, wenn die erste und zweite Laminierfolie zumindest an ihren zugewandten Oberflächen aus dem gleichen Kunststoffmaterial oder einem weitgehend übereinstimmenden Kunststoffmaterial besteht, beispielsweise sowohl die erste als auch die zweite Laminierfolie aus Polycarbonat besteht. Werden für die erste und die zweite Laminierfolie unterschiedliche Kunststoffschichten, beispielsweise PET, PC (Polycarbonat) eingesetzt, ist es vorteilhaft, auf der der anderen Laminierfolie zugewandten Seite eine die Adhäsion der Laminierfolien bei der Lamination erhöhende Haftvermittlungsschicht, beispielsweise aus thermoplastischem Polyurethan (PU) oder aus Polyvinylchlorid (PVC) oder aus Acrylat einzusetzen.

Es ist auch vorteilhaft, dass bei dem Laminieren mehrerer aufeinanderfolgender Folien umfassend die erste Laminierfolie mit den ein oder mehreren ersten Teilbereichen mit der Dekorlage und die zumindest eine zweite Laminierfolie zu dem Laminatkörper die zumindest eine zweite Laminierfolie Polyvinylchlorid umfasst und auf der Seite der ersten Oberfläche der ersten Laminierfolie angeordnet wird und/oder die mehreren aufeinanderfolgenden Folien ein oder mehrere weitere Laminierfolien umfassen, welche eine oder mehrere der folgenden Folien aufweisen, insbesondere wobei die erste Laminierfolie Polycarbonat umfasst:
eine erste Laminierfolie der ein oder mehreren weiteren Laminierfolien, welche Polyvinylchlorid umfasst und auf der Seite der zweiten Oberfläche der ersten Laminierfolie angeordnet wird,
eine zweite Laminierfolie der ein oder mehreren weiteren Laminierfolien, welche Polycarbonat umfasst und auf der der ersten Laminierfolie abgewandten Seite der ersten Laminierfolie der ein oder mehreren weiteren Laminierfolien angeordnet wird,
eine dritte Laminierfolie der ein oder mehreren weiteren Laminierfolien, welche Polyvinylchlorid umfasst und auf der der ersten Laminierfolie abgewandten Seite der ersten und/oder zweiten Laminierfolie der ein oder mehreren weiteren Laminierfolien angeordnet wird,
eine vierte Laminierfolie der ein oder mehreren weiteren Laminierfolien, welche Polyvinylchlorid umfasst und auf der der ersten Laminierfolie abgewandten Seite der zweiten Laminierfolie angeordnet wird.

Vorzugsweise weist eine Folie aus Polycarbonat (PC) oder Polyvinylchlorid (PVC) und/oder eine Folie, welche Polycarbonat oder Polyvinylchlorid umfasst, als Hauptbestandteil Polycarbonat oder Polyvinylchlorid auf, und weist insbesondere weitere Bestandteile auf, oder besteht vollständig aus Polycarbonat oder Polyvinylchlorid.

Hierbei wird insbesondere zumindest die zweite Laminierfolie der ein oder mehreren weiteren Laminierfolien mit einer Dekorlage in ein oder mehreren ersten Teilbereichen der zweiten Laminierfolie der ein oder mehreren weiteren Laminierfolien versehen, vorzugsweise mittels den Schritten, mit welchen die erste Laminierfolie mit den ein oder mehreren ersten Teilbereichen mit der Dekorlage hergestellt wird, bevorzugt wobei in entsprechenden Schritten anstelle der ersten Laminierfolie die zweite Laminierfolie der ein oder mehreren weiteren Laminierfolien verwendet wird und insbesondere wobei die Dekorlage, die ein oder mehreren ersten Teilbereiche und/oder die ein oder mehreren zweiten Teilbereiche verschieden ausgestaltet sind.

Hiermit sind insbesondere die folgenden Schritte zur Herstellung des Laminatkörpers bzw. eines weiteren Laminier-Inlays möglich:
Bereitstellen zumindest einer der ein oder mehreren weiteren Laminierfolien, insbesondere der zweiten Laminierfolie der ein oder mehreren weiteren Laminierfolien, aus Polycarbonat mit einer weiteren ersten Oberfläche und einer dieser gegenüberliegenden weiteren zweiten Oberfläche.

Bereitstellen zumindest einer weiteren Transferfolie, welche jeweils eine weitere Trägerfolie und eine von der weiteren Trägerfolie ablösbare weitere Dekorlage mit einer der weiteren Trägerfolie gegenüberliegenden weiteren ersten Oberfläche und einer der weiteren Trägerfolie zugewandten weiteren zweiten Oberfläche umfasst.

Bedrucken der weiteren ersten Oberfläche der zumindest einen der ein oder mehreren weiteren Laminierfolien, insbesondere der zweiten Laminierfolie der ein oder mehreren weiteren Laminierfolien, und/oder der weiteren ersten Oberfläche der weiteren Dekorlage mit einem strahlenhärtbaren Kleber. Hierbei wird der strahlenhärtbare Kleber in ein oder mehreren weiteren ersten Zonen auf die jeweilige weitere erste Oberfläche der zumindest einen der ein oder mehreren weiteren Laminierfolien, insbesondere der zweiten Laminierfolie der ein oder mehreren weiteren Laminierfolien, und/oder der weiteren Dekorlage aufgebracht und bildet in den ein oder mehreren weiteren ersten Zonen eine weitere strahlenhärtbare Kleberschicht aus. In ein oder mehreren weiteren zweiten Zonen wird der strahlenhärtbare Kleber vorzugsweise nicht auf die jeweilige weitere erste Oberfläche der zumindest einen der ein oder mehreren weiteren Laminierfolien, insbesondere der zweiten Laminierfolie der ein oder mehreren weiteren Laminierfolien, und/oder der jeweiligen weiteren Dekorlage aufgebracht.

Aufbringen der zumindest einen weiteren Transferfolie auf die weitere erste Oberfläche der zumindest einen der ein oder mehreren weiteren Laminierfolien, insbesondere der zweiten Laminierfolie der ein oder mehreren weiteren Laminierfolien. Hierbei ist es vorteilhaft, dass mindestens ein Teilbereich der ein oder mehreren weiteren ersten Zonen mit der weiteren strahlenhärtbaren Kleberschicht sowie mindestens ein Teilbereich der ein oder mehreren weiteren zweiten Zonen, in denen die weitere strahlenhärtbare Kleberschicht nicht aufgebracht ist, zwischen der weiteren ersten Oberfläche der jeweiligen weiteren Dekorlage und der weiteren ersten Oberfläche der zumindest einen der ein oder mehreren weiteren Laminierfolien, insbesondere der zweiten Laminierfolie der ein oder mehreren weiteren Laminierfolien, angeordnet ist.

Zumindest teilweise Härtung der weiteren strahlenhärtbaren Kleberschicht.

Abziehen der mindestens einen weiteren Transferfolie von der zumindest einen der ein oder mehreren weiteren Laminierfolien, insbesondere der zweiten Laminierfolie der ein oder mehreren weiteren Laminierfolien. Hierbei ist es zweckmäßig, dass in ein oder mehreren weiteren ersten Teilbereichen, die zumindest bereichsweise mit mindestens einer der weiteren ersten Zonen überlappen, die weitere Dekorlage beim Abziehen von der weiteren Trägerfolie abgelöst wird und auf der zumindest einen der ein oder mehreren weiteren Laminierfolien, insbesondere der zweiten Laminierfolie der ein oder mehreren weiteren Laminierfolien, verbleibt, und in ein oder mehreren weiteren zweiten Teilbereichen die weitere Dekorlage auf der weiteren Trägerfolie verbleibt und mit der weiteren Trägerfolie abgezogen wird.

Zur Herstellung des Laminatkörpers ist insbesondere weiter der folgende Schritt möglich:
Laminieren mehrerer aufeinanderfolgender Folien umfassend die erste Laminierfolie mit den ein oder mehreren ersten Teilbereichen mit der Dekorlage, zumindest einer zweiten Laminierfolie und/oder mit ein oder mehreren weiteren Laminierfolien, insbesondere die erste Laminierfolie der ein oder mehreren weiteren Laminierfolien, die zweite Laminierfolie der ein oder mehreren weiteren Laminierfolien, bevorzugt mit den ein oder mehreren zweiten Teilbereichen mit der weiteren Dekorlage, die dritte Laminierfolie der ein oder mehreren weiteren Laminierfolien und/oder die vierte Laminierfolie der ein oder mehreren weiteren Laminierfolien, zu dem Laminatkörper.

Vorzugsweise gelten die Angaben zu der strahlenhärtbaren Kleberschicht, entsprechend für die weitere strahlenhärtbare Kleberschicht und/oder die Angaben zur Dekorlage der ersten Laminierfolie entsprechend für die weitere Dekorlage der zumindest einen der ein oder mehreren weiteren Laminierfolien, insbesondere der zweiten Laminierfolie der ein oder mehreren weiteren Laminierfolien.

Bevorzugt gelten die Angaben zu den ein oder mehreren ersten und zweiten Teilbereichen, der ersten und zweiten Oberfläche und/oder der ein oder mehreren ersten und zweiten Zonen der ersten Laminierfolie und/oder der Dekorlage, der strahlenhärtbaren Kleberschicht entsprechend für die ein oder mehreren weiteren ersten und weiteren zweiten Teilbereiche, die weitere erste und weitere zweite Oberfläche und/oder die ein oder mehreren weiteren ersten und weiteren zweiten Zonen der zumindest einen Laminierfolie der ein oder mehreren weiteren Laminierfolien, insbesondere der zweiten Laminierfolie der ein oder mehreren weiteren Laminierfolien.

Bevorzugt gelten die Angaben, insbesondere hinsichtlich dem Verschmelzen, den Flächenbereichen und/oder dem Flächenverhältnis, der ersten Laminierfolie entsprechend für die zweite Laminierfolie der ein oder mehreren weiteren Laminierfolien, insbesondere wobei die Angaben, bevorzugt hinsichtlich dem Verschmelzen, den Flächenbereichen und/oder dem Flächenverhältnis, der zweiten Laminierfolie entsprechend für die erste und/oder dritte Laminierfolie der ein oder mehreren weiteren Laminierfolien gelten.

Weiter ist es auch möglich, dass ein oder mehrere zusätzliche Laminierfolien aus Polyvinylchlorid und/oder Polycarbonat auf und/oder zwischen der ersten Laminierfolie, der zumindest einen zweiten Laminierfolie und/oder ein oder mehreren Laminierfolien der ein oder mehreren weiteren Laminierfolien angeordnet werden und insbesondere bei dem Laminieren mehrerer aufeinanderfolgender Folien umfassend die erste Laminierfolie mit den ein oder mehreren ersten Teilbereichen mit der Dekorlage und die zumindest eine zweite Laminierfolie zu dem Laminatkörper auch zu dem Laminatkörper laminiert werden.

Hierbei ist es möglich, dass eine zusätzliche Dekorlage auf ein oder mehrere Laminierfolien der ein oder mehreren zusätzlichen Laminierfolien, insbesondere auf die erste Laminierfolie der ein oder mehreren zusätzlichen Laminierfolien, welche bevorzugt Polycarbonat umfassen, aufgebracht wird, insbesondere so dass ein oder mehrere zusätzliche Laminier-Inlays gebildet werden. Hierbei gelten bevorzugt die Angaben und/oder Ausführungen der ersten Laminierfolie und der Dekorlage auch für die entsprechende zusätzliche Laminierfolie und die entsprechende zusätzliche Dekorlage. Ein zusätzliches Laminier-Inlay weist hiermit insbesondere auch eine zusätzliche strahlenhärtbare Kleberschicht, einen zusätzlichen ersten Teilbereich mit der zusätzlichen Dekorlage, und/oder einen zusätzlichen zweiten Teilbereich auf.

Weiter ist es zweckmäßig, dass die erste Laminierfolie, die zumindest eine zweite Laminierfolie und/oder ein oder mehrere Laminierfolien der ein oder mehreren weiteren Laminierfolien, insbesondere die erste, zweite, dritte und/oder vierte Laminierfolie der ein oder mehreren weiteren Laminierfolien, und/oder ein oder mehrere Laminierfolien der ein oder mehreren zusätzlichen Laminierfolien, insbesondere die erste und/oder zweite Laminierfolie der ein oder mehreren zusätzlichen Laminierfolien, zumindest teilflächig oder vollflächig transparent, semitransparent und/oder opak sind, insbesondere im für das menschliche Auge sichtbaren Wellenlängenbereich transparent semitransparent und/oder opak sind.

Unter transparent ist vorzugsweise ein Transmissionsgrad im Bereich von 50% bis 99% zu verstehen. Weiter ist unter semitransparent insbesondere ein Transmissionsgrad im Bereich von 30% bis 50% und unter opak bevorzugt ein Transmissionsgrad im Bereich von 0% bis 30% zu verstehen.

Hierbei ist es auch möglich, dass die erste Laminierfolie, die zumindest eine zweite Laminierfolie und/oder ein oder mehrere Laminierfolien der ein oder mehreren weiteren Laminierfolien, insbesondere die erste, zweite, dritte und/oder vierte Laminierfolie der ein oder mehreren weiteren Laminierfolien, und/oder ein oder mehrere Laminierfolien der ein oder mehreren zusätzlichen Laminierfolien, insbesondere die erste und/oder zweite Laminierfolie der ein oder mehreren zusätzlichen Laminierfolien im UV-Bereich und/oder im IR-Bereich, insbesondere im Wellenlängenbereich von 9400 nm bis 10600 nm und/oder im Wellenlängenbereich von 946 nm bis 1444 nm, bevorzugt bei einer Wellenlänge von 1064 nm, teilflächig und/oder vollflächig opak, semitransparent oder transparent sind und/oder bereitgestellt werden.

Bevorzugt ist zumindest eine Laminierfolie laserbar, welche ausgewählt wird aus den folgenden Folien: die erste Laminierfolie, die zumindest eine zweite Laminierfolie und/oder ein oder mehrere Laminierfolien der ein oder mehreren weiteren Laminierfolien, insbesondere die erste, zweite, dritte und/oder vierte Laminierfolie der ein oder mehreren weiteren Laminierfolien, und/oder ein oder mehrere Laminierfolien der ein oder mehreren zusätzlichen Laminierfolien, insbesondere die erste und/oder zweite Laminierfolie der ein oder mehreren zusätzlichen Laminierfolien. Insbesondere die erste Laminierfolie und/oder die zweite Laminierfolie der ein oder mehreren weiteren Laminierfolien, ist laserbar. Vorteilhafterweise werden die erste Laminierfolie, die zumindest eine zweite Laminierfolie und/oder ein oder mehrere Laminierfolien der ein oder mehreren weiteren Laminierfolien, insbesondere die erste, zweite, dritte und/oder vierte Laminierfolie der ein oder mehreren weiteren Laminierfolien, und/oder ein oder mehrere Laminierfolien der ein oder mehreren zusätzlichen Laminierfolien, insbesondere die erste und/oder zweite Laminierfolie der ein oder mehreren zusätzlichen Laminierfolien, insbesondere nach dem Laminieren zu dem Laminatkörper, mittels eines Lasers, insbesondere mittels eines Nd:YAG-Lasers, bearbeitet, bevorzugt individualisiert.

Eine laserbare Laminierfolie, insbesondere die erste Laminierfolie, die zumindest eine zweite Laminierfolie und/oder ein oder mehrere Laminierfolien der ein oder mehreren weiteren Laminierfolien, insbesondere die erste, zweite, dritte und/oder vierte Laminierfolie der ein oder mehreren weiteren Laminierfolien, und/oder ein oder mehrere Laminierfolien der ein oder mehreren zusätzlichen Laminierfolien, insbesondere die erste und/oder zweite Laminierfolie der ein oder mehreren zusätzlichen Laminierfolien, ist hierbei vorzugsweise zumindest teilflächig opak im Bereich der Laserwellenlänge, beispielsweise im Wellenlängenbereich von 946 nm bis 1444 nm, bevorzugt bei einer Wellenlänge von 1064 nm, wobei bevorzugt über und/oder unter der laserbaren Lage angeordnete Lagen transparent im Bereich der jeweiligen Laserwellenlängen sind.

Vorzugsweise wird der Laser durch die ein oder mehreren ersten Teilbereiche und/oder die ein oder mehreren weiteren ersten Teilbereiche durchgeführt, so dass ein gelaserter Teilbereich, insbesondere bei Betrachtung senkrecht auf eine von der ersten Laminierfolie aufgespannte Ebene, bevorzugt in Richtung von der zweiten Laminierfolie zu der ersten Laminierfolie, passergenau über, unter und/oder benachbart zur Dekorlage in den ein oder mehreren ersten Teilbereichen und/oder zur weiteren Dekorlage in den weiteren ersten Teilbereichen angeordnet wird und/oder zur zusätzlichen Dekorlage in den zusätzlichen ersten Teilbereichen angeordnet wird.

Hierdurch ist vorteilhafterweise eine zur Dekorlage und/oder zur weiteren Dekorlage und/oder zur zusätzlichen Dekorlage registergenaue Laserung möglich, welche eine besonders hohe Fälschungssicherheit gewährleistet, insbesondere falls die Dekorlage und/oder die weitere Dekorlage und/oder die zusätzliche Dekorlage ein Sicherheitsmerkmal ausbilden.

Vorzugsweise wird der gelaserte Teilbereich musterförmig ausgestaltet. Der gelaserte Teilbereich weist vorzugsweise ein Graustufenbild, insbesondere durch ein mittels Laser erzeugtes Halbtonraster, auf. Weiter ist das Graustufenbild mittels der Laserung mit besonders hochwertiger Auflösung und/oder besonders vielen Graustufen möglich, insbesondere verglichen mit herkömmlichen Laminatkörpern, welche Folien aus Polyvinylchlorid umfassen.

Unter einem "Graustufenbild" ist hierbei bevorzugt ein Bild zu verstehen, welches den jeweiligen Bildpunkten des Motivs den jeweiligen Farbwert in Form eines entsprechenden Grauwerts bzw. Helligkeitswerts des zugeordneten Farbkanals zuordnet. Diese Grauwerte bzw. Helligkeitswerte können insbesondere auch jeweils durch eine feine Rasterung aus binären Rasterpunkten erzeugt werden, wobei vorzugsweise die Rasterpunkte für das menschliche Auge den Eindruck von Grauwerten bzw. Helligkeitswerten erzeugen. Ein Graustufenbild ist vorzugsweise leicht durch einen menschlichen und/oder maschinellen Betrachter zu erfassen. Denkbar ist beispielsweise die Ausformung des Portraits eines Inhabers eines Sicherheitsdokuments auf bzw. in dem Sicherheitsdokument.

Es ergibt sich somit insbesondere der Vorteil, dass mehrere Funktionen von der ersten Laminierfolie, welche insbesondere Polycarbonat umfasst, und/oder ein oder mehreren Laminierfolien der ein oder mehreren weiteren Laminierfolien, insbesondere der zweiten Laminierfolie der ein oder mehreren weiteren Laminierfolien, und/oder ein oder mehreren zusätzlichen Laminierfolien, insbesondere der ersten und/oder zweiten Laminierfolie der ein oder mehreren zusätzlichen Laminierfolien, welche insbesondere Polycarbonat umfassen, erfüllt werden können, wie beispielsweise Opazität, insbesondere im IR-Laserbereich, und/oder Individualisierbarkeit sowie mechanische und/oder thermische Beständigkeit.

Zum Beispiel eignen sich andere Folien und/oder Kunststofflagen, wie beispielsweise eine Folie aus Polyvinylchlorid, weniger vorteilhaft. Insbesondere ist die Darstellung von Graustufenbildern mittels Laserung in laserbares PC vorteilhafter als mittels Laserung in laserbares PVC, da in laserbarem PVC eher binäre Schwarz-Weiß-Bilder erzeugt werden.

Es ist jedoch auch denkbar, dass eine Laserung vor und/oder nach dem Laminieren mehrerer aufeinanderfolgender Folien umfassend die erste Laminierfolie mit den ein oder mehreren ersten Teilbereichen mit der Dekorlage und die zumindest eine zweite Laminierfolie zu dem Laminatkörper durchgeführt wird.

Insbesondere ist eine der Abfolgen PVC/PC/PVC und/oder
PVC/PVC/PC/PVC/PVC und/oder PVC/PC/PVC/PC/PVC und/oder
PVC/PVC/PC/PVC/PC/PVC/PVC der Kunststoffe Polycarbonat (PC) und
Polyvinylchlorid (PVC) möglich. Beispielsweise ist der folgende Schichtaufbau denkbar:
   - optionale vierte Laminierfolie der ein oder mehreren Laminierfolien aus PVC,
   - zweite Laminierfolie aus PVC,
   - erste Laminierfolie aus PC,
   - erste Laminierfolie der ein oder mehreren weiteren Laminierfolien aus PVC
   - optionale zweite Laminierfolie der ein oder mehreren weiteren Laminierfolien aus PC,
   - optionale dritte Laminierfolie der ein oder mehreren weiteren Laminierfolien aus PVC,
   - optional eine zusätzliche Laminierfolie der ein oder mehreren zusätzlichen Laminierfolien aus PVC.

Insbesondere ist es hierbei möglich, dass die erste Laminierfolie und/oder ein oder mehrere weitere Laminierfolien, insbesondere die erste Laminierfolie der ein oder mehreren weiteren Laminierfolien, ein- oder mehrschichtig ist. Es hat sich insbesondere als vorteilhaft erwiesen, dass die erste Laminierfolie der ein oder mehreren weiteren Laminierfolien ein oder mehrere Schichten aus Polyvinylchlorid aufweist und/oder als Haftvermittler zwischen der ersten Laminierfolie und der zweiten Laminierfolie der ein oder mehreren weiteren Laminierfolien dient.

Es ist insbesondere von Vorteil, dass mindestens zwei Laminierfolien Polycarbonat umfassen und bei dem Laminieren mehrerer aufeinanderfolgender Folien umfassend die erste Laminierfolie mit den ein oder mehreren ersten Teilbereichen mit der Dekorlage und die zumindest eine zweite Laminierfolie zu dem Laminatkörper über eine Kleberschicht und/oder zumindest eine Schicht aus Polyvinylchlorid miteinander verbunden werden.

Insbesondere heißt das in anderen Worten, dass bevorzugt nicht zwei Laminierfolien umfassend Polycarbonat direkt aneinander grenzen sollten, da beim Laminieren bevorzugt kein ausreichender Verbund, insbesondere kein stoffschlüssiger Verbund, der Folien aus Polycarbonat erfolgt. Bevorzugt wechseln sich daher Folien umfassend Polycarbonat mit Folien umfassend Polyvinylchlorid und/oder Kleberschichten ab, insbesondere um einen stabilen Verbund zu erreichen.

Hinsichtlich der Transmissionseigenschaften, bevorzugt im für das menschliche Auge sichtbaren Wellenlängenbereich, sind insbesondere die Abfolgen mit folgendem Aufbau denkbar:
- optionale transparente vierte Laminierfolie der ein oder mehreren weiteren Laminierfolien
- transparente zweite Laminierfolie
- opake erste Laminierfolie, welche bevorzugt bedruckt ist
- transparente erste Laminierfolie der ein oder mehreren weiteren Laminierfolien
- optionale transparente dritte Laminierfolie der ein oder mehreren weiteren Laminierfolien
   oder
- transparente zweite Laminierfolie
- transparente erste Laminierfolie
- opake erste Laminierfolie der ein oder mehreren weiteren Laminierfolien, welche bevorzugt bedruckt ist
- transparente zweite Laminierfolie der ein oder mehreren weiteren Laminierfolien
- transparente dritte Laminierfolie der ein oder mehreren weiteren Laminierfolien.

Hierbei sind, bevorzugt auf den äußersten Seiten, ein oder mehrere Laminierfolien der ein oder mehreren zusätzlichen Laminierfolien möglich, welche vorzugsweise transparent sind und/oder aus Polyvinylchlorid sind.

Hinsichtlich der Transparenz und/oder der Abfolge der Kunststoffmaterialien ist insbesondere eine symmetrische Abfolge, bevorzugt in Bezug auf die erste Laminierfolie und/oder die erste Laminierfolie der ein oder mehreren weiteren Laminierfolien, möglich.

Als Vorteil einer symmetrischen Abfolge der Kunststoffmaterialen hat sich insbesondere herausgestellt, dass der Laminatkörper ein geringes Maß an Verzug und eine hohe Qualität der Dekorlagen aufweist. Beispielsweise kann hierdurch eine hohe Registergenauigkeit erzielt werden und die Fälschungssicherheit wird erhöht.

Es ist jedoch auch eine asymmetrische Abfolge möglich. Hierbei umfassen zumindest die äußersten Folien des Laminatkörpers bevorzugt Polyvinylchlorid.

Vorzugsweise werden die Dekorlagen, insbesondere die Dekorlage, die weitere Dekorlage und/oder die zusätzliche Dekorlage, hier nicht zur Ermittlung der oben genannten Abfolge der Kunststoffmaterialen und/oder der Transmissionseigenschaft herangezogen bzw. sind in den oben genannten Abfolgen nicht berücksichtigt. Somit gelten die Vorteile der oben genannten Abfolgen auch bei einer insgesamt asymmetrischen Abfolge der Materialien, wenn auch die Materialien der Dekorlagen berücksichtigt werden.

Eine weitere denkbare Abfolge, insbesondere in Hinblick auf die Kunststoffmaterialien der Laminierfolien, ist beispielsweise:
- zweite Laminierfolie aus PVC
- erste Laminierfolie aus PC
- erste Laminierfolie der ein oder mehreren weiteren Laminierfolien aus PVC
- dritte Laminierfolie der ein oder mehreren weiteren Laminierfolien aus PVC.

Eine denkbare Abfolge, insbesondere in Hinblick auf die Transmissionseigenschaften, bevorzugt im für das menschliche Auge sichtbaren Wellenlängenbereich, der Laminierfolien, ist beispielsweise:
- transparente zweite Laminierfolie
- transparente erste Laminierfolie
- opake erste Laminierfolie der ein oder mehreren weiteren Laminierfolien, welche bevorzugt bedruckt ist
- transparente dritte Laminierfolie der ein oder mehreren weiteren Laminierfolien

Eine weitere denkbare Abfolge, insbesondere in Hinblick auf die Kunststoffmaterialien der Laminierfolien, ist beispielsweise:
- zweite Laminierfolie aus PVC
- erste Laminierfolie aus PC
- erste Laminierfolie der ein oder mehreren weiteren Laminierfolien aus PVC
- zweite Laminierfolie der ein oder mehreren weiteren Laminierfolien aus PC
- dritte Laminierfolie der ein oder mehreren weiteren Laminierfolien aus PVC.
- eine erste Laminierfolie der ein oder mehreren zusätzlichen Laminierfolien aus PC
- eine zweite Laminierfolie der ein oder mehreren zusätzlichen Laminierfolien aus PVC.

Insbesondere ist es hierbei möglich, dass die dritte Laminierfolie der ein oder mehreren weiteren Laminierfolien ein- oder mehrschichtig ist. Es hat sich insbesondere als vorteilhaft erwiesen, dass die dritte Laminierfolie der ein oder mehreren weiteren Laminierfolien ein oder mehrere Schichten aus Polyvinylchlorid aufweist und/oder als Haftvermittler zwischen der zweiten Laminierfolie der ein oder mehreren weiteren Laminierfolien aus Polycarbonat und der ersten Laminierfolie der ein oder mehreren zusätzlichen Laminierfolien aus Polycarbonat dient.

Eine denkbare Abfolge, insbesondere in Hinblick auf die Transmissionseigenschaften, bevorzugt im für das menschliche Auge sichtbaren Wellenlängenbereich, der Laminierfolien, ist beispielsweise:
- transparente zweite Laminierfolie
- transparente erste Laminierfolie
- opake erste Laminierfolie der ein oder mehreren weiteren Laminierfolien, welche bevorzugt bedruckt ist
- transparente zweite Laminierfolie der ein oder mehreren weiteren Laminierfolien
- transparente dritte Laminierfolie der ein oder mehreren weiteren Laminierfolien
- transparente erste Laminierfolie der ein oder mehreren zusätzlichen Laminierfolien.
- transparente zweite Laminierfolie der ein oder mehreren zusätzlichen Laminierfolien.

Insbesondere ergeben sich Vorteile durch zumindest zwei außenliegende Folien aus Polyvinylchlorid mit zumindest einer zwischen den Folien aus Polyvinylchlorid angeordneten Folie aus Polycarbonat. Durch einen entsprechenden Laminatkörper lassen sich die Vorteile von vollständig aus Polycarbonat bestehenden Laminatkörpern und die Vorteile von vollständig aus Polyvinylchlorid bestehenden Laminatkörpern vereinen. Insbesondere, da die Herstellungsverfahren identisch oder ähnlich zur Herstellung von vollständig aus Polycarbonat bestehenden Laminatkörpern sind, ermöglicht es Herstellern, insbesondere Kartenherstellern, die Vorteile von Laminatkörpern aus Polycarbonat zu nutzen ohne auf Polycarbonat-Prozesse umstellen zu müssen. Hierdurch kann die Produktivität erhalten werden, da typischerweise der Prozesszyklus bei Laminatkörpern aus Polyvinylchlorid kürzer ist als bei Laminatkörpern aus Polycarbonat. Weiter können Material- und/oder Energiekosten eingespart werden, insbesondere im Vergleich zu vollständig aus Polycarbonat bestehenden Laminatkörpern. Hierdurch ist ein besonders kostengünstiger und hinsichtlich der eingesetzten Energieressourcen umweltfreundlicher Herstellungsprozess möglich. Insbesondere durch die erste Laminierfolie und/oder die zweite Laminierfolie der ein oder mehreren weiteren Laminierfolien aus Polycarbonat wird die mechanische Stabilität des Laminatkörpers verbessert, so dass beispielsweise applizierte Sicherheitselemente, welche ein optisch variables Element aufweisen besonders brillant erscheinen.

Vorteilhafterweise wird auf einer äußersten Seite der Dekorlage, der weiteren Dekorlage und/oder der zusätzlichen Dekorlage, welche bevorzugt der strahlenhärtbaren Kleberschicht, der weiteren strahlenhärtbaren Kleberschicht und/oder der zusätzlichen strahlenhärtbaren Kleberschicht abgewandt ist, eine Ablöseschicht und/oder eine Schutzschicht angeordnet. Die Ablöseschicht und/oder Schutzschicht bildet hiermit vorzugsweise eine äußerste Schicht der Dekorlage, der weiteren Dekorlage und/oder der zusätzlichen Dekorlage und/oder wird, insbesondere bei dem Laminieren mehrerer aufeinanderfolgender Folien umfassend die erste Laminierfolie mit den ein oder mehreren ersten Teilbereichen mit der Dekorlage und die zumindest eine zweite Laminierfolie zu dem Laminatkörper, mit einer Laminierfolie, welche Polyvinylchlorid umfasst, insbesondere mit der ersten Laminierfolie, der zumindest einen zweiten Laminierfolie, ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder mit ein oder mehreren Laminierfolien der ein oder mehreren zusätzlichen Laminierfolie, insbesondere der ersten und/oder zweiten Laminierfolie der ein oder mehreren zusätzlichen Laminierfolien, verbunden, insbesondere in direkten Kontakt gebracht und/oder stoffschlüssig verbunden und/oder zusammenlaminiert.

Somit ist es zweckmäßig, dass zumindest eine äußerste Schicht der Dekorlage, der weiteren Dekorlage und/oder der zusätzlichen Dekorlage, insbesondere die Ablöseschicht und/oder die Schutzschicht der Dekorlage, der weiteren Dekorlage und/oder der zusätzlichen Dekorlage, eine Erweichungstemperatur unter oder im Bereich der ersten Laminierfolie, der zumindest einen zweiten Laminierfolie und/oder ein oder mehrerer Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehrerer Laminierfolien der ein oder mehreren zusätzlichen Laminierfolien, insbesondere der ersten und/oder zweiten Laminierfolie der ein oder mehreren zusätzlichen Laminierfolien, welche Polyvinylchlorid umfassen, aufweist und/oder unter oder im Bereich der Laminationstemperatur erweicht wird.

Vorzugsweise liegt hierbei die Erweichungstemperatur zumindest einer äußersten Schicht der Dekorlage, der weiteren Dekorlage und/oder der zusätzlichen Dekorlage, insbesondere der Ablöseschicht und/oder der Schutzschicht der Dekorlage, der weiteren Dekorlage und/oder der zusätzlichen Dekorlage, bevorzugt gemessen nach Prüfmethode VICAT A (10N), besonders bevorzugt bei einer Erwärmungsgeschwindigkeit von 50 K/h, im Bereich der Erweichungstemperatur von Polyvinylchlorid und/oder ist größer als 60°C, bevorzugt größer als 80°C, besonders bevorzugt größer als 100°C.

Hierdurch ist es möglich, dass ein guter Verbund der äußersten Schicht der Dekorlage, der weiteren Dekorlage und/oder der zusätzlichen Dekorlage, insbesondere der Ablöseschicht und/oder der Schutzschicht der Dekorlage, der weiteren Dekorlage und/oder der zusätzlichen Dekorlage, mit einer Laminierfolie, welche Polyvinylchlorid umfasst, insbesondere mit der ersten Laminierfolie, der zumindest einen zweiten Laminierfolie und/oder ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehreren Laminierfolien der ein oder mehreren zusätzlichen Laminierfolien, insbesondere der ersten und/oder zweiten Laminierfolie der ein oder mehreren zusätzlichen Laminierfolien, gewährleistet werden kann.

Vorteilhafterweise schützt die äußerste Schicht der Dekorlage, der weiteren Dekorlage und/oder der zusätzlichen Dekorlage, insbesondere die Ablöseschicht und/oder die Schutzschicht der Dekorlage, der weiteren Dekorlage und/oder der zusätzlichen Dekorlage, dabei die Dekorlage, die weitere Dekorlage und/oder die zusätzliche Dekorlage, in welcher die Ablöseschicht und/oder Schutzschicht angeordnet ist, so dass insbesondere die optischen Effekte erhalten bleiben und insbesondere eine hohe Prozesssicherheit sowie Fälschungssicherheit gewährleistet wird.

Es ist auch möglich, dass die Kleberschicht, insbesondere die strahlenhärtbare Kleberschicht, die weitere strahlenhärtbare Kleberschicht und/oder die zusätzliche strahlenhärtbare Kleberschicht, bei einer Erweichungstemperatur im Bereich von 50°C bis 150°C, insbesondere im Bereich von 60°C bis 140°C, erweicht wird und/oder die Erweichungstemperatur der Kleberschicht, bevorzugt der strahlenhärtbaren Kleberschicht, der weiteren strahlenhärtbaren Kleberschicht und/oder der zusätzlichen strahlenhärtbaren Kleberschicht, insbesondere bei einer Erwärmungsgeschwindigkeit von 50 K/h, bevorzugt gemessen nach Prüfmethode VICAT A (10 N), im Bereich zwischen 50°C und 150°C, bevorzugt zwischen 70°C und 120°C, besonders bevorzugt zwischen 80°C und 110°C, liegt.

Unter der Erweichungstemperatur, insbesondere der Erweichungstemperatur nach VICAT A und/oder nach VICAT B, ist die VICAT-Erweichungstemperatur VST (Vicat Softening Temperature) nach DIN EN ISO 306 (Vorläufer: DIN 53460) zu verstehen.

Hierbei wird mit einer Eindringspitze (mit kreisrunder Fläche von 1 mm²) gemessen. Diese ist mit einer Prüfkraft von 10 N (VICAT A) bzw. 50 N (VICAT B) belastet. Der Probekörper weist eine zulässige Dicke von 3 mm bis 6,4 mm auf und wird erwärmt, insbesondere einer definierten Erwärmungsgeschwindigkeit von 50 K/h bzw. 120 K/h ausgesetzt. Die VST ist erreicht, wenn der Eindringkörper eine Eindringtiefe von 1 mm erreicht.

Durch Variation der Randbedingungen ergeben sich bevorzugt vier Parameterkombinationen: VST/A/50, VST/A/120, VST/B/50, VST/B/120.
"A" steht für eine Prüflast von 10 N,
"B" steht für eine Prüflast von 50 N,
50 bzw. 120 steht bevorzugt für die Erwärmungsgeschwindigkeit in [K/h].

Die Laminationstemperatur, d.h. insbesondere die gewünschte Prozess-Temperatur, die während des Laminationsprozesses im Inneren des Laminatkörpers vorherrscht, liegt insbesondere oberhalb der Erweichungstemperatur von Polyvinylchlorid und insbesondere unterhalb der Erweichungstemperatur von Polycarbonat. Die Laminationstemperatur ist insbesondere die maximal erreichte und gewünschte Temperatur im Inneren des Laminatkörpers während des Laminationsprozesses.

Weiter ist es möglich, dass die erste Laminierfolie, die zumindest eine zweite Laminierfolie und/oder ein oder mehrere Laminierfolien der ein oder mehreren weiteren Laminierfolien, insbesondere die erste, zweite, dritte und/oder vierte Laminierfolie der ein oder mehreren weiteren Laminierfolien, und/oder ein oder mehrere Laminierfolien der ein oder mehreren zusätzlichen Laminierfolien, insbesondere die erste und/oder zweite Laminierfolie der ein oder mehreren zusätzlichen Laminierfolien, Polycarbonat umfassen und eine Erweichungstemperatur, bevorzugt nach VICAT B (50 N), insbesondere bei einer Erwärmungsgeschwindigkeit von 50 K/h, größer als 100°C, bevorzugt größer als 120°C, besonders bevorzugt größer als 140°C, aufweisen.

Es ist auch möglich, dass die erste Laminierfolie, die zumindest eine zweite Laminierfolie und/oder ein oder mehrere Laminierfolien der ein oder mehreren weiteren Laminierfolien, insbesondere die erste, zweite, dritte und/oder vierte Laminierfolie der ein oder mehreren weiteren Laminierfolien, und/oder ein oder mehrere Laminierfolien der ein oder mehreren zusätzlichen Laminierfolien, insbesondere die erste und/oder zweite Laminierfolie der ein oder mehreren zusätzlichen Laminierfolien, Polyvinylchlorid umfassen und eine Erweichungstemperatur, bevorzugt nach VICAT A (10 N), insbesondere bei einer Erwärmungsgeschwindigkeit von 50 K/h, größer als 60°C, bevorzugt größer als 80°C, besonders bevorzugt größer als 100°C, aufweisen und/oder eine Erweichungstemperatur, bevorzugt nach VICAT B (50 N), insbesondere bei einer Erwärmungsgeschwindigkeit von 50 K/h, größer als 50°C, bevorzugt größer als 80°C, besonders bevorzugt größer als 100°C, aufweisen.

Im Folgenden wird insbesondere die Haftkraft zwischen einer Laminierfolie aus PVC und einer Laminierfolie aus PC beschrieben.

Vorzugsweise liegt die Haftkraft, insbesondere gemäß einem Peel Test, an einer Grenzfläche zwischen der ersten Laminierfolie, der zumindest einen zweiten Laminierfolie und/oder ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehreren Laminierfolien der ein oder mehreren zusätzlichen Laminierfolie, insbesondere der ersten und/oder zweiten Laminierfolie der ein oder mehreren zusätzlichen Laminierfolien, welche Polyvinylchlorid umfassen, und der ersten Laminierfolie, der zumindest einen zweiten Laminierfolie und/oder ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehreren Laminierfolien der ein oder mehreren zusätzlichen Laminierfolie, insbesondere der ersten und/oder zweiten Laminierfolie der ein oder mehreren zusätzlichen Laminierfolien, welche Polycarbonat umfassen, im Bereich von 1 N/cm bis 50 N/cm, bevorzugt im Bereich von 3,5 N/cm bis 30 N/cm, besonders bevorzugt im Bereich von 10 N/cm bis 25 N/cm.

Im Folgenden wird insbesondere die Haftkraft zwischen einer Laminierfolie aus Polycarbonat und einer Dekorlage beschrieben.

Bevorzugt liegt die Haftkraft, insbesondere gemäß einem Peel Test, an einer Grenzfläche zwischen der Dekorlage, der weiteren Dekorlage und/oder der zusätzlichen Dekorlage, insbesondere der strahlenhärtbaren Kleberschicht, der weiteren strahlenhärtbaren Kleberschicht und/oder der zusätzlichen strahlenhärtbaren Kleberschicht, und der ersten Laminierfolie, der zumindest einen zweiten Laminierfolie und/oder ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehreren Laminierfolien der ein oder mehreren zusätzlichen Laminierfolie, insbesondere der ersten und/oder zweiten Laminierfolie der ein oder mehreren zusätzlichen Laminierfolien, welche Polycarbonat umfassen, im Bereich von 1 N/cm bis 30 N/cm, bevorzugt im Bereich von 2 N/cm bis 20 N/cm, besonders bevorzugt im Bereich von 3 N/cm bis 15 N/cm und/oder ist bevorzugt größer als 2 N/cm, weiter bevorzugt größer als 3,5 N/cm und/oder liegt insbesondere im Bereich von 4 N/cm bis 5 N/cm.

Die vorstehenden Bereiche beschreiben weiter bevorzugt die Haftkraft zwischen einer Dekorlage und einer mit dieser Dekorlage in direktem Kontakt stehenden Polycarbonat umfassenden Laminierfolie. Es ist auch möglich, dass der Kontakt über eine Kleberschicht, insbesondere die strahlenhärtbare Kleberschicht und/oder die weitere strahlenhärtbare Kleberschicht und/oder die zusätzliche strahlenhärtbare Kleberschicht, hergestellt ist.

Im Folgenden wird insbesondere die Haftkraft zwischen einer Laminierfolie aus Polyvinylchlorid und einer Ablöseschicht und/oder Schutzschicht einer Dekorlage beschrieben.

Insbesondere ist die Haftkraft, insbesondere gemäß einem Peel Test, an einer Grenzfläche zwischen der ersten Laminierfolie, der zumindest einen zweiten Laminierfolie und/oder ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehreren Laminierfolien der ein oder mehreren zusätzlichen Laminierfolie, insbesondere der ersten und/oder zweiten Laminierfolie der ein oder mehreren zusätzlichen Laminierfolien, welche Polyvinylchlorid umfassen, und der Dekorlage, der weiteren Dekorlage und/oder der zusätzlichen Dekorlage, insbesondere der Ablöseschicht und/oder Schutzschicht der Dekorlage, der weiteren Dekorlage und/oder der zusätzlichen Dekorlage, größer als 1 N/cm, bevorzugt größer als 2 N/cm, besonders bevorzugt größer als 3 N/cm, und/oder ist bevorzugt größer 3,5 N/cm und/oder liegt insbesondere im Bereich von 4 N/cm bis 15 N/cm.

Im Folgenden wird insbesondere beschrieben, dass die Haftkraft zwischen einer Laminierfolie aus Polyvinylchlorid und einer Laminierfolie aus Polycarbonat größer ist als die Haftkraft zwischen einer Dekorlage und einer Laminierfolie aus Polyvinylchlorid und/oder größer ist als die Haftkraft zwischen einer Dekorlage und einer Laminierfolie aus Polycarbonat und/oder größer ist als die Haftkraft zwischen zwei Lagen und/oder Schichten einer Dekorlage.

Weiter ist es möglich, dass die Haftkraft, insbesondere gemäß einem Peel Test, an einer Grenzfläche zwischen der ersten Laminierfolie, der zumindest einen zweiten Laminierfolie und/oder ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehreren Laminierfolien der ein oder mehreren zusätzlichen Laminierfolie, insbesondere der ersten und/oder zweiten Laminierfolie der ein oder mehreren zusätzlichen Laminierfolien, welche Polycarbonat umfassen, und der ersten Laminierfolie, der zumindest einen zweiten Laminierfolie und/oder ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehreren Laminierfolien der ein oder mehreren zusätzlichen Laminierfolie, insbesondere der ersten und/oder zweiten Laminierfolie der ein oder mehreren zusätzlichen Laminierfolien, welche Polyvinylchlorid umfassen, größer ist als die Haftkraft an einer Grenzfläche zwischen der ersten Laminierfolie, der zumindest einen zweiten Laminierfolie und/oder ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehreren Laminierfolien der ein oder mehreren zusätzlichen Laminierfolie, insbesondere der ersten und/oder zweiten Laminierfolie der ein oder mehreren zusätzlichen Laminierfolien, und der Dekorlage, der weiteren Dekorlage und/oder der zusätzlichen Dekorlage, welche bevorzugt mit den entsprechenden Laminierfolien verbunden sind, und/oder größer ist als die Haftkraft an einer Grenzfläche zwischen zwei Lagen und/oder Schichten der Dekorlage, der weiteren Dekorlage und/oder der zusätzlichen Dekorlage, welche bevorzugt mit den entsprechenden Laminierfolien verbunden sind.

Es ist auch möglich, dass die Haftkraft, insbesondere gemäß einem Peel Test, an einer Grenzfläche zwischen der ersten Laminierfolie, der zumindest einen zweiten Laminierfolie und/oder ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehreren Laminierfolien der ein oder mehreren zusätzlichen Laminierfolie, insbesondere der ersten und/oder zweiten Laminierfolie der ein oder mehreren zusätzlichen Laminierfolien, und der Dekorlage, der weiteren Dekorlage und/oder der zusätzlichen Dekorlage, welche bevorzugt mit den entsprechenden Laminierfolien verbunden sind, größer ist als die Haftkraft an einer Grenzfläche zwischen zwei Lagen und/oder Schichten der Dekorlage, der weiteren Dekorlage und/oder der zusätzlichen Dekorlage, welche bevorzugt mit den entsprechenden Laminierfolien verbunden sind.

Unter den entsprechenden Laminierfolien ist insbesondere die erste Laminierfolie, die zumindest eine zweite Laminierfolie und/oder ein oder mehrere Laminierfolien der ein oder mehreren weiteren Laminierfolien, insbesondere die erste, zweite, dritte und/oder vierte Laminierfolie der ein oder mehreren weiteren Laminierfolien, und/oder ein oder mehrere Laminierfolien der ein oder mehreren zusätzlichen Laminierfolien, insbesondere die erste und/oder zweite Laminierfolie der ein oder mehreren zusätzlichen Laminierfolien, zu verstehen, welche Polycarbonat und/oder Polyvinylchlorid umfassen.

Hierdurch wird insbesondere erreicht, dass bei einem Versuch des Herauslösens einer Dekorlage ein Aufreißen der Dekorlage bewirkt wird. Dies ist beispielsweise vorteilhaft für den Fall, dass die Dekorlage ein Sicherheitsmerkmal ausbildet, weil dadurch Fälschungsaktivitäten erschwert werden und somit insbesondere die Fälschungssicherheit erhöht wird.

Eine Grenzfläche ist bevorzugt auch eine Fläche, welche dort angeordnet ist, wo unmittelbar vor dem Verbinden zweier Lagen eine Grenzfläche angeordnet war.

Unter einem Peel Test ist vorzugsweise ein Messverfahren nach ISO/IEC 10373-1, Absatz 5.3 zu verstehen. Dabei wird insbesondere eine optional vorkonditionierte Karte in 10 mm breite Teststreifen geschnitten.

Beispielsweise werden dann alle Lagen auf einer Seite einer Dekorlage entfernt, bevorzugt mit einer Länge von 5 mm bis 10 mm. So werden beispielsweise mit einem scharfen Messer die Laminierfolien oberhalb einer Dekorlage, insbesondere eines Sicherheitsmerkmals, bevorzugt eines KINEGRAM^{®}, vom Kern abgeschält, d.h. insbesondere von einer Laminierfolie und der Dekorlage, welche insbesondere das Sicherheitsmerkmal bildet, bevorzugt das KINEGRAM^{®} bildet, abgeschält. Zweckmäßigerweise findet das Abschälen nur teilweise statt.

Anschließend wird vorzugsweise das abgeschälte Ende über eine Befestigungsklammer oder mittels eines Klebebandes an die Halterung einer Zugprüfmaschine befestigt. Bevorzugt wird ein rechter Winkel zwischen den abgeschälten an der Zugprüfmaschine befestigten Laminierfolien und den nicht abgeschälten Laminierfolien hergestellt. Insbesondere wird ein rechter Winkel zwischen der ersten Laminierfolie und der zweiten Laminierfolie hergestellt. Zweckmäßigerweise wird der Unterteil der Karte, insbesondere die erste Laminierfolie der ein oder mehreren weiteren Laminierfolien, optional auf einer Stabilisierungsplatte fixiert.

Während der Zugmessung wird bevorzugt die abgelöste Folienschicht, beispielsweise also zumindest die erste Laminierfolie mit der entsprechenden Dekorlage und die erste Laminierfolie der ein oder mehreren weiteren Laminierfolien, über eine Rolle geführt. Die Haftkraft (peel strength) wird vorzugsweise graphisch aufgezeichnet und anschließend ausgewertet, wobei bevorzugt die ersten und letzten 5 mm der Messung nicht berücksichtigt werden. Die Ergebnisse werden beispielsweise in N/10 mm angegeben.

Es ist auch möglich, dass die Messung an Stellen ohne Dekorlage vorgenommen wird, beispielsweise um die Haftkraft zwischen einer Laminierfolie umfassend Polycarbonat und einer Laminierfolie umfassend Polyvinylchlorid zu messen.

Weiter ist es möglich, dass, vorzugsweise bei und/oder vor dem Laminieren mehrerer aufeinanderfolgender Folien umfassend die erste Laminierfolie mit den ein oder mehreren ersten Teilbereichen mit der Dekorlage und die zumindest eine zweite Laminierfolie zu dem Laminatkörper, die folgenden Schritte durchgeführt werden:
Bereitstellen eines Hinge,
Verbinden, insbesondere Laminieren, des Hinge und der ersten Laminierfolie, der zumindest einen zweiten Laminierfolie und/oder ein oder mehreren Laminierfolien der ein oder mehreren weiteren Laminierfolien, insbesondere der ersten, zweiten, dritten und/oder vierten Laminierfolie der ein oder mehreren weiteren Laminierfolien, und/oder ein oder mehreren Laminierfolien der ein oder mehreren zusätzlichen Laminierfolien, insbesondere der ersten und/oder zweiten Laminierfolie der ein oder mehreren zusätzlichen Laminierfolien, wobei der Hinge bevorzugt zwischen der zweiten Laminierfolie und der ersten Laminierfolie der ein oder mehreren weiteren Laminierfolien angeordnet wird und/oder zwischen der dritten Laminierfolie der ein oder mehreren weiteren Laminierfolien und/oder der zweiten Laminierfolie der ein oder mehreren zusätzlichen Laminierfolien und der vierten Laminierfolie der ein oder mehreren weiteren Laminierfolien und/oder der zweiten Laminierfolie angeordnet wird, und insbesondere wobei der Hinge, vorzugsweise bei Betrachtung senkrecht auf eine von der ersten Laminierfolie und/oder von der zweiten Laminierfolie der ein oder mehreren weiteren Laminierfolien aufgespannte Ebene, benachbart zu der ersten Laminierfolie und/oder der zweiten Laminierfolie der ein oder mehreren weiteren Laminierfolien und/oder der ersten Laminierfolie der ein oder mehreren zusätzlichen Laminierfolien, angeordnet wird.

Hierbei ist es zweckmäßig, dass der Hinge zumindest mit einer Lage aus Polyvinylchlorid, aus thermoplastischem Polyurethan und/oder aus einem Gewebeband bereitgestellt wird, wobei der Hinge vorzugsweise mit Polyvinylchlorid beschichtet ist und/oder wird, insbesondere so dass beim Verbinden, insbesondere beim Laminieren, des Hinge das Polyvinylchlorid direkt mit den anliegenden Laminierfolien, Schichten und/oder Lagen verbunden wird, insbesondere stoffschlüssig verbunden wird.

Ein Hinge ist vorzugsweise ein Teil, welches eine Verbindung des Laminatkörpers mit weiteren, bevorzugt flächigen, Körpern herstellt. Beispielsweise ist der Hinge ein Teil, welches eine Verbindung des Laminatkörpers als Datenseite, bevorzugt als eine Passkarte eines Passbuchs zur Naht des Passbuchs, welches insbesondere ein Hardcover aufweist, herstellt und bevorzugt zu den restlichen Seiten des Passbuchs herstellt. Insbesondere erfolgt das Einnähen der Datenseite in das Passbuch also mittels des "Hinge", d.h. vorzugsweise über einen flexiblen schmalen Streifen an dem Laminatkörper bzw. an der Datenseite, wobei der Hinge als Verbindungselement und als flexibles Scharnier im Nahtbereich des Passbuchs dient. Es werden vorzugsweise textile, insbesondere textile gewebte oder textile ungewebte Hinges, und/oder nicht-textile Hinges aus PVC und/oder TPU (TPU = Thermoplastisches Polyurethan) und/oder TPE (TPE = Thermoplastische Elastomere) verwendet, die insbesondere vollflächig ausgebildet sind und/oder Durchbrechungen aufweisen.

Hierbei ist es beispielsweise möglich, dass der Hinge benachbart zu der ersten Laminierfolie und/oder der zweiten Laminierfolie der ein oder mehreren weiteren Laminierfolien und/oder der ersten Laminierfolie der ein oder mehreren zusätzlichen Laminierfolien angeordnet wird, wobei Hinge und zweite Laminierfolie und/oder vierte Laminierfolie der ein oder mehreren weiteren Laminierfolien und/oder Hinge und erste Laminierfolie und/oder dritte Laminierfolie der ein oder mehreren weiteren Laminierfolien und/oder zweite Laminierfolie der ein oder mehreren zusätzlichen Laminierfolien vorzugsweise zumindest teilweise überlappen und/oder in direktem Kontakt stehen. Weiter ist es möglich, dass Hinge und die erste Laminierfolie und/oder Hinge und die zweite Laminierfolie der ein oder mehreren weiteren Laminierfolien und/oder erste Laminierfolie der ein oder mehreren zusätzlichen Laminierfolien in direktem Kontakt stehen und/oder nicht in direktem Kontakt stehen.

Weiter hat es sich als vorteilhaft erwiesen, wenn die erste und/oder zweite Oberfläche der erste und/oder zweiten Laminierfolie einen Glanzgrad unter einem Winkel von 60° nach ESAO 2813 von mehr als 90%, vorzugsweise von mehr als 98% aufweist. Untersuchungen haben gezeigt, dass durch eine derartige Wahl des Glanzgrades sichergestellt wird, dass beim Laminieren optische und/oder mechanische Beeinträchtigungen der Dekorlage weiter minimiert werden.

Zum Erreichen einer geeigneten, insbesondere ausreichend glatten Oberfläche zum Erzielen eines sauberen Druckergebnisses, kann es vorteilhaft sein, eine zu raue Oberfläche vorzubehandeln. Dazu könnten dünn aufgetragene Kleberschichten und/oder Primerschichten und/oder Haftvermittlerschichten und/oder mittels Heißprägung oder Kaltprägung aufgebrachte Vorprägungen und/oder z.B. eine thermische Behandlung und/oder eine Kalandrierung geeignet sein. Derartige Beschichtungen oder Behandlungen könnten auch im Register zur Dekorlage aufgetragen werden, wodurch die Eigenschaften des Laminats in den dekorfreien Bereichen nicht beeinflusst wird.

Weiter ist es vorteilhaft, wenn die strahlenhärtbare Kleberschicht eingefärbt ist, insbesondere mit Farbstoffen oder Pigmenten insbesondere transluzent eingefärbt ist. Hierdurch ist es möglich, zusätzliche optische Effekte mittels der strahlenhärtbaren Kleberschicht zu realisieren. Es können auch Effektpigmente eingebracht werden, die beispielsweise unter UV-Bestrahlung fluoreszieren oder unter IR-Bestrahlung in einer anderen Wellenlänge zurückstrahlen.

Weiter ist es vorteilhaft, wenn ein Teil der ersten Flächenbereiche durch Druck der Kleberschicht auf die erste Laminierfolie und ein Teil der ersten Flächenbereiche durch Druck der Kleberschicht auf die Transferfolie bestimmt sind. Die Kleberschichten können dabei unterschiedliche Eigenschaften aufweisen, wie beispielsweise unterschiedliche mechanische Eigenschaften nach dem Härten oder unterschiedliche oder auch keine Pigmente und Farbstoffe aufweisen. Dadurch sind unterschiedliche Eigenschaften im Register zu Teilen der in ersten Flächenbereichen partiell übertragenen Transferlagen realisierbar.

Die ein oder mehreren ersten Teilbereiche können dabei in Form von einem oder mehreren Motivbereichen angeordnet sein, wobei diese Motivbereiche vorzugsweise von einem gedachten und/oder sichtbaren Umriss begrenzt sind. Innerhalb eines Motivbereichs können beliebig viele erste Flächenbereiche und zweite Flächenbereiche angeordnet sein.

Die ein oder mehreren Motivbereiche weisen hierbei vorzugsweise ein oder mehrere in der Dekorlage ausgebildete Motive auf. Vorzugsweise ist die Dekorlage in den jeweiligen ein oder mehreren ersten Teilbereichen außerhalb der ein oder mehreren Motive transparent ausgebildet. Unter transparent wird hierbei vorzugsweise eine Transparenz in dem für den menschlichen Betrachter sichtbaren Wellenlängenbereich von mehr als 80%, bevorzugt von mehr als 90% verstanden.

Die mindestens eine Transferfolie weist vorzugsweise eine Ablöseschicht auf, welche zwischen der Trägerfolie und der Dekorlage angeordnet ist. Mittels dieser Ablöseschichten lässt sich die Ablösekraft zwischen der Trägerfolie und der Dekorlage gezielt einstellen, sodass eine besonders hohe Auflösung und Kantenschärfe bezüglich der transferierten Bereiche der Dekorlage erzielt werden kann.

Vorzugsweise ist die Ablöseschicht Teil der Transferlagen, die übertragen werden. Das Ablösen wird vorzugsweise durch eine oder mehrere dünne Wachsschichten (Dickenbereich 0.01 - 0.2 Mikrometer) zwischen Trägerfolie und Ablöseschicht sichergestellt, sodass sich die Ablöseschicht von der Trägerlage ablösen lässt. Die Ablöseschicht kann dabei insbesondere derart ausgebildet sein, dass sie im Laminierkörper eine gute Haftung zur zweiten Laminierfolie sicherstellt. Die Dekorlage weist vorzugsweise ein oder mehrere Dekorschichten auf. Die Dekorschichten liegen hierbei entweder vollflächig oder partiell in der Dekorlage vor.

Bei den ein oder mehreren Dekorschichten handelt es sich vorzugsweise um ein oder mehrere der folgenden Schichten:
Als Dekorschicht kann eine "HRI-Schicht" eingesetzt werden (HRI = High Refractive Index, hoher Brechungsindex). Bei einer HRI-Schicht handelt es sich um eine dielektrische Schicht mit vergleichsweise einem hohen Brechungsindex, welche hochbrechend und typischerweise im sichtbaren Wellenlängenbereich von 400 nm bis 700 nm weitgehend transparent ist. Derartige HRI-Schichten weisen vorzugsweise einen Brechungsindex auf, welcher höher als 1,6, vorzugsweise höher als 1,8 ist. Eine derartige HRI-Schicht kann beispielswiese aus ZnS oder TiO₂ oder SiOₓ bestehen, welche in einem Vakuums-Bedampfungsverfahren aufgebracht sind. Auch hochbrechende Polymerschichten, insbesondere angereichert mit Nanopartikeln, sind möglich. Derartige Polymerschichten können aufgedruckt und/oder aufgedampft werden.

Bei der Dekorschicht kann es sich um eine Metallschicht handeln, beispielsweise aus Aluminium (Al), Silber (Ag) oder Kupfer (Cu) oder Chrom (Cr). Diese Metallschicht kann hierbei als opake Metallschicht, transluzente Metallschicht oder transparente Metallschicht in der Dekorlage vorgesehen sein. Die Transparenz der Metallschicht kann hierbei durch entsprechende Wahl der Schichtdicke der Metallschicht und/oder durch entsprechende Aufrasterung der Metallschicht eingestellt werden. Weiter ist es auch möglich, dass die Dekorlage mehrere Metallschichten aus unterschiedlichen Materialien und/oder unterschiedliche Transparenz aufweist.

Bei der Dekorschicht kann es sich um eine Lackschicht handeln, welche Farbstoffe und/oder Pigmente aufweist. Hierbei kann die Dekorlage unterschiedliche derartige Lackschichten enthalten, welche insbesondere unterschiedliche Farbstoffe und/oder Pigmente aufweisen. Diese Lackschichten können übereinander und/oder nebeneinander angeordnet sein. Bei den Farbstoffen und/oder Pigmenten kann es sich hierbei weiter auch um lumineszierende und/oder phosphoreszierende Farbstoffe und/oder Pigmente handeln. Vorteilhaft ist weiter insbesondere der Einsatz von transparenten oder transluzenten oder opaken optisch variablen Pigmenten, beispielsweise Dünnfilmschichtpigmente oder Flüssigkristallpigmente mit einem Farbwechseleffekt, welche insbesondere auch mittels eines magnetischen und elektrischen Felds bezüglich ihrer Ausrichtung variiert werden können und damit komplexe optisch variable Effekte realisieren können. Weiter ist auch der Einsatz von thermochromen und/oder elektrochromen Farbstoffen und/oder Pigmenten in den Dekorschichten vorteilhaft.

Die Dekorschicht kann weiter auch aus einer elektrisch leitfähigen Schicht oder magnetischen Schicht bestehen. Derartige Schichten bestehen aus einem elektrisch leitfähigen Material und/oder einem magnetischen Material, beispielsweise aus einem metallischen Material, aus einem elektrisch leitfähigen Polymer oder in einer Bindemittelmatrix eingebundenen elektrisch leitfähigen oder magnetischen Pigmenten oder Partikeln.

Bei der Dekorschicht kann es sich um eine Volumenhologrammschicht handeln, beispielsweise um eine Fotopolymerschicht handeln, in welche ein Transmissions- und/oder ein Reflexionshologramm unter Verwendung eines Hologramm-Masters einbelichtet worden ist.

Bei der Dekorschicht kann es sich um eine Reliefschicht mit einem darin eingebrachten, insbesondere abgeformten Oberflächenrelief handeln.

Diese Reliefschicht besteht vorzugsweise aus einem thermoplastischen und/oder UV-härtbaren Kunststoff, in welche insbesondere mittels eines Replizierwerkzeugs mittels thermischer Replikation und/oder UV-Replikation ein entsprechendes Oberflächenrelief abgeformt ist. Das Oberflächenrelief kann auch mittels Laser eingebracht worden sein. Die Reliefschicht kann auch eine photoempfindliche Schicht sein, in die das Oberflächenrelief mittels Belichtung eingebracht wird, indem die Reliefschicht mit einem Muster unterschiedlicher Lichtstärke belichtet wird und anschließend, je nach Art der Photoempfindlichkeit, die belichteten oder die unbelichteten Bereiche der Reliefschicht insbesondere mittels Lösemitteln weggewaschen bzw. abgelöst werden.

Bevorzugt wird die Reliefschicht bei dem Laminieren mehrerer aufeinanderfolgender Folien umfassend die erste Laminierfolie mit den ein oder mehreren ersten Teilbereichen mit der Dekorlage und die zumindest eine zweite Laminierfolie zu dem Laminatkörper nicht erweicht. Insbesondere liegt die Erweichungstemperatur der Reliefschicht oberhalb der Laminationstemperatur. Vorzugsweise ist die Erweichungstemperatur der Reliefschicht, bevorzugt gemessen nach Prüfmethode VICAT A (10 N), insbesondere bei einer Erwärmungsgeschwindigkeit von 50 K/h, größer als 60°C, bevorzugt größer als 100°C, besonders bevorzugt größer als 130°C.

Hierdurch ist es möglich, dass die Reliefschicht und insbesondere die in der Reliefschicht eingeformten Strukturen während des Laminierens stabil bleibt. Hierbei wird beispielsweise die Brillanz der Dekorlage erhalten, beispielsweise indem eine darin abgeformte Reliefstruktur erhalten bleibt, was insbesondere eine hohe Fälschungssicherheit gewährleistet.

Als Oberflächenrelief wird hierbei vorzugsweise eines der folgenden Oberflächenreliefe oder eine Kombination aus zwei oder mehreren der folgenden Oberflächenreliefe vorgesehen:
Diffraktives Oberflächenrelief, holographisches Oberflächenrelief, Beugungsgitter erster Ordnung, Beugungsstruktur Nullter Ordnung, Blaze-Gitter, achromatisches Oberflächenrelief, Oberflächenrelief in Form einer Linse und/oder eines Linsenrasters, eine Anordnung von Mikrospiegeln, Mikroprismen, Mikrofacetten oder einer Freiformfläche, Mattstruktur, insbesondere isotrope oder anisotrope Mattstruktur.

Die Reliefschicht weist hierbei vorzugsweise unterschiedliche Teilbereiche auf, in welchen unterschiedliche Oberflächenreliefe abgeformt sind, welche sich insbesondere in einem oder mehreren Reliefparametern unterscheiden und/oder aus unterschiedlichen der oben angeführten Oberflächenreliefs bestehen. Dabei können sich auch mehrere der oben angeführten Oberflächenreliefs überlagern.

Die Dekorlage weist weiter vorzugsweise ein oder mehrere Haftvermittlungsschichten und/oder Barriereschichten und/oder Stabilisierungsschichten und/oder Schutzschichten auf. Diese Schichten können hierbei ebenfalls vollflächig oder partiell in der Dekorlage vorliegen.

Bevorzugt wird die Stabilisierungsschicht bei dem Laminieren mehrerer aufeinanderfolgender Folien umfassend die erste Laminierfolie mit den ein oder mehreren ersten Teilbereichen mit der Dekorlage und die zumindest eine zweite Laminierfolie zu dem Laminatkörper nur sehr gering erweicht. Insbesondere liegt die Erweichungstemperatur der Stabilisierungsschicht oberhalb der Laminationstemperatur. Vorzugsweise ist die Erweichungstemperatur der Stabilisierungsschicht, insbesondere bei einer Erwärmungsgeschwindigkeit von 50 K/h, bevorzugt gemessen nach Prüfmethode VICAT A (10 N), größer als 60°C, bevorzugt größer als 100°C, besonders bevorzugt größer als 130°C.

Hierdurch ist es möglich, dass die Stabilisierungsschicht bei dem Laminieren mehrerer aufeinanderfolgender Folien umfassend die erste Laminierfolie mit den ein oder mehreren ersten Teilbereichen mit der Dekorlage und die zumindest eine zweite Laminierfolie zu dem Laminatkörper stabil bleibt. Hierbei kann insbesondere die Brillanz der Dekorlage erhalten bleiben.

Die Dekorlage kann insbesondere eine Kombination aus mindestens einer vollflächig aufgebrachten Schicht und mindestens einer partiell ausgebildeten Schicht aufweisen. Beispielsweise kann die vollflächig ausgebildete Schicht eine transparente Schutzschicht und/oder eine insbesondere transparente Stabilisierungsschicht und/oder eine insbesondere transparente Haftvermittlerschicht und/oder eine transparente oder transluzente HRI-Schicht sein. Die partiell ausgebildete Schicht kann dabei insbesondere mindestens ein Motiv in Form eines Musters und/oder einer Grafik und/oder eines Codes und/oder von einem oder mehreren alphanumerischen Zeichen ausbilden.

Beispielsweise kann die mindestens eine partiell ausgebildete Schicht eine Metallschicht und/oder eine Farbschicht und/oder eine HRI-Schicht sein.

Bevorzugt sind die vollflächig ausgebildeten Schichten der Dekorlage insgesamt transparent und so ausgebildet, dass sie die partiell ausgebildeten Schichten vollständig und allseitig überlappen.

Bevorzugt ist das jeweilige Motiv in mindestens einer, bevorzugt in allen flächigen Dimensionen kleiner ausgebildet als der jeweilige Motivbereich der strahlenhärtenden Kleberschicht.

Bevorzugt wird die Dekorlage so auf die strahlenhärtende Kleberschicht appliziert, dass der Motivbereich der strahlenhärtenden Kleberschicht das Motiv der Dekorlage in mindestens einer flächigen Dimension, bevorzugt aber allseitig überragt. Das heißt, dass in dem jeweiligen Motivbereich das vollständige Motiv sowie darüber hinausragende, transparent ausgebildete Flächenbereiche der Dekorlage übertragen werden. Diese transparent ausgebildeten Flächenbereiche sollen nach der Übertragung der Dekorlage insbesondere optisch nicht mehr wesentlich in Erscheinung treten und damit das Motiv praktisch ohne sichtbaren Rand übertragen werden.

Vorzugsweise wird bei der Herstellung des Laminier-Inlays oder des Laminatkörpers nicht nur eine Transferfolie und/oder strahlenhärtbarer Kleber, sondern zwei oder mehrere Transferfolien und/oder strahlenhärtbare Kleber eingesetzt. Die vorhergehend beschriebenen Schritte des Aufbringens und Abziehens der mindestens einen Transferfolie und optional des Bedruckens mit einem strahlenhärtbaren Kleber werden damit vorzugsweise mehrfach wiederholt. Hierdurch ist es möglich, in dem Laminier-Inlay bzw. dem Laminatkörper unterschiedliche optische Effekte, welche von unterschiedlichen Dekorlagen unterschiedlicher Transferfolien und/oder unterschiedlichen strahlenhärtbaren Klebern bereitgestellt werden, auf effiziente und kostengünstige Weise miteinander zu kombinieren, ohne auf die jeweils erforderlichen unterschiedlichen Applikationsprozesse Rücksicht nehmen zu müssen.

Die Dekorlagen unterschiedlicher Transferfolien können hierbei nebeneinander, teilweise überlappend oder vollständig überlappend auf der ersten Laminierfolie vorgesehen sein.

So ist es vorteilhaft, als mindestens eine Transferfolie zwei oder mehrere Transferfolien bereitzustellen, die zwei oder mehrere Transferfolien auf die erste Oberfläche der ersten Laminierfolie aufzubringen und von der ersten Laminierfolie abzuziehen, sodass in den ein oder mehreren ersten Teilbereichen die Dekorlage zumindest einer der zwei oder mehreren Transferfolien von der jeweiligen Trägerfolie abgelöst wird und auf der ersten Oberfläche der ersten Laminierfolie verbleibt. Der strahlenhärtbare Kleber kann hierbei in jeweils zugeordneten ein oder mehrerer ersten Zonen auf die erste Oberfläche der Laminierfolie gleichzeitig oder nacheinander aufgedruckt werden. Anschließend können die Laminierfolien gleichzeitig oder nacheinander auf die erste Oberfläche der ersten Laminierfolie aufgebracht werden. Das Abziehen der Trägerfolien der Transferfolie kann anschließend gleichzeitig und nacheinander erfolgen. Weiter ist es auch möglich, die Kleberschicht für zwei oder mehrere Transferfolien auf die erste Oberfläche der ersten Laminierfolie aufzudrucken und anschließend diese Transferfolie gleichzeitig oder nacheinander auf die erste Oberfläche der Laminierfolie aufzubringen.

Besonders vorteilhaft ist hierbei, wenn die zwei oder mehreren ersten Transferfolien zueinander unterschiedliche Dekorlagen aufweisen, welche sich insbesondere in Bezug auf die vorhandenen Dekorschichten oder die Ausformung der Dekorschichten unterscheiden. So kann beispielsweise eine erste Transferfolie eine Dekorlage mit einer Lackschicht enthaltend Pigmente und/oder Farbstoffe, insbesondere optisch variable Pigmente und/oder Farbstoffe aufweisen und eine zweite Transferfolie eine Reliefschicht mit einer eingebrachten diffraktiven Reliefstruktur und einer HRI-Schicht aufweisen. Weiter kann eine dritte Transferfolie beispielsweise eine Dekorschicht enthaltend ein oder mehrere semitransparente und/oder opake insbesondere musterförmig ausgeformte Metallschichten aufweisen. Auch die dritte Transferfolie kann zusätzlich eine Reliefschicht mit einer eingebrachten diffraktiven Reliefstruktur aufweisen.

Hierbei ist es vorteilhaft, wenn von den jeweiligen Transferfolien nicht nur ein erster Teilbereich, sondern eine Gruppe umfassend zwei oder mehrere erste Teilbereiche, insbesondere eine Vielzahl von ersten Teilbereichen abgelöst werden und derartige Gruppen von ersten Teilbereichen unterschiedlicher Dekorlagen nebeneinander und/oder überlappend auf die erste Laminierfolie zu transferieren. Diese zwei oder mehreren Gruppen von ersten Teilbereichen bilden hierbei vorzugsweise Teilmotive eines Gesamtmotivs aus oder wiederholen eine Information in unterschiedlichen optischen Gestaltungen. Hierdurch werden die mittels unterschiedlicher Dekorlagen hergestellten Informationen miteinander "verwoben" und hierdurch die Fälschungssicherheit weiter verbessert.

Weiter ist es vorteilhaft, die erste und/oder die zweite Oberfläche der ersten und/oder zweiten Laminierfolie und/oder die Dekorschicht mit ein oder mehreren Beschichtungen zu bedrucken, insbesondere mit Registermarken, Lackschichten, Farbschichten, Schichten enthaltend Pigmente und/oder Farbstoffe, insbesondere optisch variable Pigmente, Lumineszenzstoffe und/oder elektrisch leitfähigen oder magnetischen Beschichtungen zu bedrucken. Hierdurch kann die Fälschungssicherheit weiter verbessert werden.

Weiter ist es auch möglich, dass die Laminierfolie bereits vor dem Transfer der Dekorlagen verschiedene Merkmale, wie beispielsweise weitere applizierte Transferlagen und/oder Aufdrucke und/oder Aussparungen und/oder Stanzungen und/oder Markierungen aufweist, die in vorgängigen Arbeitsschritten aufgebracht wurden. Ein registerhaltiges Aufbringen der Dekorlagen mittels strahlungshärtendem Kleber zu diesen Merkmalen ist dabei besonders vorteilhaft.

Weiter ist es auch möglich, dass auf die Laminierfolie nach dem Transfer der Dekorlagen verschiedene Merkmale, wie beispielsweise weitere applizierte Transferlagen und/oder Aufdrucke und/oder Aussparungen und/oder Stanzungen und/oder Markierungen in nachgängigen Arbeitsschritten aufgebracht und/oder eingebracht werden. Ein registerhaltiges Aufbringen dieser Merkmale zu den Dekorlagen ist dabei besonders vorteilhaft.

Weiter ist es vorteilhaft, ein oder mehrere der folgenden Schritte bei der Herstellung des Laminatkörpers oder der Laminierfolie durchzuführen:
Reinigung der ersten Oberfläche der ersten und/oder zweiten Laminierfolie, insbesondere vor Bedruckung mit dem strahlenhärtbaren Kleber, vor dem Laminieren oder vor dem Aufbringen der Transferfolie,

Einbringung von Stanzungen in die erste Oberfläche der ersten und/oder zweiten Laminierfolie und/oder die Dekorschicht,

Oberflächenbehandlung der ersten Oberfläche der ersten und/oder zweiten Laminierfolie und/oder der Dekorschicht, insbesondere mittels Coronabehandlung und/oder Plasmabehandlung, insbesondere vor Bedruckung mit der strahlenhärtbaren Kleberschicht oder vor Durchführung des Laminierverfahrens,

Tempern des Laminatkörpers, der ersten Laminierfolie, der zweiten Laminierfolie oder des Laminier-Inlays,

Konfektionierung und/oder Schneiden des Laminatkörpers, der ersten Laminierfolie und/oder der zweiten Laminierfolie.

Im Folgenden wird die Erfindung anhand von mehreren Ausführungen unter Zuhilfenahme der beiliegenden Zeichnungen beispielhaft erläutert:
Fig. 1 zeigt den schematischen Aufbau eines Laminatkörpers.
Fig. 2 zeigt den schematischen Aufbau eines Laminier-Inlays.
Fig. 3 zeigt den schematischen Aufbau einer Transferfolie.
Fig. 4 zeigt den schematischen Aufbau einer Herstellungsvorrichtung zur Herstellung eines Laminier-Inlays.
Fig. 5 zeigt den schematischen Aufbau einer Laminierfolie zur Verwendung in der Bearbeitungsvorrichtung nach Fig. 4.
Fig. 6a und Fig. 6b verdeutlichen in Schnittdarstellung und in Draufsicht eine Bedruckung einer Laminierfolie mit einem strahlenhärtbaren Kleber.
Fig. 7a und Fig. 7b verdeutlichen in Schnittdarstellung und in Draufsicht den Aufbau einer Transferfolie.
Fig. 8a und Fig. 8b verdeutlichen in Schnittdarstellung und in Draufsicht ein Aufbringen einer Transferfolie auf eine Laminierfolie.
Fig. 9 verdeutlicht anhand einer schematischen Schnittdarstellung eine Härtung einer strahlenhärtbaren Kleberschicht, welche zwischen einer Laminierfolie und einer Transferfolie angeordnet ist.
Fig. 10a und Fig. 10b verdeutlichen anhand einer Schnittdarstellung und einer Draufsicht ein Abziehen einer Transferfolie von einer Laminierfolie.
Fig. 11, Fig. 12 und Fig. 13 zeigen eine schematische Draufsicht auf ein Sicherheitsdokument.

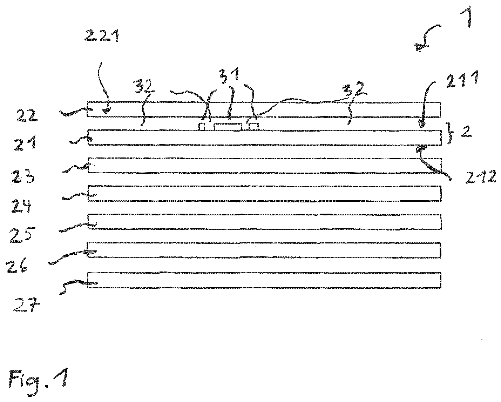

Fig. 1 zeigt den grundsätzlichen Schichtaufbau eines Laminatkörpers 1. Der Laminatkörper 1 ist insbesondere in Form einer Karte, beispielsweise einer Bankkarte, Ausweiskarte oder Kreditkarte oder Banknote oder eines Sicherheitsdokuments, beispielsweise einer Einlageseite eines Passbuches ausgebildet.

Der Laminatkörper 1 weist mehrere aufeinanderfolgende Folien auf, welche mittels eines Laminierverfahrens zu dem Laminatkörper laminiert sind. Von diesen Folien sind in Fig. 1 beispielhaft mehrere Laminierfolien 22 bis 27 sowie ein Laminier-Inlay 2 gezeigt.

Das Laminier-Inlay 2 weist eine Laminierfolie 21 mit einer erste Oberfläche 211 und einer dieser gegenüberliegenden zweiten Oberfläche 212 auf. Auf der ersten Oberflächen 211 der Laminierfolie 211 ist in ersten Teilbereichen 31 zumindest eine von einer Trägerfolie zumindest einer Transferfolie abgelöste Dekorlage und eine zwischen der Dekorlage und der ersten Oberfläche 211 der Laminierfolie 21 angeordnete strahlenhärtbare Kleberschicht vorgesehen, die zumindest teilweise gehärtet ist. In zweiten Teilbereichen 32 ist auf der ersten Oberfläche 211 der Laminierfolie 21 die zumindest eine Dekorlage nicht vorgesehen und mit der Trägerfolie abgezogen.

Die Laminierfolien 21 bis 27 bestehen vorzugsweise jeweils aus einer thermoplastischen Kunststofffolie, welche unter den Bedingungen des eingesetzten Laminierverfahrens zumindest teilweise aufschmelzen, sodass beim Laminierverfahren die aufeinander liegenden Oberflächen der Laminierfolien zumindest teilflächig, vorzugsweise vollflächig miteinander verschmolzen werden. Hierdurch wird ein entsprechender inniger Schichtverbund zwischen den Schichten des Laminatkörpers 1 erzielt, welcher zu einer besonders hohen Fälschungssicherheit sowie Widerstandsfähigkeit gegenüber Umwelteinflüssen führt.

Zumindest ein Teil der Laminierfolien 21 bis 27, vorzugsweise sämtliche der Laminierfolien 21 bis 27 bestehen hierbei vorzugsweise aus Polycarbonat. Vorzugsweise weist so der Laminierkörper 1 Polycarbonat als Hauptbestandteil auf. Ein derartiger Laminierkörper zeichnet sich durch eine besonders hohe Kratz-, Abrieb- und Chemikalienbeständigkeit und eine besonders gute Zwischenschichthaftung aus, und hat somit eine erheblich höhere Gebrauchstauglichkeit im Vergleich zu üblichen Sicherheitsdokumenten. Weiter ist es jedoch auch möglich, dass ein oder mehrere der Laminierfolien 21 bis 27 aus einem anderen Kunststoffmaterial, beispielsweise aus PET, PET-G, ABS oder PVC bestehen.

Die Laminierfolien 21 bis 27 weisen vorzugsweise eine Schichtdicke zwischen 30 µm und 400 µm, insbesondere zwischen 40 µm bis 130 µm auf.

So bestehen beispielsweise die Laminierfolien 21, 22, 23 und 27 jeweils aus einer Polycarbonatfolie einer Schichtdicke von 50 µm, die Laminierfolie 24 und 26 aus einer mehrschichtigen Kunststofffolie einer Schichtdicke von 150 µm und die Laminierfolie 25 aus einer mehrschichtigen Laminierfolie, beispielsweise einer Schichtdicke von 350 µm, in welche noch weitere Sicherheitsmerkmale, beispielsweise ein Transponder-Chip und/oder eine Antenne, die zur kontaktlosen Datenkommunikation integriert sind.

Weiter ist es auch möglich, dass ein oder mehrere der Laminierfolien 21 bis 27 teilflächig bedruckt ist oder an den jeweiligen Oberflächen mit einer Haftvermittlungsschicht versehen ist, welche die Zwischenschichthaftung zur benachbarten Laminierfolie weiter verbessert. Zur Verbesserung der Zwischenschichthaftung kann alternativ oder zusätzlich auf der jeweiligen Oberfläche eine Corona- und/oder Plasmabehandlung durchgeführt worden sein.

Die Laminierfolien 22 bis 27 und das Laminier-Inlay 2 werden beispielsweise in der in Fig. 1 gezeigten Schichtreihenfolge aufeinander aufgebracht und sodann unter Einsatz von Hitze und Druck zu dem Laminatkörper 1 laminiert. Das einzusetzende Laminierverfahren und der hierbei zu verwendende Druck und Temperatur sind hierbei in Abhängigkeit von der Schichtenfolge und dem Aufbau der Laminierfolien 21 bis 27 zu wählen. Vorzugsweise wird hierbei ein Laminierverfahren eingesetzt, bei dem die in Fig. 1 gezeigte Abfolge von Schichten zwischen zwei beheizten Rollen eines Rollenlaminators oder zwischen den beheizten Platten einer Hubpresse eingeführt werden und beispielsweise im Falle von Polycarbonat (PC) mittels eines Drucks von 10 N/cm² bis 400 N/cm², vorzugsweise 40 N/cm² bis 200 N/cm² und einer Temperatur von mehr als 150°C, vorzugsweise zwischen 160°C und 210°C zu dem Laminatkörper 1 laminiert werden. Andere Materialien, wie beispielsweise PVC können davon abweichende Einstellungen aufweisen.

Wie in Fig. 1 gezeigt, ist hierbei das Laminier-Inlay 2 in dem Laminator zugeführten Schichtstapel derart angeordnet, dass die ersten Teilbereiche 31 mit der Dekorlage und der strahlenhärtbaren Kleberschicht zwischen der Laminierfolie 21 und der Laminierfolie 22 vorgesehen sind. Weiter sind in zweiten Teilbereichen 32 vorzugsweise, wie in Fig. 1 gezeigt, keine weiteren Schichten zwischen den beiden Laminierfolien 21 und 22 vorgesehen, sodass in den zweiten Teilbereichen 32 beim Laminieren sich die gegenüberliegenden Oberflächen die Laminierfolien 21 und 22 berühren können und somit vorzugsweise in den zweiten Teilbereichen 32 die Oberfläche der Laminierfolie 21 und 22 miteinander verschmolzen werden. Für das Aufschmelzen der Laminierfolien 21 und 22 werden weiter die in den ersten Teilbereichen 31 vorgesehene Dekorlage bzw. Dekorlagen und die dort vorgesehene strahlenhärtbare Kleberschicht in die Laminierfolien 21 und 22 eingesenkt und damit vorzugsweise in einem monolithischen Körper bestehend aus Polycarbonat eingebettet. Während dieses Prozesses wird die mindestens eine Dekorlage von der strahlenhärtbaren Kleberschicht vor einer Degeneration und insbesondere zu starken Verformung geschützt.

Wie bereits oben ausgeführt, wird hierdurch ermöglicht, in der zumindest einen Dekorlage Dekorschichten einzusetzen, welche über eine geringe Eigenstabilität verfügen oder bei denen die durch diese verwirklichten optischen Effekte besonders anfällig für die beim Laminierverfahren auftretenden Druck- und Temperaturbelastungen sind.

Das Flächenverhältnis der ein oder mehreren ersten Teilbereiche 31 zur Summe aus den ein oder mehreren ersten und zweiten Teilbereichen 32 beträgt hierbei vorzugsweise nicht mehr als 80% und insbesondere zwischen 3% und 80%. Weiter ist es vorteilhaft, das Flächenverhältnis der ersten Teilbereiche 31 zu den zweiten Teilbereichen 32 so zu wählen, dass die Haftung zwischen der Laminierfolie 21 und der Laminierfolie 22 nach dem Laminieren mehr als 3,0 vorzugsweise mehr als 5 Nm beträgt. Diese insbesondere gemessen bei einem Abschälwinkel von 90°, einer Schälgeschwindigkeit von 300 mm/min und einer Streifenbreite von 10 mm. Die ersten und/oder zweiten Teilbereiche 31 und 32 weisen hierbei vorzugsweise eine Breite von 0,1 mm oder mehr, insbesondere eine Breite von 0,2 mm oder mehr auf. Weiter ist es vorteilhaft, wenn ein oder mehrere der ersten Teilbereiche 31 und/oder der zweiten Teilbereiche 32 Rasterelemente eines Rasters ausbilden, welches vorzugsweise eine Vielzahl von Rasterelementen, vorzugsweise mehr als 10, weiter bevorzug mehr als 20 Rasterelemente umfasst.

Durch diese Maßnahmen wird sichergestellt, dass nach der Laminierung ausreichend Haftbrücken zwischen den Laminierfolien 21 und 22 ausgebildet werden, um eine Beeinträchtigung des Laminatkörpers 1 im täglichen Einsatz sowie eine Beeinträchtigung der Fälschungssicherheit des Laminatkörpers 1 zu verhindern, andererseits ein Dekor von guter optischer Qualität in dem Laminatkörper 1 bereitzustellen.

Das Laminier-Inlay 2 kann auch als Decklage im Laminierkörper 1 eingesetzt werden, wobei die Transferlagen vorteilhafterweise auf der Innenseite liegen und durch die erste Laminierfolie 21 geschützt sind. Der Betrachter sieht die Transferlagen somit seitenverkehrt durch die Kleberschicht hindurch. Es können auch mehrere Transferlagen auf unterschiedlichen Laminierfolien aufgebracht sein und in unterschiedlichen Abständen von der Oberfläche des Laminierkörpers vorliegen. Ebenso können Laminierlagen auf beiden Seiten der ersten Laminierfolie 21 aufgebracht sein, vorteilhafterweise in relativer Registerhaltigkeit zueinander.

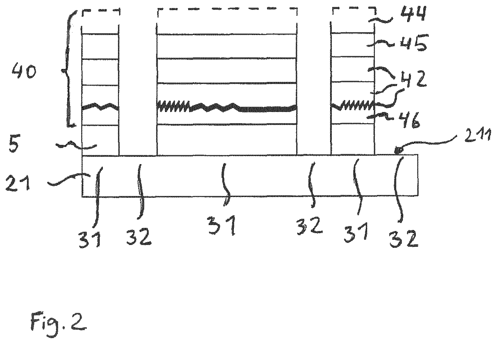

Fig. 2 verdeutlicht den schematischen Aufbau des Laminier-Inlays 2:
Das Laminier-Inlay 2 weist die Laminierfolie 21, eine strahlenhärtbare Kleberschicht 5 und eine Dekorlage 40 auf, welche in ein oder mehreren ersten Teilbereichen 31 vorgesehen ist und in den ein oder mehreren zweiten Teilbereichen 32 nicht vorgesehen ist.

Wie in Fig. 2 dargestellt, ist in den ersten Teilbereichen 31 die strahlenhärtbare Kleberschicht 5 vorzugsweise deckungsgleich und kongruent zu der Dekorlage 40 angeordnet. Es ist jedoch auch möglich, dass die strahlenhärtbare Kleberschicht 5 nicht absolut deckungsgleich und kongruent zu der Dekorlage 40 angeordnet ist, sondern geringfügig großflächiger oder kleinflächiger als die Dekorlage 40 ausgebildet ist. Die strahlenhärtbare Kleberschicht 5 kann damit beispielsweise die Teilbereiche 31 nicht vollständig ausfüllen oder auch geringfügig in die zweiten Teilbereiche 32 hineinragen.

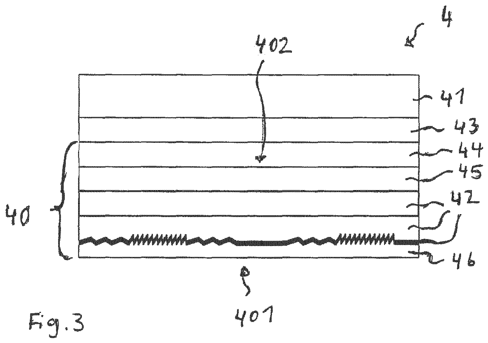

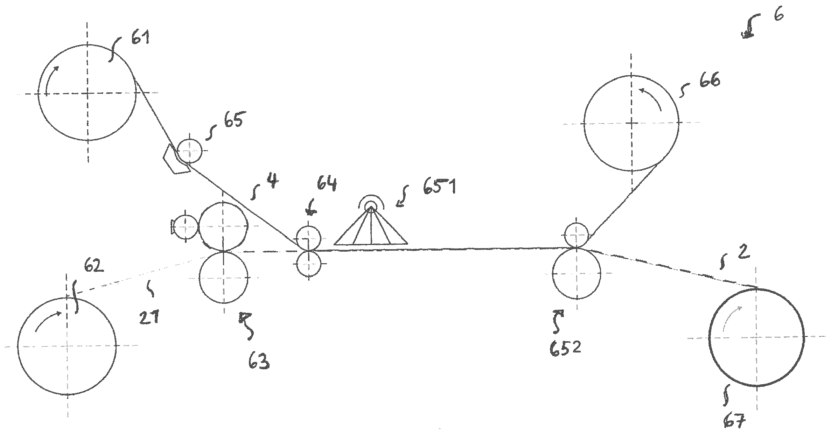

Die in den ersten Teilbereichen 31 vorgesehene Dekorlage 40 ist von der Trägerfolie einer oder mehrerer unterschiedlicher Transferfolien abgelöst und weist zumindest eine Dekorschicht auf. In dem Ausführungsbeispiel nach Fig. 2 ist die Dekorlage 40 von der in Fig. 3 gezeigten Transferfolie 4 abgelöst und weist mehrere Dekorschichten 42, eine Haftvermittlungsschicht 46 und eine Schutzschicht 45 und eine optionale Trennschicht oder Haftvermittlungsschicht 44 auf.

Die Transferfolie 4 weist eine Trägerfolie 41 und die von der Trägerfolie ablösbare Dekorlage 40 auf, welche zumindest eine Dekorschicht 42 aufweist. In dem Ausführungsbeispiel nach Fig. 2 und Fig. 3 weist die Transferfolie 4 weiter noch zusätzliche optionale Schichten, nämlich ein oder mehrere Ablöseschichten 43, die Trennschicht und/oder Haftvermittlungsschicht 44, die Schutzschicht 45 und die Haftvermittlungsschicht 46 auf. Auf diese Schichten könnte auch verzichtet werden.

Die Trägerfolie 41 besteht vorzugsweise aus einer Kunststofffolie. Diese Kunststofffolie weist vorzugsweise auf ihrer zur Trägerlage orientierten Oberfläche eine besonders geringe Oberflächenrauigkeit, insbesondere eine Oberflächenrauigkeit von weniger als 0,5 µm auf. Die Trägerfolie 41 besteht vorzugsweise aus einer PET-Folie und weist beispielsweise eine Schichtdicke zwischen 15 µm und 200 µm, beispielsweise 19 µm auf.

Die Ablöseschicht 43 weist vorzugsweise mehrere dünne Schichten auf, welche die Ablösekraft zwischen der Dekorlage 40 und der Trägerfolie 41 reduzieren. Die Ablöseschicht 43 besteht hier beispielsweise aus einer oder mehreren Wachsschichten mit jeweiligen Dicken je Wachsschicht im Bereich von 0,05 g/m² bis 0,2 g/m². Die Ablöseschicht 44 besteht beispielsweise aus einer dünnen Lackschicht, welche mit einem Auftragsgewicht von 0,5 g/m² bis 1,5 g/m² aufgebracht wird. Die Ablöseschicht 44 kann als Teil der Dekorlage 40 zumindest teilweise mit übertragen werden und/oder auf der Trägerfolie 41 verbleiben und mit abgezogen werden.

Die Trennschicht und/oder Haftvermittlungsschicht 44 unterstützt zusätzlich das Abtrennen der Dekorlage 40 von der Trägerfolie 41 und/oder ein späteres Überdrucken der transferierten Dekorlage 40.

Die Schutzschicht 45 besteht vorzugsweise aus einer Lackschicht, welche mit einem Flächengewicht von 0,7 g/m² bis 2,1 g/m² aufgebracht wird und insbesondere ein oder mehrere vernetzende Komponenten enthält.

Die Dekorschichten 42 bestehen vorzugsweise aus einem oder mehreren der bereits vorhergehend beschriebenen Dekorschichten und sind jeweils partiell oder auch vollflächig ausgebildet und bestehen so beispielsweise aus einer zumindest partiell ausgebildeten HRI-Schicht, einer Metallschicht, einer Lackschicht, einer Schicht enthaltend Farbstoffe und/oder Pigmente, insbesondere optisch variable Pigmente, einer Volumenhologrammschicht, einer elektrisch leitfähigen Schicht, einer magnetischen Schicht und/oder einer Reliefschicht mit eingebrachtem Oberflächenrelief.

In dem Ausführungsbeispiel nach Fig. 3 ist so beispielsweise eine Reliefschicht vorgesehen, in welche, wie in Fig. 3 angedeutet, ein Oberflächenrelief abgeformt ist. Dieses Oberflächenrelief besteht bereichsweise aus unterschiedlichen Reliefstrukturen, beispielsweise unterschiedlichen diffraktiven Gittern oder unterschiedlichen Typen von Reliefstrukturen. Beispielsweise einem ersten Bereich mit einer Mattstruktur, insbesondere einer anisotropen Mattstruktur, einem zweiten Bereich mit einem Beugungsgitter, welches vornehmlich einen ersten optisch variablen Effekt generiert, einem dritten Bereich mit einem Beugungsgitter, welches als Beugungsstruktur Nullter Ordnung beispielsweise beim Drehen einen Farbwechseleffekt generiert und einen vierten Bereich mit einer Reliefstruktur, welche als Blaze-Gitter oder Mikrolinsenanordnung ausgebildet ist und einen achromatisch, optisch variablen Effekt generiert. Diese Dekorschicht ist weiter, wie auch in Fig. 3 angedeutet, beispielsweise mit einer HRI-Schicht und/oder Metallschicht als weitere Dekorschicht unterlegt. Die HRI-Schicht und/oder Metallschicht kann hierbei teilflächig oder vollflächig ausgebildet sein und transparent, semitransparent oder opak ausgebildet sein und so entsprechend optische Effekte in Auflichtbetrachtung und/oder Durchlichtbetrachtung generieren. Weiter ist oberhalb der Reliefschicht als Dekorschicht 42 eine Lackschicht enthaltend Farbstoffe und/oder Pigmente vorgesehen, welche insbesondere optisch variable Pigmente in Form von Interferenzschichtpigmenten aufweist. Diese Schicht ist vorzugsweise nicht vollflächig, sondern partiell und musterförmig ausgebildet und kann weiter opake, transluzente oder transparente Eigenschaften aufweisen und so entsprechende in den jeweiligen Bereichen gekoppelte oder entkoppelte optische Effekte in Auflicht- oder Durchlichtbetrachtung generieren.

Die Haftvermittlungsschicht 46 besteht beispielsweise aus einer Primerschicht, welche in einem Flächenauftragsgewicht von 0,02 g/m² bis 1,0 g/m² aufgebracht wird.

Wie bereits oben ausgeführt, kann auf die Schutzschicht 45 sowie die Haftvermittlungsschicht 46 auch verzichtet werden.

Die Dekorlage 40 weist eine von der Trägerfolie 41 abgewandte Oberfläche 401 und eine der Trägerfolie 41 zugewandte Oberfläche 402 auf.

Zur Herstellung des in Fig. 2 verdeutlichten Laminier-Inlays 2 wird nun die Oberfläche 211 der Laminierfolie 21 und/oder die Oberfläche 401 der Dekorlage 40 der Transferfolie 4 mit einem strahlenhärtbaren Kleber bedruckt. Dies derart, dass der strahlenhärtbare Kleber in ein oder mehreren ersten Zonen auf die jeweilige Oberfläche 211 der Laminierfolie 21 und/oder der Oberfläche 401 der Dekorlage aufgebracht wird und in den ein oder mehreren ersten Zonen die strahlenhärtbare Kleberschicht 5 ausbildet. In ein oder mehreren zweiten Zonen wird der strahlenhärtbare Kleber hingegen nicht auf die jeweilige Oberfläche 211 der Laminierfolie 21 und/oder 401 der Dekorlage 40 aufgebracht.

Anschließend wird die Transferfolie 4 auf die Oberfläche 211 der Laminierfolien 21 aufgebracht. Dies derart, dass in mindestens einem Teilbereich der ein oder mehreren ersten Zonen mit der strahlenhärtbaren Kleberschicht 5 zumindest ein Teilbereich der ein oder mehreren ersten Zonen, in denen die strahlenhärtbare Kleberschicht 5 nicht aufgebracht ist, zwischen der Oberfläche 401, der Dekorlage 40 und der Oberfläche 211 der Laminierfolie 2 angeordnet ist. Anschließend erfolgt vorzugsweise eine zumindest teilweise Härtung der strahlenhärtbaren Kleberschicht 5, wodurch in den ersten Zonen mit der strahlenhärtbaren Kleberschicht 5 die Haftung zwischen der Transferfolie 4 und der Laminierfolie 21 deutlich erhöht wird. Anschließend wird die Transferfolie 4 von der Laminierfolie 21 abgezogen, wobei in den ein oder mehreren ersten Teilbereichen 31 die Dekorlage beim Abziehen von der Trägerfolie 41 abgelöst und auf der Laminierfolie 21 verbleibt und in den ein oder mehreren zweiten Teilbereichen 32 der Laminierfolie der Dekorlage 40 auf der Trägerfolie verbleibt und mit der Trägerfolie 41 abgezogen wird.

Beim Abziehen "bricht" die Dekorlage 40 im Grenzbereich zwischen den ersten und zweiten Zonen, aufgrund der unterschiedlichen Hafteigenschaften der Dekorlage 40 im Bereich der ersten Zonen und zweiten Zonen. Hierdurch ergibt sich der bereits oben beschriebene Effekt, dass die ersten Zonen und ersten Teilbereiche 31 sowie zweiten Zonen und zweiten Teilbereiche 32 im Wesentlichen übereinstimmen, sich hier jedoch geringfügige Abweichungen aufgrund des Bruchkantenverlaufs an den Grenzlinien ergeben können.

Die Durchführung dieses Verfahrens wird nun im Folgenden detailliert basierend auf den Figuren Fig. 4 bis Fig. 10b beschrieben:

Fig. 4 verdeutlicht beispielhaft Herstellungsschritte zur Herstellung eines Laminier-Inlays 2 sowie eine hierzu eingesetzte Herstellungsvorrichtung 6:
Die in Fig. 4 gezeigte Herstellungsvorrichtung 6 weist eine Abspulvorrichtung 61 sowie eine Abspulvorrichtung 62 auf, welche jeweils eine auf einer Vorratsrolle aufgespulte Transferfolie 4 bzw. Laminierfolie 21 sowie einen Antrieb und/oder eine Steuervorrichtung umfasst, mittels denen die Transferfolie 4 bzw. die Laminierfolie 21 von der Vorratsrolle abgespult wird.

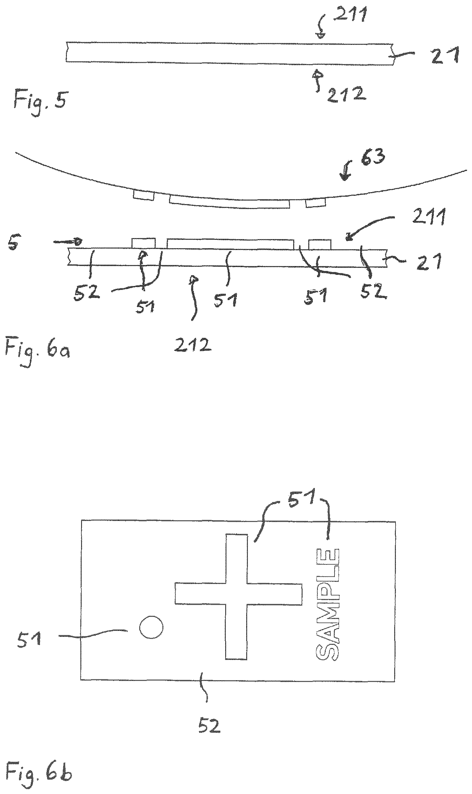

Fig. 5 verdeutlicht nun einen Ausschnitt aus der von der Abspulvorrichtung 62 abgespulten Laminierfolie 211. Diese weist zwei gegenüberliegende Oberflächen 211 und 212 auf, wie in Fig. 5 angedeutet.

Bei der Laminierfolie 21 handelt es sich vorzugsweise um eine Folie aus einem thermoplastischen Kunststoff, vorzugsweise eine Folie enthaltend Polycarbonat (PC) als Hauptbestandteil. Die Laminierfolie 21 besteht so beispielsweise aus einer Polycarbonatfolie mit einer Dicke zwischen 30 µm und 400 µm, bevorzugt zwischen 40 µm und 130 µm.

Die Laminierfolie 21 weist vorzugsweise zumindest eine Oberfläche auf, welche so ausgestaltet ist, dass sie sich mit dem UV-härtbaren Kleber mit einer ausreichend guten Druckqualität bedrucken lässt und nach dem Härten des UV-härtbaren Klebers einen guten Verbund sowohl mit der Dekorlage der Transferfolie 4, als auch in einem späteren Laminationsprozess mit weiteren Laminierfolien ermöglicht.

Unter einer ausreichend guten Druckqualität wird hier insbesondere verstanden, dass die Linien bis zu 0,2 mm Breite, vorzugsweise bis 0,1 mm Breite ohne Unterbrüche in der Linie druckbar sind. Dies erlaubt Schriften zu realisieren bis zu einer Schriftgröße von 1 Punkt, insbesondere bis zu einer Schriftgröße von 2 Punkt. Weiterhin müssen Flächen und Linien deckend druckbar sein, ohne Löcher oder doppelte Kanten (Quetschränder, insbesondere beim Flexodruck) oder Kanten, welche ausschmieren.

Um eine entsprechend gute Druckqualität zu erzielen, hat es sich als wesentlich erwiesen, die Oberflächenrauigkeit der Laminierfolie entsprechend gezielt einzustellen. Hierzu hat es sich als vorteilhaft erwiesen, die Oberflächenrauigkeit der Laminierfolie 21 so zu wählen, dass diese eine Rauigkeit Ra kleiner als 2 µm, weiter bevorzugt Ra kleiner als 0,8 µm aufweist.

Weiter hat es sich als vorteilhaft erwiesen, eine Oberfläche mit einem Glanzgrad zu wählen, welcher unter 60° nach ISO 2813 von größer als 98 aufweist.

Die Laminierfolie 21 wird nun mittels einer nicht gezeigten Bahnführungsvorrichtung einer Druckvorrichtung 63 zugeführt. Vorzugsweise ist hierbei die Oberfläche 211 entsprechend wie vorgehend erläutert für die Erzielung einer guten Druckqualität optimiert.

Weiter ist es auch möglich, vor der Zuführung zu der Druckvorrichtung 63 auch ein oder mehrere weitere Bearbeitungsstationen vorzusehen. Diese Bearbeitungsstationen können beispielsweise Bearbeitungsstationen sein, welche die Oberflächenqualität der Oberfläche 211 für die nachfolgenden Bearbeitungsprozesse weiter verbessern. So ist es beispielsweise möglich, hier Reinigungsvorrichtungen, beispielsweise Reinigungsbürsten mit Druckluftunterstützung, Oberflächenbehandlungsvorrichtungen, welche eine Oberflächenbehandlung mittels Corona- und/oder Plasmabehandlung durchführen, entsprechende Walzen- und/oder Tempervorrichtungen, welche die Oberflächenqualität und insbesondere Oberflächenrauigkeit wie oben beschrieben optimieren usw. vorzusehen. Weiter ist es auch möglich, hier noch weitere Druckvorrichtungen, Transfervorrichtungen oder ähnliches vorzusehen, welche zusätzliche Registermarken oder Dekorelemente auf einer der Oberflächen 211 und/oder 212 der Laminierfolie 21 aufbringen.

Bei der Druckvorrichtung 63 handelt es sich vorzugsweise um eine Flexodruck-Vorrichtung. Es ist jedoch auch möglich, dass es sich hier um eine Tiefdruck- oder Siebdruck-Vorrichtung handelt oder um eine Digitaldruck-Vorrichtung handelt, beispielsweise um eine Inkjet-Druckvorrichtung handelt.

Die Bedruckung der Laminierfolie 21 mit dem strahlenhärtbaren Kleber in der Druckvorrichtung 63 ist beispielhaft in den Figuren Fig. 6a und 6b verdeutlicht.

Fig. 6a zeigt eine Schnittdarstellung mit der Laminierfolie 21 sowie schematisch einen Ausschnitt einer Druckwalze der Druckvorrichtung 63, mittels der der strahlenhärtbare Kleber auf die Oberfläche 211 der Laminierfolie 21 aufgedruckt wird. Fig. 6b zeigt schematisch eine Draufsicht auf einen Ausschnitt der Laminierfolie 21 mit dem durch die Druckvorrichtung 63 aufgedruckten strahlenhärtbaren Kleber.

Wie in Fig. 6a und Fig. 6b gezeigt, wird der strahlenhärtbare Kleber in ein oder mehreren ersten Zonen 51 auf die Oberflächen 211 der Laminierfolie 21 aufgebracht und in ein oder mehreren zweiten Zonen 52 nicht auf die Oberfläche 211 der Laminierfolie 21 aufgebracht. Die ersten Zonen 51 sind hierbei vorzugsweise, wie in Fig. 6c, 6b gezeigt, in Form von Mustern, Buchstaben, Zahlen, Codes oder Symbolen oder anderweitigen grafischen und/oder alphanumerischen und/oder kodierten Motiven ausgebildet, und von ein oder mehreren zweiten Zonen 52 umgeben.

Wie bereits oben ausgeführt, ist hierbei das Flächenverhältnis der ersten Zonen 51 zur Gesamtfläche, das heißt zur Summe der ersten und zweiten Zonen 52, vorzugsweise so zu wählen, dass dieses nicht mehr als 80% beträgt. Weiter sind die Abmessungen der ersten und/oder zweiten Zonen 51 bzw. 52, deren Ausformung und Anordnung zueinander vorzugsweise wie oben bezüglich der ersten und/oder zweiten Teilbereiche 31 bzw. 32 beschrieben auszubilden, um so nach dem Laminieren des Laminier-Inlays 2 zum Laminatkörper 1 die entsprechend dort geschilderten Vorteile zu erzielen.

Als strahlenhärtbare Kleber werden hier vorzugsweise Kleber eingesetzt, welche mittels einer UV-Strahlenquelle oder mittels e-beam (Elektronenstrahl) ausgehärtet werden können. Diese Klebstoffe enthalten vorzugsweise reaktive Acrylate, Epoxide oder Enolether und Fotoinitiatoren. Die Fotoinitiatoren bilden bei Belichtung Radikale oder reaktive Kationen (Supersäuren) und induzieren eine Polymerisation oder Vernetzungsreaktion längerkettiger Moleküle. Kleberkomponenten können beispielsweise Monoacrylate, Diacrylate, Triacrylate, Oligomere und Monomere sein.

Als strahlenhärtbare Kleber können hierbei weiter auch Kleber eingesetzt werden, welche Fotoinitiatoren aufweisen, welche auf unterschiedliche Wellenlängen reagieren, so dass hierdurch die Aushärtung des Klebers sehr gezielt in mehreren aufeinanderfolgenden Härtungsschritten durchgeführt werden kann.

Vorzugsweise werden strahlenhärtbare Kleber eingesetzt, bei denen die Vernetzungsreaktionen mittels Wellenlängen zwischen 250 nm und 420 nm, vorzugsweise im Bereich zwischen 350 nm und 400 nm ausgelöst werden kann.

Als strahlenhärtbarer Kleber kann beispielsweise ein Kleber mit folgender Formel eingesetzt werden:

| | |
|---|---|
| Urethanacrylate Oligomer | 40% |
| Acrylate Monofunctional 2(2-Ethoxyethoxy)Ethyl Acrylate / (EOEOEA) | 10% |
| Acrylate Difunctional Ethoxylated (5) Hedandiol Diacrylate / (HD(5EO)DA) | 15% |
| Aliphatic Urethane Acrylate Oligomer | 20% |
| Propoxylated Trimethylolpropane Triacrylate | 10% |
| Initiator | 5% |

Der UV-härtbare Kleber wird im Falle des Aufbringens mittels Flexodrucks vorzugsweise mit einer dynamischen Viskosität zwischen 400 mPas und 2000 mPas, bevorzugt 500 mPas bis 1200 mPas verdruckt.

Es hat sich gezeigt, dass hierdurch eine entsprechend gute Druckqualität erzielbar ist.

Weiter ist es auch möglich, dass die Druckvorrichtung 63 über eine Härtungsvorrichtung verfügt, mittels der der UV-härtbare Kleber beim Verdrucken oder unmittelbar nach dem Verdrucken vorgehärtet wird. Hierzu hat es sich bewährt, eine Vorhärtung des Klebers von größer als 50 %, bevorzugt größer als 80 durchzuführen und/oder die dynamische Viskosität des strahlenhärtbaren Klebers mittels der Vorhärtung um einen Wert von 20 mPas bis 3000 mPas, vorzugsweise um 50 mPas bis 1000 mPas zu erhöhen. Es hat sich gezeigt, dass durch diese Maßnahmen die Druckqualität weiter deutlich verbessert werden kann, respektive die Standfestigkeit des strahlenhärtenden Klebers beim Zuführen der Transferfolie verbessert wird.

Neben der Verwendung von Flexodruck kann der strahlenhärtbare Kleber auch mittels Tiefdruck, Siebdruck oder Digitaldruck oder einer Kombination dieser Druckverfahren verdruckt werden.

Beim Tiefdruck bzw. Gravur-Druck wird das gewünschte Design auf einer Gravurwalze abgebildet. Mit einer solchen Gravurwalze wird dann entsprechend dem bekannten Tiefdruckverfahren der strahlenhärtbare Kleber auf die Laminierfolie 21 gedruckt. Die Viskosität des strahlenhärtbaren Klebers wird beim Tiefdruck bevorzugt kleiner als 1000 mPas gewählt. Auch hier hat sich die Kombination mit einer Vorhärtungs-Vorrichtung, wie bereits oben ausgeführt, bewährt, um möglichst ein Verschmieren des strahlenhärtbaren Klebers in dem nachfolgenden Prozess zu verhindern.

Weiter ist es auch vorteilhaft, den strahlenhärtbaren Kleber mittels eines Tintenstrahldruckkopfes zu verdrucken. Hierdurch sind im Vergleich zu Druckverfahren mit festen Druckformen auch individuelle, zeitaktuelle Gestaltungen möglich. Auch hier hat sich die Verwendung einer Vorhärtungs-Vorrichtung bewährt.

Weiter ist es auch möglich, dass die Druckvorrichtung 63 unterschiedliche Druckwerkzeuge umfasst, beispielsweise eine Kombination eines Siebdruck-Druckwerkzeugs und/oder eines Flexo-Druckwerkzeugs und/oder eines Tintenstrahldruckwerks umfasst.

Von der Abspulvorrichtung 61 wird die Transferfolie 4 abgespult und über nicht gezeigte Bahnführungsvorrichtungen zunächst einer optionalen Oberflächenbearbeitungsvorrichtung 65 zugeführt.

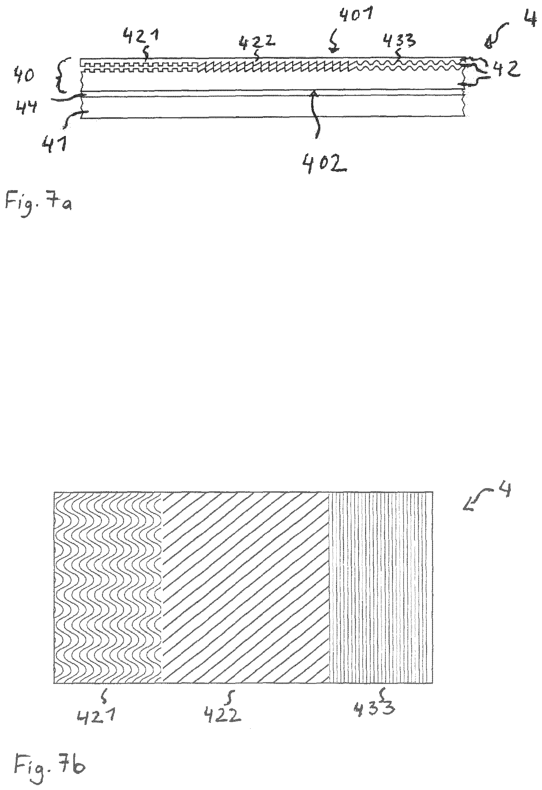

Die Transferfolie 4 ist beispielsweise wie in den Figuren Fig. 7a und Fig. 7b verdeutlicht, aufgebaut: Die Transferfolie 4 weist eine Trägerfolie 41, eine optionale Ablöseschicht 44 und eine Dekorlage 40 auf, welche aus ein oder mehreren Dekorschichten 42 besteht.

Die Dekorlage 40 weist eine der Trägerfolie 41 abgewandte Oberfläche 401 sowie eine der Trägerfolie 41 zugewandte Oberfläche 402 auf.

Die Dekorschichten 42 können hierbei, wie bereits oben in Fig. 2 bzw. Fig. 3 bezüglich der Dekorschichten 42 beschrieben, ausgebildet sein. Hierbei weist die Dekorlage 40 vorzugsweise Bereiche 421, 422 und 433 auf, in welchen ein oder mehrere der Dekorlagen 42 unterschiedlich ausgebildet sind. So ist in Fig. 7b beispielhaft eine Draufsicht auf einen Ausschnitt der Transferfolie 4 mit den drei Bereichen 421, 422 und 433 gezeigt, in den ein oder mehrere der Dekorlagen 42 unterschiedlich ausgebildet sind. So ist es beispielsweise möglich, dass in den Bereichen 421, 422 und 433 unterschiedliche optische Reliefstrukturen in eine der Dekorschichten 42 eingebracht sind, welche jeweils ein unterschiedliches optisch variables Erscheinungsbild, beispielsweise einen unterschiedlichen Farbwechsel beim Kippen und/oder Drehen generieren.

Die optionale Oberflächenbearbeitungsvorrichtung 65 besteht beispielsweise aus einer Vorrichtung, welche die Oberflächenqualität der Oberfläche 401, der Dekorlage 40 mittels Corona- und/oder Plasmabehandlung verbessert. Weiter ist es auch möglich, die bereits oben bezüglich einer Vorbehandlung der Laminierfolie 21 beschriebene Bearbeitungsstation zusätzlich oder alternativ zu der Oberflächenbearbeitungsvorrichtung 65 vorzusehen.

Optional kann der Druck der Kleberschicht 5 auch auf die Transferfolie 4 erfolgen oder ein Druck sowohl auf der Laminierfolie als auch auf der Transferfolie 4 durchgeführt werden. Dabei können sich die beiden Kleberschichten in der Zusammensetzung und/oder im Auftragsgewicht unterschiedlich oder auch ähnlich oder gleich sein.

Die Laminierfolie 21 und die Transferfolie 4 werden anschließend über nicht gezeigte Bahnführungsvorrichtungen einer Kaschiervorrichtung 64 zugeführt. Die Kaschiervorrichtung 64 besteht beispielsweise aus zwei Walzen, welche über einen gemeinsam ausgebildeten Walzenspalt die auf der Oberfläche 211 der Laminierfolie 211 aufgedruckte strahlenhärtbare Kleberschicht 5 in Kontakt mit der Oberfläche 401 der Dekorlage 40 der Transferfolie 4 bringen.

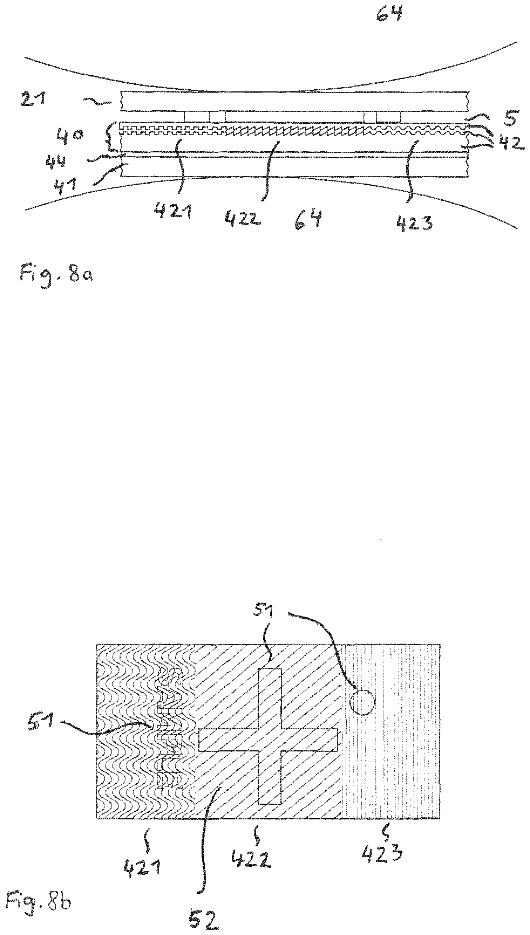

Dies ist beispielhaft in den Figuren Fig. 8a und Fig. 8b verdeutlicht:
Fig. 8a zeigt schematisch einen Ausschnitt der beiden Walzen der Kaschiervorrichtungen 64, welche die Laminierfolie 21 und die Transferfolie 4 entsprechend zusammenführen, sodass die strahlenhärtbare Kleberschicht 5 zwischen der Laminierfolie 21 und der Dekorlage 40 angeordnet ist. Hierbei ist es vorteilhaft, den Anpressdruck entsprechend zu wählen, dass im Bereich der ersten Zonen 51 die strahlenhärtbare Kleberschicht 5 sowohl die Oberfläche 211 der Laminierfolie 21 als auch die Oberfläche 401 der Dekorlage 40 benetzt. Der Anpressdruck der Kaschiervorrichtung 64 ist hierbei vorzugsweise derart einzustellen, dass ein Verschmieren der strahlenhärtbaren Kleberschicht beim Kaschieren vermieden wird. Hierzu hat sich bewährt, den Anpressdruck der Kaschiervorrichtung 64 zwischen 0,05 N/cm² und 100 N/cm², weiter bevorzugt zwischen 1 N/cm² und 10 N/cm² zu wählen.

Weiter wird das Aufbringen der Transferfolie 4 auf die Laminierfolie 21 vorzugsweise mittels einer Registrierungsvorrichtung gesteuert. Diese Registrierungsvorrichtung verfügt vorzugsweise über Stellmittel, mittels denen sie eine Veränderung der Wegstrecke oder Zugspannung der Laminierfolie 21 und/oder der Transferfolie 4 bewirken kann. Mittels dieser Stellmittel und Daten über die Positionierung des Kleberaufdrucks, der Laminierfolie 21 und/oder der Transferfolie 4, welche sie beispielsweise mittels optischen Sensoren erfasst, regelt sie die Positionierung der Laminierfolie 21 mit der strahlenhärtbaren Kleberschicht 5, sowie der Transferfolie 4 mit den unterschiedlich ausgebildeten Dekorbereichen zueinander derart, dass der Kleberaufdruck und die zugeordneten Bereiche der Transferfolie 4 im Register zueinander durch die Kaschiervorrichtung 64 aufeinander aufgebracht werden.

Eine weitere Option zum registerhaltigen Transfer ist das Variieren der Umfangsgeschwindigkeit des Druckwerkzeugs, beispielsweise der Druckwalze oder des Drucksiebs relativ zur Bewegungsgeschwindigkeit der Transferfolie 4 oder der Laminierfolie 21. Dieses als Nachführen bezeichnete Variieren kann -10 Promille bis +10 Promille, bevorzugt -5 Promille bis +5 Promille der Bewegungsgeschwindigkeit der Transferfolie 4 oder der Laminierfolie 21 betragen. Besonders vorteilhaft kann dieses Nachführen mittels Inkjet durchgeführt werden, indem der Tintenausstoß entsprechend zeitlich gesteuert, das heißt verzögert oder beschleunigt wird. Es kann auch eine Kombination von Verdehnung/Anpassung der Wegstrecke der Transferfolie 4 oder der Laminierfolie 21 und einem Nachführen des Druckwerks angewendet werden.

Wird die Transferfolie 4 nicht als eine einzige zusammenhängende Bahn zugeführt, sondern mehrbahnig in voneinander getrennten Einzelbahnen, so werden die Relativpositionen der mehreren Bahnen erfasst und durch geeignete oben beschriebene Maßnahmen synchronisiert.

Dies ist beispielsweise in Fig. 8b verdeutlicht, welche eine Draufsicht auf die von der Kaschiervorrichtung 64 auf die Laminierfolie 21 aufkaschierte Transferfolie 4 nach Aufkaschierung verdeutlicht: Wie dort gezeigt, überlappen hierbei die Bereiche 421, 422 und 423 der Dekorlage 40, in welcher diese unterschiedliche Dekorschichten aufweist mit entsprechend zugeordneten ersten Zonen 51, in welchen die strahlenhärtbare Kleberschicht vorgesehen ist. So überlappt beispielsweise die punktförmige erste Zone 51 den zugeordneten Bereich 423, die kreuzförmige erste Zone 51 mit dem zugeordneten Bereich 422 und die in Form eines Schriftzugs ausgebildete erste Zone 51 mit dem zugeordneten Bereich 421.

Um diese Registrierung zu gewährleisten, werden vorzugsweise beim Aufdruck des strahlenhärtbaren Klebers mittels der Druckvorrichtung 63 Registermarken aufgebracht, beispielsweise in Form eines Aufdrucks, einer Ausstanzung, usw. Entsprechende Registermarken werden vorzugsweise auch auf die Transferfolie 4 aufgebracht bzw. sind bereits in der Transferfolie 4 vorgesehen. Alternativ kann die Registrierung auch durch entsprechende Bilderfassungen von Dekorelementen der Transferfolie 4 bzw. der Laminierfolie 21 bzw. der strahlenhärtbaren Kleberschicht 5 erfolgen.

Anschließend wird das Schichtgebilde aus Transferfolie 4 und Laminierfolie 21 einer Härtvorrichtung 651 zugeführt.

Bei der Härtvorrichtung 651 handelt es sich vorzugsweise um einen UV-Strahler oder e-beam-Strahler. Hierbei hat es sich beispielsweise bewährt, eine Quecksilberdampf-Lampe derart einzusetzen, dass eine UV-Dosis von mehr als 50 mJ/cm² erreicht wird. Es kann sich insbesondere um einen mit Eisen oder Gallium dotierten Strahlen handeln. Weiter kann auch ein UV-LED-Strahler eingesetzt werden. Hierbei ist es weiter auch möglich, die Bestrahlung nicht über die gesamte Breite der Materialbahn durchzuführen, sondern lediglich selektiv in den Bereichen durchzuführen, in welchen die strahlenhärtbare Kleberschicht 5 vorgesehen ist. Dies kann beispielsweise durch die Verwendung entsprechender Masken oder durch entsprechende Ansteuerung, beispielsweise einer UV-Strahler-Matrix erfolgen.

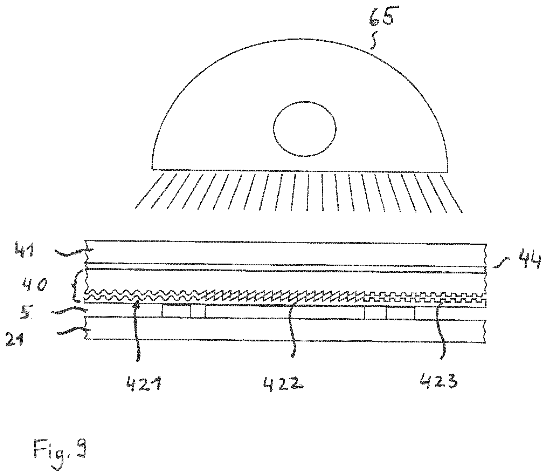

Eine entsprechende Bestrahlung dieses Schichtgebildes mit der Härtvorrichtung 651 ist in Fig. 9 gezeigt: So wird beispielsweise das Schichtgebilde bestehend aus Trägerfolie 41, optionaler Ablöseschicht 44, Dekorlage 40, strahlenhärtbare Kleberschicht 5 und Laminierfolie 21 von Seiten der Trägerfolie 41 mit der Strahlungsquelle der Härtvorrichtung 651 bestrahlt. Weiter ist es auch möglich, die Bestrahlung von der gegenüberliegenden Seite durchzuführen, oder in der Härtvorrichtung 651 mehrere Strahlungsquellen, auch beidseits des Schichtgebildes gemäß Fig. 9, vorzusehen.

Weiter ist es auch möglich, auf die Härtvorrichtung 651 zu verzichten, wenn die strahlenhärtbare Kleberschicht 5 bereits in dem vorliegenden Zustand für einen ausreichenden Adhäsionsunterschied in den ersten und zweiten Zonen 51 und 52 sorgt.

Anschließend wird das vorliegende Schichtgebilde einer Trennvorrichtung 652 zugeführt. Die Trennvorrichtung 652 besteht vorzugsweise aus einem Walzenpaar und/oder einer Umlenkung um eine Messerklinge und/oder einem Trennschwert und/oder eine Blasluftleiste, oder einer Kombination davon, welche ein Abziehen der Transferfolie 4 von der Laminierfolie 21 unter kontrollierten Bedingungen erlaubt.

Beim Abziehen bewirkt der Unterschied der Zwischenschichthaftung zwischen den ersten Zonen 51 mit der strahlenhärtbaren Kleberschicht 5 und den zweiten Zonen 52 ohne die strahlenhärtbare Kleberschicht 5 zwischen der Dekorlage 40 und der Laminierfolie 21, dass in ersten Teilbereichen 31 die Dekorlage 40 beim Abziehen von der Trägerfolie 41 abgelöst wird und auf der Laminierfolie 21 verbleibt und in zweiten Teilbereichen 32 die Dekorlage 40 und der Trägerfolie 41 verbleibt und mit der Trägerfolie 41 abgezogen wird.

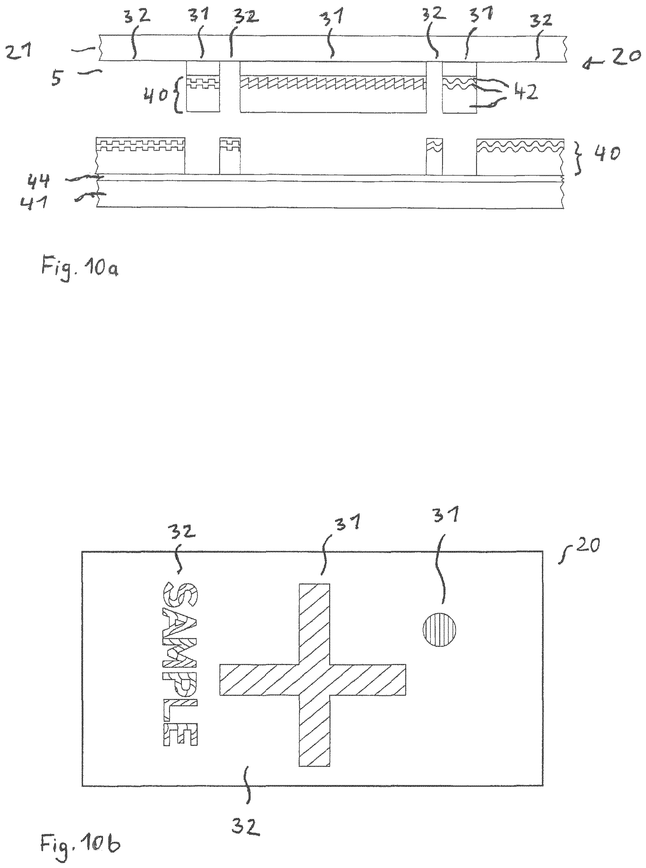

Dies ist beispielhaft in Fig. 10a und Fig. 10b verdeutlicht:
Fig. 10a zeigt eine Schnittdarstellung des Schichtgebildes nach Abziehen. Auf der Laminierfolie 21 ist in den ersten Teilbereichen 31 auf der Oberfläche 211 ein Schichtgebilde aus der strahlenhärtbaren Kleberschicht 5 und der Dekorlage 40 vorgesehen. Dieses Schichtgebilde bildet eine Laminier-Inlay 2 aus, welches in einer Aufspulvorrichtung 67 auf einer Vorratsrolle aufgespult wird. Der hiervon abgezogene "Rest" der Transferfolie 4 weist lediglich noch in den zweiten Teilbereichen 32 die Dekorlage 40 auf. Dieser Transferfolien-Rest wird einer Aufspulvorrichtung 66 zugeführt und dort auf eine Vorratsrolle aufgespult. Dieser Rest kann ggf. wiederverwendet werden, um eine möglichst hohe Ausnutzung der Dekorlage 40 zu ermöglichen.

Fig. 10b zeigt eine Draufsicht auf einen Ausschnitt des Laminier-Inlays 2:
Aufgrund der oben beschriebenen registergenauen Aufbringung der Transferfolie 4 zu der strahlenhärtbaren Kleberschicht 5 weist das Laminier-Inlay 2 unterschiedliche erste Teilbereiche 31 auf, in welchen unterschiedliche Motive mit unterschiedlichen optisch variablen Effekten realisiert sind.

Bei dem Verfahrensablauf nach Fig. 4 handelt es sich um einen Rolle-zu-Rolle-Bearbeitungsprozess, welcher vorzugsweise mit einer Geschwindigkeit zwischen 0 m/min und 80 m/min, bevorzugt zwischen 15 m/min und 45 m/min abläuft. Alternativ kann das Verfahren jedoch auch in einem Bogen-Verfahren durchgeführt werden, in dem einzelne Bögen entsprechend bedruckt, kaschiert, gehärtet und getrennt werden.

Das gemäß Fig. 4 hergestellte Laminier-Inlay 2 kann anschließend auch mittels eines Bogen-basierten Verfahrens weiterverarbeitet werden. Hierzu entspricht die Breite der Laminierfolien 21 zumindest der Breite des hierzu verwendeten Bogenformats oder ein Mehrfaches dieses Bogenformats. Die Laminierfolie 21 kann beim Transferprozess weiter auch eine größere Breite aufweisen und die Ränder können in einem späteren Bearbeitungsprozess auf die gewünschte Breite zugeschnitten werden. Eine Überbreite hat den Vorteil, dass aufgrund des nachträglichen Zuschnitts die Ränder sauber sind und allfällige Toleranzen des Drucks zur Bahnkante ausgeglichen werden können. Es können aber auch logistische Gründe dafür sprechen, wenn eine Bahnbreite einfach verfügbar ist oder als Standard eingesetzt werden kann. Weiter können je nach Anlagenkonzept für die präzisen Vortriebe der Laminierfolie 21 notwendig Transportspuren dort vorgesehen sein, die entfernt werden müssen. Es kann auch notwendig sein, Positionsmarken oder Registermarken und andere Informationen, Steuerspuren, etc. auf der Laminierfolie 21 aufzubringen, welche dann nachträglich wieder abgeschnitten werden müssen.

Weiter kann die Laminierfolie 21 zusätzlich noch mit einer Kleberschicht bedruckt werden, um die Haftung für die Laminierung mit Kunststofffolien beispielsweise aus PET, PET-G, ABS und PVC zu verbessern. Diese Beschichtung kann ein oder beidseits erfolgen und beispielsweise vor der Bedruckung mit dem strahlenhärtbaren Kleber und/oder nach Abziehen der Transferfolie erfolgen.

Bei der Laminierung des Laminier-Inlays 2 mit weiteren Laminierfolien zu einem Laminatkörper kann ebenfalls ein Rolle-zu-Rolle-Prozess, aber auch ein Bogenbasierter Prozess eingesetzt werden. Hierbei ist es vorteilhaft, ebenfalls eine entsprechende Registrierung zwischen den miteinander laminierten Folien vorzusehen.

Das Laminier-Inlay 2 kann hierbei im Format die gleiche Breite wie die Laminierfolien besitzen, mit denen dieses laminiert wird. Weiter ist es auch möglich, dass das Laminier-Inlay 2 basierend auf mehreren Einzelrollen, die beispielsweise die Breite der einzelnen Dokumente besitzen, zugeführt wird. Vorteilhafterweise ist die Breite der Folienrollen mit dem Laminier-Inlay 2 hierbei etwas größer als die gegenlaminierte Laminierfolie, um seitliche Toleranz beim Zuführen abzudecken oder um Platz für Registermarken und weitere allenfalls notwendige technische Spuren zu lassen.

Im Falle von zugeführten Einzelspuren ist es besonders vorteilhaft, dass diese Einzelrollen zueinander registriert geführt werden, sowohl quer als auch längs zur Laufrichtung.

Das Laminier-Inlay 2 kann vor der Laminierung mit weiteren Laminierfolien auch entsprechend zugeschnitten und konfektioniert werden, um beispielsweise in einem Bogen-Prozess weiter verarbeitet zu werden. So kann das Laminier-Inlay 2 beispielsweise zu Bogenformat geschnitten werden oder in Bahnen geringerer Breite geschnitten werden, um die Folienbreite an die eines Bandlaminators anzupassen, welcher für die Lamination mit den weiteren Laminierfolien eingesetzt wird. Zum Laminieren wird das Laminier-Inlay 2 mit ein oder mehreren Laminierfolien zu einem Laminationspaket gebündelt, welches vorzugsweise dem gewünschten Sicherheitsdokument entspricht. Nach der Lamination werden aus den verbundenen Platten die gewünschten Dokumentenformate gestanzt und z. B. mit Personalisierung weiterverarbeitet.

Weitere laminierfähige Materialien bestehen beispielsweise aus einem Träger aus Polyester, welcher mit einem Heißsiegelkleber beschichtet ist. Typische Dicken liegen im Bereich zwischen 25 µm bis 200 µm, sowohl bezüglich des Polyesterträgers als auch des Heißsiegelklebers. Die Applikation der Dekorlagen erfolgt auf die Oberfläche der Kleberschicht. Nach Applikation wird mit einer weiteren Kleberschicht zumindest partiell überbeschichtet, sodass auch in dem Bereich der Dekorlage im anschließenden Laminiervorgang ein Verbund mit dem Dokumentensubstrat erreicht wird. Ein solcher Aufbau ist insbesondere geeignet, um Manipulationsversuche zu verhindern. Derartige Laminierfolien werden beispielsweise dazu verwendet, um in einem Rollenlaminator papierbasierte Dokumente ein- oder zweiseitig zu versiegeln.

Weiter ist es noch möglich, dass der in Fig. 4 verdeutlichte Prozess mehrfach mit unterschiedlichen Transferfolien 4 wiederholt wird oder in dem in Fig. 4 gezeigten Prozess nicht nur eine, sondern mehrere Transferfolien 4 gleichzeitig oder nacheinander in Kontakt mit der Laminierfolie 21 gebracht werden. Weiter ist es hierbei auch möglich, jeweils unterschiedliche strahlenhärtbare Kleber einzusetzen oder unterschiedlich eingefärbte strahlenhärtbare Kleber einzusetzen. Die weiter aufgebrachten Dekorlagen 40 können hierbei auf derselben Seite der Laminierfolie 21, oder auch auf unterschiedlichen Seiten der Laminierfolie aufgebracht werden. Die mittels unterschiedlichen Transferfolien und/oder strahlenhärtbaren Kleberschichten aufgebrachten Dekorlagen 40 werden hierbei vorteilhafterweise im Register zueinander angeordnet. Dies wird durch entsprechende Registrierung der Druckprozesse und/oder Registrierung der Transferfolien hierzu erzielt, wie bereits oben beschrieben.

Weiter ist es auch möglich, dass mittels weiterer Druckwerke zusätzliche Dekorschichten auf die Laminierfolie 21 und/oder die Dekorlage 40, vorzugsweise im Register, aufgedruckt und/oder mittels Prägevorgangs, wie beispielsweise Heißprägung übertragen werden.

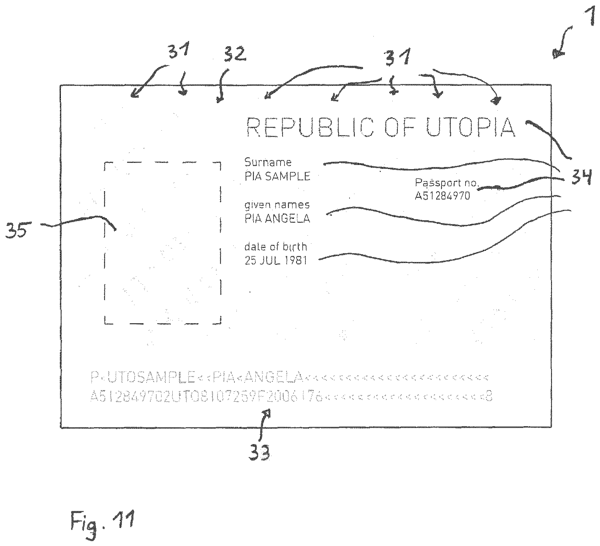

In der Figuren Fig. 11 bis Fig. 13 sind mehrere Laminatkörper 1 in Form von Sicherheitsdokumenten gezeigt, welche mittels entsprechender Laminier-Inlays 2 hergestellt sind:
Fig. 11 bis Fig. 13 zeigen jeweils einen Laminatkörper 1, dessen Schichtaufbau den Laminatkörper nach Fig. 1 entspricht.

Bei dem Laminatkörper 1 nach Fig. 11 sind die ersten Teilbereiche 31 in Form eines Rasters mit Rasterelementen ausgebildet, welche in Form einer Buchstabenfolge (Buchstabenfolge "UTO") ausgeformt sind. Die dort vorgesehene Dekorlage 40 besteht aus einer mit einer HRI-Schicht versehenen diffraktiven Struktur, welche einen vollflächigen Hintergrund für die weiteren im Schichtaufbau vorgesehenen Sicherheitselemente aufweist, hier ein Passbild 35 sowie mittels Laserpersonalisierung hergestellten individuellen Information 33 und 34. Die ersten Teilbereiche 31 sind hierbei vollflächig von einem zweiten Teilbereich 32 umgeben.

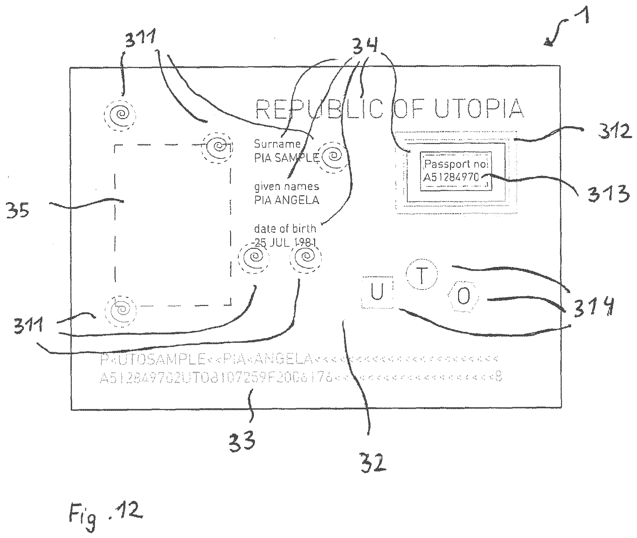

Der Laminatkörper 1 nach Fig. 12 weist erste Teilbereiche 311, 312, 313 und 314 auf, welche jeweils Dekorlagen 40 unterschiedlicher Transferfolien 4 aufweisen. In den ersten Teilbereichen 311 ist eine Dekorlage 40 vorgesehen, welche aus einer diffraktiven Struktur und einer HRI-Schicht gebildet ist. Der erste Teilbereich 312 ist mit einer Dekorlage 40 versehen, welche lediglich eine HRI-Schicht aufweist. Die ersten Teilbereiche 313 weisen eine Dekorlage 40 mit einer HRI-Schicht auf, wobei hier die strahlenhärtbare Kleberschicht mittels eines Digitaldruckverfahrens, insbesondere Tintenstrahldruck aufgebracht ist.

Weiter ist es auch möglich, dass die ersten Teilbereiche 313 einen mittels eines digitalen Druckverfahrens, insbesondere Tintenstrahldruck hergestellten Aufdruck, insbesondere personalisierten Aufdruck aufweisen. Dieser Aufdruck wird beispielsweise auf die Dekorlage 40 oder auf die Laminierfolie 21 aufgedruckt. Vorzugsweise überlappt die strahlenhärtbare Kleberschicht 5 diesen Aufdruck zumindest bereichsweise.

Die ersten Teilbereiche 314 weisen jeweils eine strukturierte Metallschicht im Register zu einer weiteren diffraktiven Struktur auf. Die ersten Teilbereiche 311, 312, 313 und 314 sind hierbei im Register zueinander und weiter im Register zu den übrigen Sicherheitsmerkmalen 35, 34, und 33 angeordnet. Dies wird durch die oben beschriebenen Maßnahmen erreicht.

Die Teilbereiche 311 und 314 bilden hierbei jeweils einen Motivbereich aus, innerhalb dessen jeweils zumindest ein Motiv der Dekorlage 40 vorgesehen ist. Die Ausformung des jeweiligen Motivbereichs ist bezüglich der Teilbereiche 311 mittels einer gestrichelten Umrisslinie angedeutet, innerhalb der beispielhaft ein Motiv in Form einer Spirale angeordnet ist. Bezüglich der Teilbereiche 314 ist dies in Fig. 12 durch eine Umrandungslinie, beispielhaft ein viereckförmige, kreisförmige und eine achteckförmige Umrandungslinie angedeutet, welche die Grenzlinie des jeweiligen Motivbereichs ausbildet und in der jeweils zumindest ein Motiv, hier bespielhaft in Form der Buchstaben U, T und O in der Dekorlage 40 vorgesehen ist.

Die Motivbereiche weisen hierbei vorzugsweise eine geschlossene Umrisslinie auf, welche insbesondere in Form einer geometrischen Figur, eines Logos, eines alphanumerischen Zeichens oder eines Musters ausgebildet ist. Innerhalb des jeweiligen Motivbereichs sind ein oder mehrere Motive vorgesehen, welche vorzugsweise in Form von alphanumerischen Zeichen, Codes, Grafiken, Bildern oder Mustern ausgebildet sind. Außerhalb der Motive ist der jeweilige Teilbereich 311 bzw. 314 der Dekorlage vorzugsweise transparent ausgebildet und weist beispielsweise in diesen Teilbereichen keine opake Dekorschicht auf.

Vorzugsweise ist hierbei die Transparenz außerhalb der Motive der Dekorlage 40 so ausgebildet, dass für den menschlichen Betrachter dort die Dekorlage 40 nicht von dem Hintergrund unterscheidbar ist und damit optisch für den menschlichen Betrachter nicht in Erscheinung tritt.

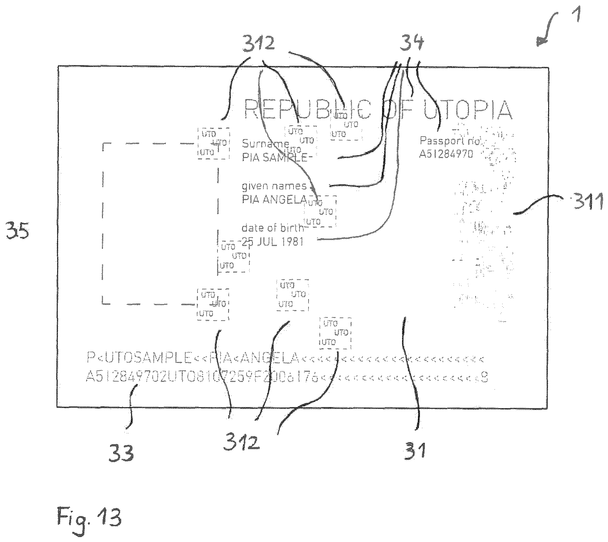

Der Laminatkörper 1 nach Fig. 13 weist in den ersten Teilbereichen 311 eine Dekorlage 40 mit einer HRI-Schicht und einer diffraktiven Struktur, welche auf einer eingefärbten, strahlenhärtbaren Kleberschicht 5 vorgesehen ist. Die Farbe der diffraktiven Struktur wird damit entsprechend von der strahlenhärtbaren Kleberschicht 5 bestimmt. Die ersten Teilbereiche 312 weisen eine Dekorlage 40 auf, welche eine musterförmige Lackschicht mit IR-Pigmenten sowie ggf. weitere Dekorschichten aufweisen. Auch hier sind die ersten Teilbereiche 311 und 312 zueinander sowie zu den weiteren Sicherheitsmerkmalen 31, 34 und 35 im Register angeordnet. Dies wird durch die oben beschriebenen Maßnahmen erreicht.

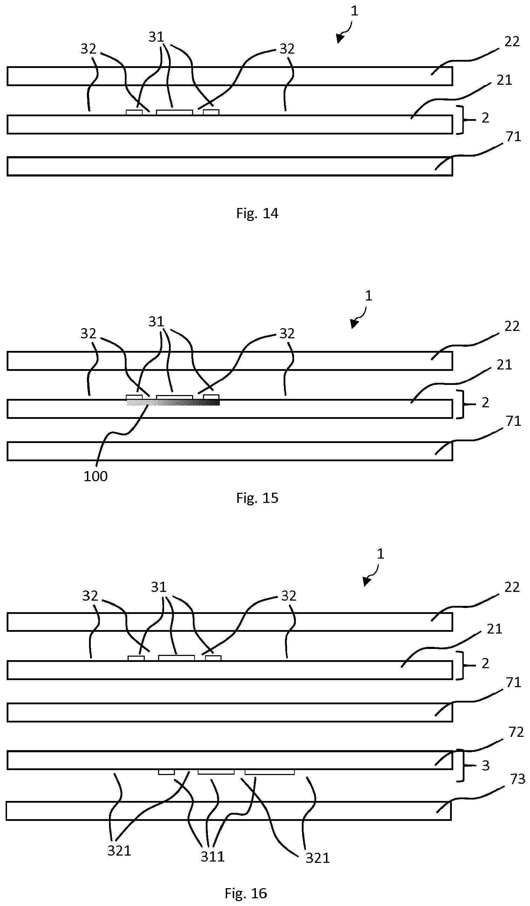

Fig. 14 zeigt einen Laminatkörper 1 mit dem Laminier-Inlay 2 und der Laminierfolie 21, welche insbesondere die oben aufgeführte erste Laminierfolie ist, sowie der Laminierfolie 22, welche insbesondere die oben aufgeführte zweite Laminierfolie ist, und der Laminierfolie 71, welche insbesondere die oben aufgeführte erste Laminierfolie der ein oder mehreren weiteren Laminierfolien ist. Hierbei umfasst die Laminierfolie 21 vorteilhafterweise Polycarbonat, wobei die Laminierfolie 71 und die Laminierfolie 22 vorzugsweise Polyvinylchlorid umfasst.

Fig. 14 zeigt insbesondere den in Fig. 1 gezeigten Schichtaufbau eines Laminatkörpers 1, bis auf, dass die Laminierfolien 23 bis 27 nicht gezeigt sind und stattdessen die Laminierfolie 71 gezeigt ist. Es ist jedoch auch denkbar, dass zumindest eine der Laminierfolien 23 bis 27 bereitgestellt und/oder zu dem Laminatkörper laminiert werden.

Bevorzugt ist die Laminierfolie 21 opak, insbesondere im für das menschliche Auge sichtbaren Wellenlängenbereich. Die Laminierfolien 22 und 71 sind hierbei vorzugsweise transparent, insbesondere im für das menschliche Auge sichtbaren Wellenlängenbereich. Auch ist es weiter möglich, dass die Laminierfolie 21 für das menschliche Auge weiß und/oder bedruckt ist.

Bezüglich der Ausgestaltung des Laminier-Inlays 2, insbesondere der Dekorlage in den ersten Teilbereichen 31 des Laminier-Inlays 2, wird hier insbesondere auf Fig. 1 und/oder Fig. 2 verwiesen.

Fig. 15 zeigt den in Fig. 14 gezeigten Laminatkörper 1, bis auf, dass ein gelaserter Teilbereich 100 in dem Laminier-Inlay 2, insbesondere der Laminierfolie 21, eingebracht ist, welche bevorzugt ein Graustufenbild, insbesondere durch ein mittels Laser erzeugtes Halbtonraster, ausbildet. Der gelaserte Teilbereich 100 ist hierbei beispielsweise bei Betrachtung senkrecht auf eine von der Laminierfolie 21 aufgespannte Ebene, bevorzugt in Richtung von der Laminierfolie 22 zur Laminierfolie 21, passergenau unter und benachbart zu den ersten Teilbereichen 31 angeordnet.

Fig. 16 zeigt einen Laminatkörper 1 mit dem Laminier-Inlay 2 und einem Laminier-Inlay 3, welches insbesondere das oben aufgeführte weitere Laminier-Inlay ist, mit den Laminierfolien 21, 22 und 71 sowie mit der Laminierfolie 73, welche insbesondere die oben aufgeführte dritte Laminierfolie der ein oder mehreren weiteren Laminierfolien ist.

Fig. 16 zeigt insbesondere den in Fig. 1 gezeigten Schichtaufbau eines Laminatkörpers 1, bis auf, dass die Laminierfolien 23 bis 27 nicht gezeigt sind und stattdessen die Laminierfolien 71 bis 73 gezeigt sind. Es ist jedoch auch denkbar, dass zumindest eine der Laminierfolien 23 bis 27 bereitgestellt und/oder zu dem Laminatkörper 1 laminiert werden.

Das Laminier-Inlay 3 weist erste Teilbereiche 311, welche insbesondere die oben aufgeführten ein oder mehreren weiteren ersten Teilbereiche mit der weiteren Dekorlage sind, auf und weist zweite Teilbereiche 321, welche insbesondere die oben aufgeführten ein oder mehreren weiteren zweiten Teilbereiche sind, auf.

Bezüglich der Ausführung des Laminier-Inlays 3, insbesondere der Dekorlage, bevorzugt der weiteren Dekorlage, in den ersten Teilbereichen 311 des Laminier-Inlays 3, wird hier insbesondere auf Fig. 1 und/oder Fig. 2 verwiesen.

Wie in Fig. 16 zu sehen ist, können die ersten Teilbereiche 311 und die zweiten Teilbereiche 321 des weiteren Laminier-Inlays 3 versetzt zu den ersten Teilbereichen 31 und den zweiten Teilbereichen 32 des in der Fig. 16 oben dargestellten Laminier-Inlays 2 ausgestaltet sein.

Weiter ist es möglich, dass die Dekorlage in den ersten Teilbereichen 311 des Laminier-Inlays 3 und die Dekorlage in den ersten Teilbereichen 31 des oben dargestellten Laminier-Inlays 2 verschieden ausgestaltet sind.

Vorzugsweise bestehen die Laminierfolie 21 und die Laminierfolie 72 aus Polycarbonat und/oder umfassen Polycarbonat, wobei die Laminierfolien 22, 71 und 73 bevorzugt aus Polyvinylchlorid bestehen und/oder Polyvinylchlorid umfassen.

Bevorzugt ist die Laminierfolie 71 opak, insbesondere im für das menschliche Auge sichtbaren Wellenlängenbereich. Die Laminierfolien 71, 21, 73 und/oder 22 sind vorzugsweise transparent, insbesondere im für das menschliche Auge sichtbaren Wellenlängenbereich.

Vorteilhafterweise ist die Laminierfolie 71 ein- oder mehrschichtig und dient insbesondere als Haftvermittler zwischen der Laminierfolie 21 und der Laminierfolie 72.

Bevorzugt wird zumindest teilweise durch einen der Teilbereiche 31 und/oder 311 des Laminier-Inlays 2 und/oder des Laminier-Inlays 3 die Laminierfolie 21, 71 und/oder 72 mittels eines Lasers bearbeitet, insbesondere so dass ein gelaserter Teilbereich passergenau über, unter und/oder benachbart zu den ersten Teilbereichen 31 und/oder 311 des Laminier-Inlays 2 und/oder des Laminier-Inlays 3 angeordnet wird.

Weiter ist es bevorzugt möglich, dass zusätzliche Laminier-Inlays aus zusätzlichen Laminierfolien mit zusätzlichen Dekorlagen in dem Laminatkörper 1 angeordnet werden, insbesondere auf einer der Laminierfolie 21 abgewandten Seite der Laminierfolie 22 und/oder der Laminierfolie 73.

In Fig. 16 sind auch zusätzliche Laminierfolien denkbar, insbesondere welche auf der dem Laminier-Inlay 2 und/oder dem Laminier-Inlay 3 abgewandten Seite der Laminierfolie 22 und/oder der Laminierfolie 73 und/oder auf einem zusätzlichen Laminier-Inlay angeordnet sind und welche insbesondere Polyvinylchlorid umfassen und/oder aus Polyvinylchlorid sind und/oder transparent, insbesondere im für das menschliche Auge sichtbaren Wellenlängenbereich, sind.

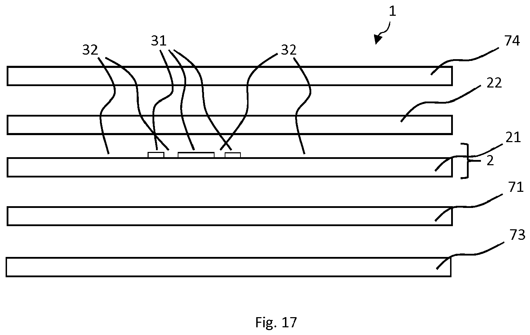

Fig. 17 zeigt den in Fig. 14 und/oder Fig. 15 gezeigten Laminatkörper 1, bis auf, dass der Laminatkörper 1 weiter die Laminierfolie 73, welche insbesondere die oben aufgeführte dritte Laminierfolie der ein oder mehreren weiteren Laminierfolien ist, und die Laminierfolie 74, welche insbesondere die oben aufgeführte vierte Laminierfolie der ein oder mehreren weiteren Laminierfolien ist, aufweist.

Fig. 17 zeigt insbesondere den in Fig. 1 gezeigten Schichtaufbau eines Laminatkörpers 1, bis auf, dass die Laminierfolien 23 bis 27 nicht gezeigt sind und stattdessen die Laminierfolien 71 und 73 gezeigt sind und weiter insbesondere die Laminierfolie 74 im Schichtaufbau gezeigt ist.

Bevorzugt ist es hierbei möglich, dass die ein oder mehreren weiteren Laminierfolien die zweite Laminierfolie der ein oder mehreren weiteren Laminierfolien hier nicht aufweisen, insbesondere so dass der Laminatkörper 1 ein Laminier-Inlay 2 aufweist.

Hierbei bestehen die Laminierfolien 73 und 74 vorzugsweise aus Polyvinylchlorid und/oder umfassen Polyvinylchlorid. Bevorzugt sind die Laminierfolien 73 und 74 transparent, insbesondere im für das menschliche Auge sichtbaren Wellenlängenbereich.

Weiter ist es bevorzugt möglich, dass zusätzliche Laminier-Inlays aus zusätzlichen Laminierfolien mit zusätzlichen Dekorlagen in dem Laminatkörper 1 angeordnet werden, insbesondere auf einer der Laminierfolie 21 abgewandten Seite der Laminierfolie 74 und/oder der Laminierfolie 73.

Es sind auch zusätzliche Laminierfolien denkbar, insbesondere welche in der Fig. 17 auf der dem Laminier-Inlay 2 und/oder dem Laminier-Inlay 3 abgewandten Seite der Laminierfolie 73 und/oder der Laminierfolie 74 und/oder auf einem zusätzlichen Laminier-Inlay angeordnet sind und welche insbesondere Polyvinylchlorid umfassen und/oder aus Polyvinylchlorid sind und/oder transparent, insbesondere im für das menschliche Auge sichtbaren Wellenlängenbereich, sind.

### Bezugszeichenliste

- 1: Laminatkörper
- 2: Laminier-Inlay
- 4: Transferfolie
- 5: strahlenhärtbare Kleberschicht
- 6: Herstellungsvorrichtung
- 21: Laminierfolie
- 22, 23, 24, 25, 26, 27: Laminierfolie
- 71, 72, 73, 74: Laminierfolie
- 31: Teilbereich
- 32: Teilbereich
- 311: Teilbereich
- 321: Teilbereich
- 33, 34, 35: Sicherheitsmerkmal
- 40: Dekorlage
- 41: Trägerfolie
- 42: Dekorschicht
- 43: Ablöseschicht
- 44: Trennschicht/Haftvermittlungsschicht
- 45: Schutzschicht
- 46: Haftvermittlungsschicht
- 51: Zone
- 52: Zone
- 61, 62: Abspulvorrichtung
- 63: Druckvorrichtung
- 64: Kaschiervorrichtung
- 65: Oberflächenbearbeitungsvorrichtung
- 651: Härtvorrichtung
- 652: Trennvorrichtung
- 66, 67: Aufspulvorrichtung
- 211, 212: Oberfläche
- 401, 402: Oberfläche
- 311, 312, 313, 314: Teilbereich
- 421, 422, 423, 433: Bereich
- 100: gelaserter Teilbereich

## Patentansprüche

1. Verfahren zur Herstellung eines Laminatkörpers (1), insbesondere in Form einer Bankkarte, Ausweiskarte oder Kreditkarte, wobei das Verfahren folgende Schritte umfasst:
Bereitstellen einer ersten Laminierfolie (21), insbesondere aus Polycarbonat, mit einer ersten Oberfläche (211) und einer diese gegenüberliegenden zweiten Oberfläche (212),
Bereitstellen zumindest einer Transferfolie (4), welche jeweils eine Trägerfolie (41) und eine von der Trägerfolie ablösbare Dekorlage (40) mit einer der Trägerfolie (41) gegenüberliegenden erste Oberfläche (401) und einer der Trägerfolie (41) zugewandten zweite Oberfläche (402) umfasst,
Bedrucken der ersten Oberfläche (211) der ersten Laminierfolie (21) und/oder der ersten Oberfläche (401) der Dekorlage (40) der mindestens einen Transferfolie (4) mit einem strahlenhärtbaren Kleber derart, dass der strahlenhärtbare Kleber in ein oder mehreren ersten Zonen (51) auf die jeweilige erste Oberfläche (211, 401) der ersten Laminierfolie (21) und/oder der Dekorlage (40) aufgebracht wird und in den ein oder mehreren ersten Zonen (51) eine strahlenhärtbare Kleberschicht (5) ausbildet, und in ein oder mehreren zweiten Zonen (52) nicht auf die jeweilige erste Oberfläche (211, 401) der ersten Laminierfolie (21) und/oder der jeweiligen Dekorlage (40) aufgebracht wird,
Aufbringen der zumindest einen Transferfolie (4) auf die erste Oberfläche (211) der ersten Laminierfolie (21) derart, dass mindestens ein Teilbereich der ein oder mehreren ersten Zonen (51) mit der strahlenhärtbaren Kleberschicht (5) sowie mindestens ein Teilbereich der ein oder mehreren zweiten Zonen (52), in denen die strahlenhärtbare Kleberschicht (5) nicht aufgebracht ist, zwischen der ersten Oberfläche (401) der jeweiligen Dekorlage (40) und der ersten Oberfläche (211) der ersten Laminierfolie (21) angeordnet ist,
zumindest teilweise Härtung der strahlenhärtbaren Kleberschicht (5),
Abziehen der mindestens einen Transferfolie (4) von der ersten Laminierfolie (21), wobei in ein oder mehreren ersten Teilbereichen (31), die zumindest bereichsweise mit mindestens einer der ersten Zonen (51) überlappen, die Dekorlage (40) beim Abziehen von der Trägerfolie (41) abgelöst wird und auf der ersten Laminierfolie (21) verbleibt, und in ein oder mehreren zweiten Teilbereichen (32) die Dekorlage (40) auf der Trägerfolie (41) verbleibt und mit der Trägerfolie (41) abgezogen wird,
Laminieren mehrerer aufeinanderfolgender Folien umfassend die erste Laminierfolie (21) mit den ein oder mehreren ersten Teilbereichen (31) mit der Dekorlage (40) und zumindest eine zweite Laminierfolie (22 bis 26) zu dem Laminatkörper (1).

2. Verfahren nach Anspruch 1,
**dadurch gekennzeichnet,**
**dass** beim Laminieren die zumindest eine zweite Laminierfolie (21) derart auf die erste Laminierfolie (21) aufgebracht wird, dass in einem ersten Flächenbereich ein oder mehrere der ersten Teilbereiche (31) mit der Dekorlage (40) sowie die strahlenhärtbare Kleberschicht (5) zwischen der ersten Oberfläche (211) der ersten Laminierfolie (21) und einer der ersten Oberfläche (211) der ersten Laminierfolie (21) zugewandten ersten Oberfläche (221) der zumindest einen zweiten Laminierfolie (22) angeordnet sind und dass in einem zweiten Flächenbereich sich die ersten Oberflächen (211, 221) der ersten Laminierfolie (21) und der zweiten Laminierfolie (22) berühren.

3. Verfahren nach einem der vorhergehenden Ansprüche,
**dadurch gekennzeichnet,**
**dass** beim Laminieren die Verformung der Dekorlage (40) in dem mindestens einen ersten Flächenbereich durch die strahlenhärtbare Kleberschicht (5) um mehr als 50% reduziert wird, insbesondere um mehr als 80% reduziert wird,
wobei die Verformung der Dekorlage unter Einsatz der strahlenhärtbaren Kleberschicht und ohne Einsatz der strahlenhärtbaren Kleberschicht miteinander verglichen wird und wobei die Verformung der Dekorlage dadurch bestimmt wird, dass die Ausformung der Dekorlage vor Durchführung des Laminierverfahrens und nach Durchführung des Laminierverfahrens erfasst wird und die mittlere prozentuale Abweichung nach Durchführung des Laminierverfahrens mit der Ausgangsform ermittelt wird.

4. Verfahren nach Anspruch 2,
**dadurch gekennzeichnet,**
**dass** das Flächenverhältnis des ersten Flächenbereichs zur Summe aus erstem und zweiten Flächenbereichs nicht mehr als 80%, insbesondere zwischen 2% und 80% und weiter bevorzugt zwischen 5% und 50%, beträgt und/oder
**dass** das Flächenverhältnis des ersten Flächenbereichs zu dem zweiten Flächenbereich so gewählt wird, dass die Haftung zwischen der ersten und der zweiten Laminierfolie (21, 22) nach dem Laminieren mehr als 3,5 N beträgt, insbesondere gemessen bei einem Abschälwinkel von 90°, einer Schälgeschwindigkeit von 300 mm/min und einer Streifenbreite von 10mm und/oder
**dass** ein oder mehrere der zweiten Teilbereiche von einer Außenkante des Laminatkörpers (1) begrenzt wird, vorzugsweise von allen Außenkanten des Laminatkörpers begrenzt wird und eine Breite von mehr als 2 mm, vorzugsweise mehr als 4 mm aufweist.

5. Verfahren zur Herstellung eines Laminier-Inlays (2), insbesondere für die Herstellung von Bankkarten, Ausweiskarten oder Kreditkarten, wobei das Verfahren folgende Schritte umfasst:
Bereitstellung einer ersten Laminierfolie (21), insbesondere aus Polycarbonat, mit einer ersten Oberfläche (211) und einer dieser gegenüberliegenden zweiten Oberfläche (212),
Bereitstellen zumindest einer Transferfolie (4), welche jeweils eine Trägerfolie (41) und eine von der Trägerfolie ablösbare Dekorlage (40) mit einer der Trägerfolie (41) gegenüberliegenden ersten Oberfläche (401) und einer der Trägerfolie (41) zugewandten zweiten Oberfläche (402) umfasst,
Bedrucken der ersten Oberfläche (211) der ersten Laminierfolie (21) und/oder der ersten Oberfläche (401) der Dekorlage (40) der zumindest einen Transferfolie (4) mit einem strahlenhärtbaren Kleber derart, dass der strahlenhärtbare Kleber in ein oder mehreren ersten Zonen (51) auf die jeweilige erste Oberfläche (211, 401) der ersten Laminierfolie (211) und/oder der Dekorlage (40) aufgebracht wird und in den ein oder mehreren ersten Zonen (51) eine strahlenhärtbare Kleberschicht (5) ausbildet, und in ein oder mehreren zweiten Zonen (52) nicht auf die jeweilige erste Oberfläche (211, 401) der ersten Laminierfolie (21) und/oder der Dekorlage (40) aufgebracht wird,
Aufbringen der zumindest einen Transferfolie (4) auf die erste Oberfläche (211) der ersten Laminierfolie (21) derart, dass zumindest ein Teilbereich der ein oder mehreren ersten Zonen (51) mit der strahlenhärtbaren Kleberschicht (5) sowie zumindest ein Teilbereich der ein oder mehreren zweiten Zonen (52), in denen die strahlenhärtbare Kleberschicht (5) nicht aufgebracht ist, zwischen der ersten Oberfläche (401) der Dekorlage (40) und der ersten Oberfläche (211) der Laminierfolie (21) angeordnet ist,
zumindest teilweise Härtung der strahlenhärtbaren Kleberschicht (5),
Abziehen der zumindest einen Transferfolie (4) von der ersten Laminierfolie (21), wobei in ein oder mehreren ersten Teilbereichen (31), die zumindest bereichsweise mit mindestens einer der ersten Zonen (51) überlappen, die Dekorlage (40) beim Abziehen von der Trägerfolie (41) abgelöst wird und auf der ersten Laminierfolie (21) verbleibt und in ein oder mehreren zweiten Teilbereichen (32) die Dekorlage (40) auf der Trägerfolie (41) verbleibt und mit der Trägerfolie abgezogen wird,
wobei das Flächenverhältnis der ein oder mehreren ersten Teilbereiche zur Summe aus den ein oder mehreren ersten und zweiten Teilbereichen nicht mehr als 80% beträgt.

6. Verfahren nach einem der vorhergehenden Ansprüche,
**dadurch gekennzeichnet,**
**dass** bei der Bedruckung ein strahlenhärtbarer Kleber gedruckt wird, welcher nach Durchführung der Härtung eine höhere Erweichungstemperatur als die erste Laminierfolie (211) besitzt, insbesondere eine um mindestens 10K, vorzugsweise um mehr als 20K höhere Erweichungstemperatur als die erste Laminierfolie (21) besitzt.

7. Verfahren nach einem der vorhergehenden Ansprüche,
**dadurch gekennzeichnet,**
**dass** die Bedruckung mit dem strahlenhärtbaren Kleber mit einem Auftragsgewicht zwischen 0,2g/m² und 20g/m², vorzugsweise zwischen 0,5g/m² und 10g/m² erfolgt und/oder
**dass** der strahlenhärtbare Kleber mit einer dynamischen Viskosität zwischen 400 mPas und 2000 mPas, bevorzugt 500 mPas bis 1200 mPas bei der Bedruckung verdruckt wird und/oder
**dass** die Bedruckung mittels Flexodruck, Siebdruck, Tiefdruck und/oder Tintenstrahldruck erfolgt und/oder
**dass** die strahlenhärtbare Kleberschicht eingefärbt ist, insbesondere mit Farbstoffen und/oder Pigmenten eingefärbt ist.

8. Verfahren nach einem der vorhergehenden Ansprüche,
**dadurch gekennzeichnet,**
**dass** die erste Laminierfolie (21) und/oder die zumindest eine Transferfolie (4) eine Transparenz für den Wellenlängenbereich der Bestrahlung von mehr als 10% besitzt.

9. Verfahren nach einem der vorhergehenden Ansprüche,
**dadurch gekennzeichnet,**
**dass** der oder die ersten Teilbereiche eine Breite von nicht mehr als 8 mm, insbesondere nicht mehr als 5 mm aufweisen und/oder
**dass** der oder die ersten Teilbereiche und/oder der oder die zweiten Teilbereiche eine Breite von 0,1 mm oder mehr aufweisen, insbesondere eine Breite von mehr als 0,2 mm aufweisen und/oder
**dass** ein oder mehrere der ersten Teilbereiche und/oder der zweiten Teilbereiche eine Breite zwischen 0,1 mm und 0,6 mm aufweisen, bevorzugt zwischen 0,1 mm und 0,3 mm aufweisen.

10. Verfahren nach einem der vorhergehenden Ansprüche,
**dadurch gekennzeichnet,**
**dass** die erste und/oder zweite Laminierfolie (21 bis 27) aus einem thermoplastischen Kunststoff besteht und insbesondere Polycarbonat als Hauptbestandteil aufweist oder aus Polycarbonat besteht.

11. Verfahren nach einem der vorhergehenden Ansprüche,
**dadurch gekennzeichnet,**
**dass** die erste und/oder zweite Laminierfolie (21 bis 27) eine Dicke zwischen 30 µm und 400 µm, insbesondere zwischen 40 µm bis 130 µm aufweist.

12. Verfahren nach einem der vorhergehenden Ansprüche,
**dadurch gekennzeichnet,**
**dass** beim Aufbringen der zumindest einen Transferfolie (4) auf die erste Oberfläche (211) der ersten Laminierfolie (21), die strahlenhärtbare Kleberschicht (5) in den ein oder mehreren ersten Teilbereichen in Kontakt mit der Dekorlage (40) und mit der ersten Oberfläche (211) der ersten Laminierfolie (21) gebracht wird, in den ein oder mehreren zweiten Teilbereichen (32) jedoch nicht in Kontakt mit der Dekorlage (40) oder der ersten Oberfläche (211) der ersten Laminierfolie gebracht wird.

13. Verfahren nach einem der vorhergehenden Ansprüche,
**dadurch gekennzeichnet,**
**dass** die ein oder mehreren ersten Teilbereiche (32) nach dem Abziehen der Trägerfolie (41) zumindest zu 80%, vorzugsweise zu zumindest zu 95% von der strahlenhärtbaren Kleberschicht (5) auf ihrer von der ersten Laminierfolie (21) abgewandten Oberfläche bedeckt sind.

14. Verfahren nach einem der vorhergehenden Ansprüche,
**dadurch gekennzeichnet,**
**dass** ein oder mehrere der ersten Teilbereiche (311, 314) in Form von ein oder mehreren Motivbereichen angeordnet sind, wobei jeder Motivbereich vorzugsweise ein oder mehrere in der Dekorlage (40) ausgebildeten Motive, insbesondere in Form eines Musters und/oder einer Grafik und/oder eines Codes und/oder ein oder mehrerer alphanumerischer Zeichen, umfasst.

15. Verfahren nach einem der vorhergehenden Ansprüche,
**dadurch gekennzeichnet,**
**dass** die Schritte des Aufbringens und des Abziehens der zumindest einen Transferfolie (4) und optional der Schritt des Bedruckung mit einem strahlenhärtbaren Kleber mehrfach wiederholt werden, insbesondere mit unterschiedlichen Transferfolien und/oder unterschiedlichen und/oder unterschiedlich eingefärbten strahlenhärtbaren Kleber wiederholt werden.

## Claims

1. Method for the production of a laminated body (1), in particular in the form of a bank card, identification card or credit card, wherein the method comprises the following steps:
providing a first laminated film (21), in particular made of polycarbonate, having a first surface (211) and a second surface (212) that is opposite to this,
providing at least one transfer film (4), which respectively comprises a carrier film (41) and a decorative layer (40) that can be detached from the carrier film and has a first surface (401) that is opposite the carrier film (41) and a second surface (402) that faces the carrier film (41),
printing the first surface (211) of the first laminated film (21) and/or the first surface (401) of the decorative layer (40) of the at least one transfer film (4) with a radiation-curable adhesive such that the radiation-curable adhesive is applied in one or more first zones (51) on the respective first surface (211, 401) of the first laminated film (21) and/or of the decorative layer (40) and forms a radiation-curable adhesive layer (5) in the one or more first zones (51), and is not applied in one or more second zones (52) on the respective first surface (211, 401) of the first laminated film (21) and/or of the respective decorative layer (40),
applying the at least one transfer film (4) onto the first surface (211) of the first laminated film (21) in such a way that at least one subarea of the one or more first zones (51) having the radiation-curable adhesive layer (5), as well as at least one subarea of the one or more second zones (52), in which the radiation-curable adhesive layer (5) is not applied, is arranged between the first surface (401) of the respective decorative layer (40) and the first surface (211) of the first laminated film (21),
at least partially curing the radiation-curable adhesive layer (5),
removing the at least one transfer film (4) from the first laminated film (21), wherein in one or more first subareas (31), which overlap at least partially with at least one of the first zones (51), the decorative layer (40) is detached during removal of the carrier film (41) and remains on the first laminated film (21), and the decorative layer (40) remains on the carrier film (41) in one or more second subareas (32) and is removed with the carrier film (41),
laminating several consecutive films comprising the first laminated film (21) having the one or more first subareas (31) with the decorative layer (40) and at least one second laminated film (22 to 26) to form the laminated body (1).

2. Method according to claim 1,
**characterised in that**
during laminating, the at least one second laminated film (21) is applied onto the first laminated film (21) in such a way that, in a first surface area, one or more of the first subareas (31) having the decorative layer (40) as well as the radiation-curable adhesive layer (5) are arranged between the first surface (211) of the first laminated film (21) and a first surface (221) of the at least one second laminated film (22) that faces the first surface (211) of the first laminated film (21), and that, in a second surface area, the first surfaces (211, 221) of the first laminated film (21) and of the second laminated film (22) come into contact.

3. Method according to one of the preceding claims,
**characterised in that**
during laminating, the deformation of the decorative layer (40) in the at least one first surface area is reduced by more than 50%, in particular by more than 80%, by means of the radiation-curable adhesive layer (5),
wherein the deformation of the decorative layer using the radiation-curable adhesive layer and not using the radiation-curable adhesive layer is compared with each other, and
wherein the deformation of the decorative layer is determined by detecting the shaping of the decorative layer before carrying out the laminating process and after carrying out the laminating process, and by determining the percentage deviation from the original shape after carrying out the laminating process.

4. Method according to claim 2,
**characterised in that**
the surface ratio of the first surface area to the total of the first and second surface areas is not more than 80%, in particular between 2% and 80% and more preferably between 5% and 50%, and/or
the surface ratio of the first surface area to the second surface area is selected such that the adhesion between the first and the second laminated films (21, 22) is more than 3.5 N after lamination, in particular measured at a 90° peel angle, a peel speed of 300 mm/min and a strip width of 10 mm, and/or
one or more of the second subareas is delimited by an outer edge of the laminated body (1), is preferably delimited by all outer edges of the laminated body, and has a width of more than 2 mm, preferably more than 4 mm.

5. Method for the production of a laminating inlay (2), in particular for the production of bank cards, identification cards or credit cards, wherein the method comprises the following steps:
providing a first laminated film (21), in particular made of polycarbonate, having a first surface (211) and a second surface (212) that is opposite to this,
providing at least one transfer film (4), which respectively comprises a carrier film (41) and a decorative layer (40) that can be detached from the carrier film and has a first surface (401) that is opposite the carrier film (41) and a second surface (402) that faces the carrier film (41),
printing the first surface (211) of the first laminated film (21) and/or the first surface (401) of the decorative layer (40) of the at least one transfer film (4) with a radiation-curable adhesive such that the radiation-curable adhesive is applied in one or more first zones (51) on the respective first surface (211, 401) of the first laminated film (21) and/or
of the decorative layer (40) and forms a radiation-curable adhesive layer in the one or more first zones (51), and is not applied in one or more second zones (52) on the respective first surface (211, 401) of the first laminated film (21) and/or of the decorative layer (40),
applying the at least one transfer film (4) onto the first surface (211) of the first laminated film (21) in such a way that at least one subarea of the one or more first zones (51) having the radiation-curable adhesive layer (5), as well as at least one subarea of the one or more second zones (52), in which the radiation-curable adhesive layer (5) is not applied, is arranged between the first surface (401) of the decorative layer (40) and the first surface (211) of the laminated film (21),
at least partially curing the radiation-curable adhesive layer (5),
removing the at least one transfer film (4) from the first laminated film (21), wherein in one or more first subareas (31), which overlap at least partially with at least one of the first zones (51), the decorative layer (40) is detached during removal of the carrier film (41) and remains on the first laminated film (21), and the decorative layer (40) remains on the carrier film (41) in one or more second subareas (32) and is removed with the carrier film,
wherein the surface ratio of the one or more first subareas to the total of the one or more first and second areas is not more than 80%.

6. Method according to one of the preceding claims,
**characterised in that**
a radiation-curable adhesive is printed during the printing, which, after curing, has a higher softening temperature than the first laminated film (211), in particular it has a softening temperature higher than the first laminated film (21) by at least 10K, preferably by more than 20K.

7. Method according to one of the preceding claims,
**characterised in that**
the printing occurs with the radiation-curable adhesive having an application weight between 0.2 g/m² and 20 g/m², preferably between 0.5 g/m² and 10 g/m² and/or
during printing, the radiation-curable adhesive is printed with a dynamic viscosity between 400 mPas and 2000 mPas, preferably 500 mPas to 1200 mPas and/or
the printing occurs by means of flexographic printing, screen printing, gravure printing and/or inkjet printing and/or
the radiation-curable adhesive layer is dyed, in particular is dyed with dyes and/or pigments.

8. Method according to one of the preceding claims,
**characterised in that**
the first laminated film (21) and/or the at least one transfer film (4) has a transparency of more than 10% for the wavelength range of the irradiation.

9. Method according to one of the preceding claims,
**characterised in that**
the first subarea or subareas have a width of not more than 8 mm, in particular not more than 5 mm and/or
the first subarea or subareas and/or the second subarea or subareas have a width of 0.1 mm or more, in particular a width of more than 0.2 mm and/or
one or more of the first subareas and/or of the second subareas have a width between 0.1 mm and 0.6 mm, preferably between 0.1 mm and 0.3 mm.

10. Method according to one of the preceding claims,
**characterised in that**
the first and/or second laminated film (21 to 27) is made of a thermoplastic material and in particular has polycarbonate as the main component or is made of polycarbonate.

11. Method according to one of the preceding claims,
**characterised in that**
the first and/or second laminated film (21 to 27) has a thickness between 30 µm and 400 µm, in particular between 40 µm to 130 µm.

12. Method according to one of the preceding claims,
**characterised in that**
during the application of the at least one transfer film (4) onto the first surface (211) of the first laminated film (21), the radiation-curable adhesive layer (5) is brought into contact with the decorative layer (40) and with the first surface (211) of the first laminated film (21) in the one or more first subareas, but is not brought into contact with the decorative layer (40) or the first surface (211) of the first laminated film in the one or more second subareas (32).

13. Method according to one of the preceding claims,
**characterised in that**
after removing the carrier film (41), the one or more first subareas (32) are covered by the radiation-curable adhesive layer (5) on their surface facing away from the first laminated film (21) to at least 80%, preferably to at least 95%.

14. Method according to one of the preceding claims,
**characterised in that**
one or more of the first subareas (311, 314) are arranged in the form of one or more motif areas, wherein each motif area preferably comprises one or more motifs formed in the decorative layer (40), in particular in the form of a pattern and/or a graphic and/or a code and/or one or more alphanumeric characters.

15. Method according to one of the preceding claims,
**characterised in that**
the steps of applying and removing the at least one transfer film (4) and optionally the step of printing with a radiation-curable adhesive are repeated several times, in particular are repeated with different transfer films and/or different and/or differently coloured radiation-curable adhesive.

## Revendications

1. Procédé de fabrication d'un corps stratifié (1), en particulier sous la forme d'une carte bancaire, d'une carte d'identité ou d'une carte de crédit, dans lequel le procédé comprend des étapes suivantes :
de fourniture d'un premier film stratifié (21), en particulier composé de polycarbonate, avec une première surface (211) et une seconde surface (212) faisant face à la première,
de fourniture d'au moins un film de transfert (4), lequel comprend respectivement un film de support (41) et une strate décorative (40) pouvant être détachée du film de support, avec une première surface (401) faisant face au film de support (41) et avec une seconde surface (402) tournée vers le film de support (41),
d'impression de la première surface (211) du premier film stratifié (21) et/ou de la première surface (401) de la strate décorative (40) de l'au moins un film de transfert (4) avec une colle durcissable par rayonnement de telle manière que la colle durcissable par rayonnement est appliquée dans une ou plusieurs premières zones (51) sur la première surface (211, 401) respective du premier film stratifié (21) et/ou de la strate décorative (40) et réalise, dans la ou plusieurs premières zones (51) une couche de colle durcissable par rayonnement (5), et n'est pas appliquée, dans une ou plusieurs deuxièmes zones (52), sur la première surface (211, 401) respective du premier film stratifié (21) et/ou de la strate décorative (40) respective,
d'application de l'au moins un film de transfert (4) sur la première surface (211) du premier film stratifié (21) de telle manière qu'au moins une zone partielle de l'une ou de plusieurs premières zones (51) avec la couche de colle durcissable par rayonnement (5) et au moins une zone partielle de l'une ou de plusieurs deuxièmes zones (52), dans lesquelles la couche de colle durcissable par rayonnement (5) n'est pas appliquée, sont disposées entre la première surface (401) de la strate décorative (40) respective et la première surface (211) du premier film stratifié (21),
de durcissement au moins partiel de la couche de colle durcissable par rayonnement (5),
de retrait de l'au moins un film de transfert (4) du premier film stratifié (21), dans lequel la strate décorative (40) est détachée lors du retrait du film de support (41) dans une ou plusieurs premières zones partielles (31), qui se chevauchent au moins par endroits par au moins une des premières zones (51), et reste sur le premier film stratifié (21), et la strate décorative (40) reste sur le film de support (41) dans une ou plusieurs deuxièmes zones partielles (32) et est retirée avec le film de support (41),
de stratification de plusieurs films successifs comprenant le premier film stratifié (21) avec l'une ou plusieurs premières zones partielles (31) avec la strate décorative (40) et au moins un deuxième film stratifié (22 à 26) pour former le corps stratifié (1).

2. Procédé selon la revendication 1,
**caractérisé en ce**
**que** lors de la stratification, l'au moins un deuxième film stratifié (21) est appliqué de telle manière sur le premier film stratifié (21) que dans une première zone de surface, une ou plusieurs des premières zones partielles (31) avec la strate décorative (40) ainsi que la couche de colle durcissable par rayonnement (5) sont disposées entre la première surface (211) du premier film stratifié (21) et une première surface (221), tournée vers la première surface (211) du premier film stratifié (21), de l'au moins un deuxième film stratifié (22), et que les premières surfaces (211, 221) du premier film stratifié (21) et du deuxième film stratifié (22) se touchent dans une deuxième zone de surface.

3. Procédé selon l'une quelconque des revendications précédentes,
**caractérisé en ce**
**que** lors de la stratification, la déformation de la strate décorative (40) dans l'au moins une première zone de surface par la couche de colle durcissable par rayonnement (5) est réduite de plus de 50 %, en particulier de plus de 80 %,
dans lequel la déformation de la strate décorative en utilisant la couche de colle durcissable par rayonnement et celle sans utiliser la couche de colle durcissable par rayonnement sont comparées l'une à l'autre, et dans lequel la déformation de la strate décorative est définie en ce que la protubérance de la strate décorative est détectée avant la mise en oeuvre du procédé de stratification et après la mise en oeuvre du procédé de stratification et l'écart en pourcentages moyen est déterminé après la mise en oeuvre du procédé de stratification avec la forme de départ.

4. Procédé selon la revendication 2,
**caractérisé en ce**
**que** le rapport surfacique de la première zone de surface par rapport à la somme issue de la première et de la deuxième zone de surface est inférieur ou égal à 80 %, en particulier est compris entre 2 % et 80 %, et de manière davantage préférée entre 5 % et 50 %, et/ou
**que** le rapport surfacique de la première zone de surface et la deuxième zone de surface est choisie de telle sorte que l'adhérence entre le premier et le deuxième film stratifié (21, 22) est supérieure après la stratification à 3,5 N, en particulier selon une mesure pour un angle d'arrachement de 90°, pour une vitesse de pelage de 300 mm/min et pour une largeur de bande de 10 mm et/ou
**qu'**une ou plusieurs des deuxièmes zones partielles sont limitées par un bord extérieur du corps stratifié (1), de préférence par tous les bords extérieurs du corps stratifié et présentent une largeur supérieure à 2 mm, de préférence supérieure à 4 mm.

5. Procédé de fabrication d'un inlay stratifié (2), en particulier pour la fabrication de cartes bancaires, de cartes d'identité ou de cartes de crédit, dans lequel le procédé comprend des étapes suivantes :
de fourniture d'un premier film stratifié (21), en particulier composé de polycarbonate, avec une première surface (211) et une seconde surface (212) faisant face à la première,
de fourniture d'au moins un film de transfert (4), lequel comprend respectivement un film de support (41) et une strate décorative (40) pouvant être détachée du film de support, avec une première surface (401) faisant face au film de support (41) et une seconde surface (402) tournée vers le film de support (41),
d'impression de la première surface (211) du premier film stratifié (21) et/ou de la première surface (401) de la strate décorative (40) de l'au moins un film de transfert (4) avec une colle durcissable par rayonnement de telle manière que la colle durcissable par rayonnement est appliquée dans une ou plusieurs premières zones (51) sur la première surface (211, 401) respective du premier film stratifié (211) et/ou de la strate décorative (40) et réalise, dans l'un ou plusieurs premières zones (51), une couche de colle durcissable par rayonnement (5), et n'est pas appliquée, dans une ou plusieurs deuxièmes zones (52), sur la première surface (211, 401) respective du premier film stratifié (21) et/ou de la strate décorative (40),
d'application de l'au moins un film de transfert (4) sur la première surface (211) du premier film stratifié (21) de telle manière qu'au moins une zone partielle d'une ou de plusieurs premières zones (51) avec la couche de colle durcissable par rayonnement (5) ainsi qu'au moins une zone partielle d'une ou de plusieurs deuxièmes zones (52), dans lesquelles la couche de colle durcissable par rayonnement (5) n'est pas appliquée, sont disposées entre la première surface (401) de la strate décorative (40) et la première surface (211) du film stratifié (21),
de durcissement au moins partiel de la couche de colle durcissable par rayonnement (5),
de retrait de l'au moins un film de transfert (4) du premier film stratifié (21), dans lequel la strate décorative (40) est détachée lors du retrait du film de support (41) dans une ou plusieurs premières zones partielles (31), qui se chevauchent au moins par endroits par au moins une des premières zones (51) et reste sur le premier film stratifié (21) et la strate décorative (40) reste sur le film de support (41) dans une ou plusieurs deuxièmes zones partielles (32) et est retirée du film de support,
dans lequel le rapport surfacique de l'une ou des plusieurs premières zones partielles et la somme issue de l'une ou de plusieurs premières et deuxièmes zones partielles est inférieur ou égal à 80 %.

6. Procédé selon l'une quelconque des revendications précédentes,
**caractérisé en ce**
**que** lors de l'impression, une colle durcissable par rayonnement est imprimée, laquelle possède après la mise en œuvre du durcissement une température de ramollissement plus élevée que le premier film stratifié (211), en particulier une température de ramollissement plus élevée d'au moins 10 K, de préférence de plus de 20 K que le premier film stratifié (21).

7. Procédé selon l'une quelconque des revendications précédentes,
**caractérisé en ce**
**que** l'impression est effectuée avec la colle durcissable par rayonnement avec un poids d'application entre 0,2 g/m² et 20 g/m², de préférence entre 0,5 g/m² et 10 g/m², et/ou
**que** la colle durcissable par rayonnement est imprimée avec une viscosité dynamique entre 400 mPas et 2000 mPas, de manière préférée 500 mPas à 1200 mPas lors de l'impression, et/ou
**que** l'impression est effectuée au moyen d'une impression flexographique, d'une impression sérigraphique, d'une impression en creux et/ou d'une impression au jet d'encre, et/ou
**que** la couche de colle durcissable par rayonnement est colorée, en particulier est colorée avec des colorants et/ou des pigments.

8. Procédé selon l'une quelconque des revendications précédentes,
**caractérisé en ce**
**que** le premier film stratifié (21) et/ou l'au moins un film de transfert (4) possèdent une transparence pour la plage de longueurs d'onde du rayonnement de plus de 10 %.

9. Procédé selon l'une quelconque des revendications précédentes,
**caractérisé en ce**
**que** la ou les premières zones partielles présentent une largeur inférieure ou égale à 8 mm, en particulier inférieure ou égale à 5 mm, et/ou
**que** la ou les premières zones partielles et/ou la ou les deuxièmes zones partielles présentent une largeur de 0,1 mm ou plus, en particulier une largeur de plus de 0,2 mm, et/ou
**qu'**une ou plusieurs des premières zones partielles et/ou des deuxièmes zones partielles présentent une largeur entre 0,1 mm et 0,6 mm, de manière préférée entre 0,1 mm et 0,3 mm.

10. Procédé selon l'une quelconque des revendications précédentes,
**caractérisé en ce**
**que** le premier et/ou le deuxième film stratifié (21 à 27) sont constitués d'une matière synthétique thermoplastique et présentent en particulier du polycarbonate en tant que constituant principal ou sont constitués de polycarbonate.

11. Procédé selon l'une quelconque des revendications précédentes,
**caractérisé en ce**
**que** le premier et/ou le deuxième film stratifié (21 à 27) présentent une épaisseur entre 30 µm et 400 µm, en particulier entre 40 µm à 130 µm.

12. Procédé selon l'une quelconque des revendications précédentes,
**caractérisé en ce**
**que** lors de l'application, l'au moins un film de transfert (4) est amené en contact, sur la première surface (211) du premier film stratifié (21), sur la couche de colle durcissable par rayonnement (5), dans l'une ou plusieurs premières zones partielles, en contact avec la strate décorative (40) et avec la première surface (211) du premier film stratifié (21), n'est toutefois pas amené en contact avec la strate décorative (40) ou la première surface (211) du premier film stratifié dans l'une ou plusieurs deuxièmes zones partielles (32).

13. Procédé selon l'une quelconque des revendications précédentes,
**caractérisé en ce**
**que** l'une ou plusieurs premières zones partielles (32) sont recouvertes, après le retrait du film de support (41), au moins à 80 %, de préférence à au moins 95 % par la couche de colle durcissable par rayonnement (5) sur sa surface opposée au premier film stratifié (21) .

14. Procédé selon l'une quelconque des revendications précédentes,
**caractérisé en ce**
**qu'**une ou plusieurs des premières zones partielles (311, 314) sont disposées sous la forme d'une ou de plusieurs zones à motifs, dans lequel chaque zone à motifs comprend de préférence un ou plusieurs motifs réalisés dans la strate décorative (40), en particulier sous la forme d'un modèle et/ou d'un graphisme et/ou d'un code et/ou d'un ou de plusieurs caractères alphanumériques.

15. Procédé selon l'une quelconque des revendications précédentes,
**caractérisé en ce**
**que** les étapes de l'application et du retrait de l'au moins un film de transfert (4) et en option l'étape de l'impression avec une colle durcissable par rayonnement sont répétées à maintes reprises, en particulier avec différents films de transfert et/ou différentes colles et/ou avec une colle durcissable par rayonnement à coloris différent.
